(19) Europäisches Patentamt
European Patent Office
Office européen des brevets

(11) EP 1 639 153 B1

(12) **EUROPÄISCHE PATENTSCHRIFT**

(45) Veröffentlichungstag und Bekanntmachung des Hinweises auf die Patenterteilung:
**18.12.2013 Patentblatt 2013/51**

(21) Anmeldenummer: **03714663.6**

(22) Anmeldetag: **21.02.2003**

(51) Int Cl.:
***H01M 10/0565*** *(2010.01)*

(86) Internationale Anmeldenummer:
**PCT/DE2003/000640**

(87) Internationale Veröffentlichungsnummer:
**WO 2003/072854 (04.09.2003 Gazette 2003/36)**

(54) **COMPOSITES UND COMPOSITEMEMBRANEN**

COMPOSITES AND COMPOSITE MEMBRANES

COMPOSITES ET MEMBRANES COMPOSITES

(84) Benannte Vertragsstaaten:
**AT BE BG CH CY CZ DE DK EE ES FI FR GB GR HU IE IT LI LU MC NL PT SE SI SK TR**

(30) Priorität: **28.02.2002 DE 10209774**

(43) Veröffentlichungstag der Anmeldung:
**29.03.2006 Patentblatt 2006/13**

(73) Patentinhaber:
- **Universität Stuttgart
70199 Stuttgart (DE)**
- **Häring, Thomas
70619 Stuttgart (DE)**
- **Linkov, Vladimir
Somerset West 7130 (ZA)**

(72) Erfinder:
- **KERRES, Jochen
73760 Ostfildern (DE)**
- **HÄRING, Thomas
70619 Stuttgart (DE)**
- **ULLRICH, Andreas
73734 Esslingen (DE)**
- **TANG, Chy-Ming
69469 Weinheim (DE)**
- **HEIN, Martin
70190 Stuttgart (DE)**
- **LINKOV, Vladimir
Somerset West 7130 (ZA)**
- **ZHANG, Wei
70569 Stuttgart (DE)**

(56) Entgegenhaltungen:
**DE-A- 10 021 106**

- **KERRES J A: "Development of ionomer membranes for fuel cells" JOURNAL OF MEMBRANE SCIENCE, ELSEVIER SCIENTIFIC PUBL.COMPANY. AMSTERDAM, NL, Bd. 185, 15. April 2001 (2001-04-15), Seiten 3-27, XP002226657 ISSN: 0376-7388**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

## Stand der Technik

Composite-Membranen aus Organopolymeren und anorganischen Füllstoffen sind schon häufig beschrieben worden, und zwar sowohl in Zeitschriften als auch in Patenten. Ein Patentbeispiel, das auch viele Hinweise auf andere Entwicklungen bei Composite-Membranen enthält, ist ein US-Patent von Lynntech, Inc.[1]. In diesem Patent sind allerdings keine Compositemembranen beschrieben, deren organische Phase ionisch und/oder kovalent vernetzt ist, wie es in der vorliegenden Patentanmeldung der Fall ist. In [2] werden Compositemembranen aus Nafion® und Zirkoniumphosphat beschrieben, bei denen das Zirkoniumphosphat in der Membran nachträglich inkorporiert wurde durch 1) Ionenaustausch $H^+$ gegen $ZrO^{2+}$ in der Nafion®-Membran, 2) Einlegen der ausgetauschten Nafion®-Membran in Phosphorsäure und Ausfällen der $ZrO^{2+}$-Ionen in der Membranmatrix zu Zr-Phosphaten. Nachteil dieser Methode ist jedoch, dass immer nur soviel Zr-Phosphat in der Membran ausgefällt werden kann, wie $SO_3H$-Gruppen in der Nafion®-Matrix enthalten sind. Auch eigene Entwicklungen in diesem Arbeitsgebiet wurden bereits zum Patent angemeldet: zum einen Composite-Membranen aus Kationenaustauschergruppen und/oder basische Gruppen beziehungsweise nichtionische Vorstufen von Kationenaustauschergruppen enthaltenden enthaltenden Organopolymeren und Organopolymerblends, wobei Säure-Base-Blends bevorzugt sind, und anorganischen Stoffen, wobei die anorganischen Stoffe als Organometallverbindungen (wie z. B. Metallacetylacetonate, Metallalkoxide) in die Membranmatrix eingebracht und in der Membranmatrix zum jeweiligen Metalloxid oder - hydroxid hydrolysiert wurden[3,4]. In den genannten eigenen Patentanmeldungen sind die in dieser Erfindung beschriebenen erfindungsgemäßen Materialien beziehungsweise Verfahren zur Herstellung der erfindungsgemäßen Polymere und Membranen nicht vorbeschrieben. Eine weitere Gruppe von Compositemembranen betrifft Composites aus sulfonierten Poly(etherketonen) und den Heteropolysäuren Phosphorwolframsäure Hydrat $H_3PW_{12}O_{40}$x29 $H_2O$ (TPA) und Molybdatophosphorsäure Hydrat $H_3PMo_{12}O_{40}$ x 29 $H_2O$ (MPA) sowie das Dinatriumsalz von TPA (Na-TPA)[5]. In diesem Artikel wurden keine ionisch und/oder kovalent vernetzten Ionomermembranen beschrieben, wie es in der vorliegenden Erfindung der Fall ist.

[1] U. S. 6,059,943, O. J. Murphy, A. J. Cisar, Lynntech, Inc. (2000)
[2] C. Yang, et al., Electrochem. Solid St. Lett. 4(4) A31-A34 (2001)
[3] Jochen Kerres, Deutsche Patentanmeldung 10021106 vom 2.5.2000
[4]Jochen Kerres, Thomas Häring, Deutsche Patentanmeldung 10021104 vom 2.5.2000
[5] S. M. J. Zaidi, S. D. Mikhailenko, G. P. Robertson, M. D. Guiver, S. Kaliaguine, J. Memb. Sci. 173, 17-34 (2000)

## Beschreibung

Überraschend wurde festgestellt, dass Polymer-Metallsalz- oder Polymer-Metalloxid- oder Polymer-Metallhydroxid-Composites oder -Compositemembranen gemäß den Ansprüchen 1-15 mit folgender Methode *Methode I* in ihrer allgemeinsten Ausführungsform hergestellt werden können.

I.1. Herstellung der Lösung eines oder mehrerer Polymere des Typs A (Polymer mit Kationenaustauschergruppen oder deren nichtionischen Vorstufen) und gegebenenfalls eines oder mehrerer Polymere des Typs B (Polymer mit N-basischen Gruppen und/oder Anionenaustauschergruppen) und gegebenenfalls des Typs C (Polymere mit Vernetzungsgruppen wie Sulfinatgruppen und/oder ungesättigten Gruppen) und/oder Polymere des Typs D (Polymere mit Kationenaustauschergruppen oder deren nichtionischen Vorstufen und Anionenaustauschergruppen und/oder basischen N-Gruppen und/oder Vemetzungsgruppen) in einem Lösungsmittel L1 und gegebenenfalls eines gegebenenfalls nanoskaligen Metalloxid-, Metallsalz- oder Metallhydroxidpulvers *(8)*;
I.2. Herstellung der Lösung eines oder mehrerer Metallsalze $Me^+X^-$ *(10)* in einem geeigneten Lösungsmittel L2 *(11)*, gegebenenfalls unter Hinzufügen einer (Hetero)polysäure oder deren Alkalimetallsalz *(9)*;
I.3. Vereinigung der Lösungen aus 1. und 2.;
I.4. Ziehen oder sprühen eines dünnen Films des Gemischs aus 3. auf einer Unterlage (Folie oder Gewebe oder Vlies oder Glasplatte oder Metallplatte);
I.5. Abdampfen der Lösungsmittel L1 und L2 bei erhöhter Temperatur und gegebenenfalls erniedrigtem Druck;
1.6. Ablösen des Compositefilms von der Unterlage;
I.7. Einlegen des Compositefilms in folgende Flüssigkeiten:

I.7a wässrige Lösung eines basischen Metallhydroxids MOH oder eines Amins oder Ammoniak $N(R_2)_3$ bei Temperaturen von 0°C bis 100°C, wobei Ausfällung eines schwerlöslichen Metalloxids $Me_mO_n$ oder Metallhydroxids $Me_m(OH)_n$ oder gemischter Metalloxid-hydroxide $Me_mO_n$ *x $H_2O$ in der Membranmatrix stattfindet;
I.7b wässrige Lösung einer Mineralsäure HY bei Temperaturen von 0°C bis 100°C, die ein schwerlösliches Metallsalz $Me_mY_n$ in der Membranmatrix ausfällt;

I.7c Wasser bei Temperaturen von 0°C bis 100°C,

I.7d wässrige Lösung eines Metallsalzes MY bei Temperaturen von 0°C bis 100°C, die ein schwerlösliches Metallsalz $Me_mY_n$ durch Umsalzung in der Membranmatrix ausfällt.

Weiter wurde überraschend festgestellt, dass Polymer-Metallsalz- oder Polymer-Metalloxid-oder Polymer-Metallhydroxid-Composites oder -Compositemembranen auch mit folgender Methode *Methode II* in ihrer allgemeinsten Ausführungsform hergestellt werden können:

II.1. Herstellung der Lösung eines oder mehrerer Polymere des Typs A (Polymer mit Kationenaustauschergruppen oder deren nichtionischen Vorstufen) und gegebenenfalls eines oder mehrerer Polymere des Typs B (Polymer mit N-basischen Gruppen und/oder Anionenaustauschergruppen) und gegebenenfalls des Typs C (Polymere mit Vernetzungsgruppen wie Sulfinatgruppen und/oder ungesättigten Gruppen) und/oder Polymere des Typs D (Polymere mit Kationenaustauschergruppen oder deren nichtionischen Vorstufen und Anionenaustauschergruppen und/oder basischen N-Gruppen und/oder Vernetzungsgruppen) und gegebenenfalls Zugabe eines Vernetzers (beispielsweise Alkylierungsvernetzer (z. B. $\alpha,\omega$-Dihalogenalkan)) oder Radikalstarters in einem Lösungsmittel L1 und gegebenenfalls eines gegebenenfalls nanoskaligen Metalloxid-, Metallsalz- oder Metallhydroxidpulvers und/oder einer (Hetero) polysäure;

II2. Ziehen oder sprühen eines dünnen Films des Gemischs aus 1. auf einer Unterlage (Folie oder Gewebe oder Vlies oder Glasplatte oder Metallplatte);

II3. Abdampfen der Lösungsmittel L1 bei erhöhter Temperatur und gegebenenfalls erniedrigtem Druck; während der Lösungsmittelabdampfung findet gegebenenfalls die Vernetzung der Vernetzungskomponente statt;

II.4. Ablösen des Polymerfilms von der Unterlage;

II.5. Einlegen des Compositefilms in folgende Flüssigkeiten:

II.5a Wasser oder Gemische von Wasser mit organischem Lösungsmittel L1 bei Temperaturen von 0°C bis 100°C;

II.5b wässrige Lösung oder Lösung eines oder mehrerer Metallsalze $Me^+X^-$ oder Lösung eines oder mehrerer Metallsalze $Me^+X^-$ in einem Gemisch aus Wasser und organischem Lösungsmittel L2 bei Temperaturen von 0°C bis 100°C; dabei findet Ionenaustausch statt:

$$\text{Polymer-}R^-C^+ + Me^+X^- \rightarrow \text{Polymer-}R^-Me^+ + C^+X^-$$

$Me^+$=beliebiges 1- bis 4-wertiges Metalkation oder Metalloxykation, $X^-$=beliebiges Anion, $R^-$=Polymer-Festanion, $C^+$=Gegenion (beliebiges Kation)

II.5c Wasser bei Temperaturen von 0°C bis 100°C;

II.5d wässrige Lösung eines basischen Metallhydroxids MOH bei Temperaturen von 0°C bis 100°C, wobei Ausfällung eines schwerlöslichen Metalloxids $Me_mO_n$ oder Metallhydroxids $Me_m(OH)_n$ in der Membranmatrix stattfindet;

II.5e Wasser bei Temperaturen von 0°C bis 100°C;

II.5f wässrige Lösung einer Mineralsäure HY bei Temperaturen von 0°C bis 100°C, die ein schwerlösliches Metallsalz $Me_mY_n$ in der Membranmatrix ausfällt;

II.5g wässrige Lösung eines Metallsalzes MY bei Temperaturen von 0°C bis 100°C, die ein schwerlösliches Metallsalz $Me_mY_n$ durch Umsalzung in der Membranmatrix ausfällt,

II.5h Wasser bei Temperaturen von 0°C bis 100°C;

II.5i 1- oder mehrmalige Wiederholung der Prozedur 5a bis 5h.

Dabei wurde überraschend gefunden, dass sich die Herstellungsmethoden *Methode I* und *Methode II* auch in folgender Form kombinieren lassen:

Zuerst wird der Compositefilm nach *Methode I* hergestellt. Danach erfolgt die Weiterverarbeitung nach Methode II ab II.5. Dabei entstehen multinäre Compositefilme, die aufgrund der Einlagerung der anorganischen Bestandteile in die verschiedenen Bereiche der Polymermorphologie sowohl sehr gute mechanische und thermische Stabilität als auch sehr gute Ionenleitfähigkeit und beim Einsatz in Direktmethanol-Brennstofzellen auch sehr gute Methanol-Retention aufweisen.

Die Vorteile der nach *Methode I* oder *Methode II* oder einer Kombination von *Methode I* mit der *Methode II* hergestellten Compositemembranen sind:

- die durch Ionenaustausch-Ausfällung in der Polymermatrix nach *Methode II,* II.5 eingelagerten gegebenenfalls eigenprotonenleitfähigen anorganischen Stoffe sind hauptsächlich in den ionenleitfähigen Kanälen eingelagert. Dort erhöhen sie die Protonenleitfähigkeit der Membran auch bei T>100°C, da die anorganischen Stoffe insbesondere bei T>100°C die Wasserhaltefähigkeit der Compositemembran verbessern und auch zum Teil eine Eigenprotonenleitfähigkeit aufweisen (wie z. B. Heteropolysäuren, Vanadinoxide, Zirkoniumphosphate);
- die nach *Methode I* oder einer Kombination von *Methode I* mit der *Methode II* hergestellten Compositemembranen besitzen eine hohe mechanische Stabilität, da sich das Netzwerk der anorganischen Komponente(n) über die gesamte Morphologie erstreckt. Darüberhinaus erhöhen die anorganischen Komponenten die thermische Stabilität der Compositemembranen ganz erheblich;
- die Compositemembranen weisen durch die anorganischen Komponenten in der Membranmatrix eine sehr gute Methanol-Sperrwirkung auf, was die Effizienz der Membranen beim Einsatz in Direktmethanol-Brennstoffzellen (DMFC) ganz erheblich steigert, wobei die Effizienz insbesondere bei T>100°C durch die anorganische(n) Komponente(n) durch deren gute Wasserhaltefähigkeit gesteigert wird. Wird eine DMFC bei T>100°C betrieben, ist die Effizienz auch durch die schnellere Elektrodenkinetik in diesem Temperaturbereich (Mitteltemperatur-DMFC) verbessert. Die MeOH-Sperrung ist insbesondere bei erfindungsgemäßen Compositemembranen sehr ausgeprägt, bei denen die anorganische Verbindung in den ionenleitenden Kanälen eingelagert wurde (wie z. B. bei II.5). Die MeOH-Sperrwirkung bei nach II.5 hergestellten Compositemembranen kann dabei überraschend noch gesteigert werden, wenn der Ionenaustausch-Fällungs-Prozess mehrmals wiederholt wird.
- Es wurde überraschend festgestellt, dass ein Einlegen der Membran in ein Gemisch aus Wasser und organischem Lösungsmittel (II.5.a) vor dem Ionenaustausch-Ausfällungsprozess zu einer um so stärkeren Erhöhung der Ionenleitfähigkeit der Membranen führt, je höher der Anteil des organischen Lösungsmittels in dem Lösungsmittel/Wasser-Gemisch ist.
- Es wurde überraschend festgestellt, dass Heteropolysäuren in der Membranmatrix besser gehalten werden, wenn eine schwerlösliche anorganische Phase in der Compositemembran vorliegt. Wenn keine anorganische Phase in der Membran vorliegt, wird (werden) die Heteropolysäure(n) während der Membrannachbehandlung in Wasser, Säuren und/oder wässrigen Laugen größtenteils wieder herausgelöst.
- Es wurde überraschend ergänzend festgestellt, dass insbesondere Oxid- oder Salz-Polymer-Composite(blend) membranen, die ionische Vernetzungsstellen in der Organopolymerkomponente enthielten, eine besonders hohe MeOH-Retention aufwiesen, verglichen mit den entsprechenden reinen Organopolymer(blend)membranen.
- Es wurde überraschend festgestellt, dass in der Polymerphase kovalent und/oder ionisch vernetzte Oxid- oder Salz-Polymer-Composite(blend)membranen eine besonders gute Quellungsstabilität auch bei T>70°C aufwiesen, verglichen mit den entsprechenden reinen Organopolymer(blend)membranen.
- Werden erfindungsgemäße Polymermischungen, beispielsweise aus einem sulfonierten Polymer (z. B. sulfoniertes PEK in der Imidazoliumsalzform $SO_3^-ImH^+$) und einem basischen Polymer (z. B. Polybenzimidazol PBI Celazol®), in einem dipolar-aprotischen Lösungsmittel, beispielsweise N-Methylpyrrolidinon, noch zusätzlich mit Heteropolysäuren versetzt, kommt es überraschenderweise zu keiner signifikanten Ausfällung eines Polyelektrolytkomplexes aus basischem Polymer und Heteropolysäure, wie es eigentlich zu erwarten gewesen wäre.

Die Komponenten der erfindungsgemäßen Compositemembranen sind folgendermaßen definiert:

*(1) Hauptketten (Backbones) der erfindungsgemäßen Polymere:*

Als Polymerhauptketten sind alle Polymere möglich. Bevorzugt als Hauptketten werden jedoch:

- Polyolefine wie Polyethylen, Polypropylen, Polyisobutylen, Polynorbornen, Polymethylpenten, Poly(1,4-isopren), Poly(3,4-isopren), Poly(1,4-butadien), Poly(1,2-butadien)
- Styrol(co)polymere wie Polystyrol, Poly(methylstyrol), Poly($\alpha,\beta,\beta$-trifluorstyrol), Poly(pentafluorostyrol)
- perfluorierten Ionomere wie Nafion® oder der $SO_2$Hal-Vorstufe von Nafion® (Hal=F, Cl, Br, I), Dow®-Membrane, GoreSelect®-Membrane.
- N-basische Polymere wie Polyvinylcarbazol, Polyethylenimin, Poly(2-vinylpyridin), Poly(3-vinylpyridin), Poly(4-vinylpyridin)
- (Het)arylhauptkettenpolymere, die die in Abb. 1 aufgeführten Baugruppen enthalten.

Besonders bevorzugt werden (Het)arylhauptkettenpolymere wie:

- Polyetherketone wie Polyetherketon PEK Victrex®, Polyetheretherketon PEEK Victrex®, Polyetheretherketonketon PEEKK, Polyetherketonetherketon-keton PEKEKK Ultrapek®
- Polyethersulfone wie Polysulfon Udel®, Polyphenylsulfon Radel R®, Polyetherethersulfon Radel A®, Polyethersulfon PES Victrex®

- Poly(benz)imidazole wie PBI Celazol® und andere den (Benz)imidazol-Baustein enthaltende Oligomere und Polymere, wobei die (Benz)imidazolgruppe in der Hauptkette oder in der Polymerseitenkette vorhanden sein kann
- Polyphenylenether wie z. B. Poly(2,6-dimethyloxyphenylen), Poly(2,6-diphenyloxyphenylen)
- Polyphenylensulfid und Copolymere
- Poly(1,4-phenylene) oder Poly(1,3-phenylene), die in der Seitengruppe ggf. mit Benzoyl-, Naphtoyl- oder o-Phenyloxy-1,4-Benzoylgruppen, m-Phenyloxy-1,4-Benzoylgruppen oder p-Phenyloxy-1,4-Benzoylgruppen modifiziert sein können.
- Poly(benzoxazole) und Copolymere
- Poly(benzthiazole) und Copolymere
- Poly(phtalazinone) und Copolymere
- Polyanilin und Copolymere
- Polythiazol
- Polypyrrol

*(2) Polymere des Typs A (Polymere mit Kationenaustauschergruppen oder deren nichionischen Vorstufen):*

Unter den Polymertyp A fallen alle Polymere, die aus den o. g. Polymerhauptketten *(1)* und folgenden Kationenaustauschergruppen oder ihren nichtionischen Vorstufen bestehen können: $SO_3H$, $SO_3Me$; $PO_3H_2$, $PO_3Me_2$; COOH, COOMe $SO_2X$, $POX_2$, COX mit X=Hal, $OR_2$, $N(R_2)_2$, Anhydridrest, N-Imidazolrest

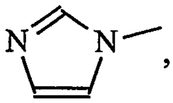,

N-Pyrazolrest

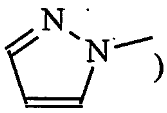)

Dabei sind $SO_3H$, $SO_3Me$; $PO_3H_2$, $PO_3Me_2$ bzw. $SO_2X$, $POX_2$ als funktionelle Gruppen bevorzugt. Besonders bevorzugt als funktionelle Gruppen sind die stark sauren Sulfonsäuregruppen oder ihre nichtionischen Vorstufen. Als Polymerhauptketten sind Arylhauptkettenpolymere bevorzugt. Besonders bevorzugt sind Poly(etherketone) und Poly(ethersulfone)

*(3) Polymere des Typs B (Polymere mit N-basischen Gruppen und/oder Anionenaustauschergruppen) :*

Unter den Polymertyp A fallen alle Polymere, die aus den o. g. Polymerhauptketten *(1)* bestehen und folgende Anionenaustauschergruppen oder ihren nichtionischen Vorstufen (mit primärem, sekundärem, tertiärem basischem N) tragen können:

$N(R_2)_3^+Y^-$, $P(R_2)_3^+Y^-$,

wobei die $R_2$-Reste gleich oder voneinander verschieden sein können;
$N(R_2)_2$ (primäre, sekundäre oder tertiäre Amine);
Polymere mit den in Abb. 2 aufgeführten N-basischen (Het)aryl- und Heterocyclusgruppen. Als Polymerhauptketten sind (Het)arylhauptkettenpolymere wie Poly(etherketone), Poly(ethersulfone) und Poly(benzimidazole) bevorzugt. Als basische Gruppen sind bevorzugt primäre, sekundäre und tertiäre Aminogruppen, Pyridylgruppen und Imidazolgruppen.

*(4) Polymere des Typs C (Polymere mit Vernetzungsgruppen wie Sulfinatgruppen und/oder ungesättigten Gruppen):*

Unter den Polymertyp C fallen alle Polymere, die aus den o. g. Polymerhauptketten *(1)* und Vernetzungsgruppen bestehen. Vernetzungsgruppen sind beispielsweise:

4a) Alkengruppen: Polymer-$C(R_{13})=C(R_{14}R_{15})$ mit $R_{13}$, $R_{14}$, $R_{15}=R_2$ oder $R_4$

4b) Polymer-Si($R_{16}R_{17}$)-H mit $R_{16}$, $R_{17}$= $R_2$ oder $R_4$
4c) Polymer-COX, Polymer-$SO_2$X, Polymer-$POX_2$
4d) Sulfinatgruppen Polymer-$SO_2$Me
4e) Polymer-N($R_2$)$_2$ mit $R_2 \neq$H.

Dabei kann auf der Polymerhauptkette einer der genannten Vernetzungsgruppen oder mehrere der genannten Vernetzungsgruppen liegen. Die Vernetzung kann dabei durchgeführt werden durch folgende literaturbekannte Reaktionen:

(I) Gruppe 4a) durch Addition von Peroxiden;
(II) Gruppe 4a) mit Gruppe 4b) unter Pt-Katalyse via Hydrosilylierung;
(III) Gruppe 4d) mit Dihalogenalkan- oder Dihalogenaryl-Vernetzern (z. B. Hal-$(CH_2)_x$-Hal, x=3-20) unter S-Alkylierung der Sulfinatgruppe;
(IV) Gruppe 4e) mit Dihalogenalkan- oder Dihalogenaryl-Vernetzern (z. B. Hal-$(CH_2)_x$-Hal, x=3-20) unter Alkylierung der tertiären basischen N-Gruppe
(V) Gruppe 4d) und Gruppe 4e) mit Dihalogenalkan- oder Dihalogenaryl-Vernetzern (z. B. Hal-$(CH_2)_x$-Hal, x=3-20) unter S-Alkylierung der Sulfinatgruppe und Alkylierung der tertiären basischen N-Gruppe
(VI) Gruppe 4c) durch Reaktion mit Diaminen.

Dabei sind die Vernetzungsreaktionen (III) und (IV) und (V) bevorzugt, insbesondere die Vernetzungsreaktion (III).

*(5) Polymere des Typs D (Polymere mit Kationenaustauschergruppen und Anionenaustauschergruppen und/oder basischen N-Gruppen und/oder Vernetzungsgruppen):*

Unter den Polymertyp *(5)* fallen Polymere, welche die Hauptketten aus *(1)* enthalten können, die verschiedenartige Gruppen tragen können: die in *(2)* aufgeführten Kationenaustauschergruppen oder ihre nichtionischen Vorstufen und die in *(3)* aufgeführten Anionenaustauschergruppen oder primären, sekundären oder tertiären N-basischen Gruppen und/oder die in *(4)* aufgeführten Vernetzungsgruppen.
Folgende Kombinationen sind dabei möglich:

Polymer D1: Polymer mit Kationentauschergruppen oder ihren nichtionischen Vorstufen und mit Anionentauschergruppen und/oder N-basischen Gruppen
Polymer D2: Polymere mit Kationenaustauschergruppen oder ihren nichtionischen Vorstufen und mit Vernetzungsgruppen
Polymer D3: Polymere mit Anionentauschergruppen und/oder N-basischen Gruppen und mit Vernetzungsgruppen
Polymer D4: Polymer mit Kationentauschergruppen oder ihren nichtionischen Vorstufen und mit Anionentauschergruppen und/oder N-basischen Gruppen und mit Vernetzungsgruppen

*(6) Membrantypen:*

<u>(6.1) Kovalent vernetzte (Blend)membranen:</u>

Die kovalent vernetzten (Blend)membranen können aus folgenden Komponenten bestehen

(6.1.1) Blendmembranen aus:

(6.1.1.1) Polymer A: Hauptketten *(1)* mit Kationenaustauschergruppen *(2)*
+ Polymer C: Hauptketten *(1)* mit Vernetzergruppen *(4)*
+ Vernetzer oder Vernetzungsinitiator

oder

(6.1.1.2) Polymer D2: Hauptketten *(1)* mit Kationenaustauschergruppen *(2)* und Vernetzergruppen *(4)*
+ Polymer C: Hauptketten *(1)* mit Vernetzergruppen *(4)*
+ Vernetzer oder Vernetzungsinitiator

(6.1.2) Polymer D2: Hauptketten *(1)* mit Kationenaustauschergruppen *(2)* und Vernetzergruppen *(4)*
+ Vernetzer oder Vernetzungsinitiator

Als Hauptketten (1) sind dabei Arylhauptkettenpolymere und insbesondere Poly(etherketone) oder Poly(ethersulfone) bevorzugt, als Kationenaustauschergruppen *(2)* $SO_3H$-Gruppen oder Phosphonsäuregruppen oder deren nichtionischen Vorstufen, und als Vernetzergruppen *(4)* $SO_2Me$-Gruppen. Als Vernetzer sind Dihalogenalkan- oder Dihalogenarylverbindungen bevorzugt. Besonders bevorzugt als Vernetzer sind Hal-$(CH_2)_x$-Hal, x=3-20, mit Hal=I, Br, Cl, F.

(6.2) Ionisch vernetzte (Blend)membranen:

Die ionisch vernetzten (Blend)membranen können aus folgenden Komponenten bestehen

(6.2.1) Blendmembranen aus:
(6.2.1.1) Polymer A: Hauptketten *(1)* mit Kationenaustauschergruppen *(2)*
+ Polymer B: Hauptketten *(1)* mit Anionentauscher- oder anderen N-basischen Gruppen *(3)*

oder

(6.2.1.2) Polymer D1: Hauptketten *(1)* mit Kationenaustauschergruppen *(2)* und Anionentauscher- oder anderen N-basischen Gruppen *(3)*
+ Polymer B: Hauptketten *(1)* mit Anionentauscher- oder anderen N-basischen Gruppen *(3)*
(6.1.2) Polymer D1: Hauptketten *(1)* mit Kationenaustauschergruppen *(2)* und Anionentauscher- oder anderen N-basischen Gruppen *(3)*

Als Hauptketten (1) sind dabei Arylhauptkettenpolymere und insbesondere Poly(etherketone) oder Poly(ethersulfone) bevorzugt, als Kationenaustauschergruppen *(2)* $SO_3H$-Gruppen oder Phosphonatgruppen oder deren nichtionische Vorstufen.

(6.3) Kovalent-ionisch vernetzte (Blend)membranen:

Die kovalent-ionisch vernetzten (Blend)membranen können aus folgenden Komponenten bestehen:

(6.3.1) Blendmembranen aus:
(6.3.1.1) Polymer A: Hauptketten *(1)* mit Kationenaustauschergruppen *(2)*
+ Polymer C: Hauptketten *(1)* mit Vernetzergruppen *(4)*
+ Polymer B: Hauptketten *(1)* mit Anionentauscher- oder anderen N-basischen Gruppen *(3)*
+ Vernetzer oder Vernetzungsinitiator

oder

(6.3.1.2) Polymer D2: Hauptketten *(1)* mit Kationenaustauschergruppen *(2)* und Vernetzergruppen *(4)*
+ Polymer B: Hauptketten *(1)* mit Anionentauscher- oder anderen N-basischen Gruppen *(3)*
+ Vernetzer oder Vernetzungsinitiator

oder

(6.3.1.3) Polymer D1: Hauptketten *(1)* mit Kationenaustauschergruppen *(2)* und Anionentauscher- oder anderen N-basischen Gruppen *(3)*
+ Polymer C: Hauptketten *(1)* mit Vernetzergruppen *(4)*
+ Vernetzer oder Vernetzungsinitiator

oder

(6.3.1.4) Polymer A: Hauptketten *(1)* mit Kationenaustauschergruppen *(2)*
+ Polymer B: Hauptketten *(1)* mit Anionenaustauschergruppen oder anderen N-basischen Gruppen *(3)*
+ Vernetzer oder Vernetzungsinitiator
(6.3.2) Polymer D4: Membranen aus Hauptketten *(1)* mit Kationenaustauschergruppen *(2)* und Anionentauscher- oder anderen N-basischen Gruppen *(3) und* Vernetzergruppen *(4)*
+ Vernetzer oder Vernetzungsinitiator

Als Hauptketten (1) sind dabei Arylhauptkettenpolymere und insbesondere Poly(etherketone) oder Poly(ethersulfone) bevorzugt, als Kationenaustauschergruppen *(2)* $SO_3H$-Gruppen oder Phosphonsäuregruppen oder deren nichtionischen Vorstufen, und als Vernetzergruppen *(4)* $SO_2Me$-Gruppen. Als Vernetzer sind Dihalogenalkan- oder Dihalogenarylverbindungen bevorzugt. Besonders bevorzugt als Vernetzer sind Hal-$(CH_2)_x$-Hal, x=3-20, mit Hal=I, Br, Cl, F.

*(7) Lösungsmittel L1:*

<u>(7.1) Protische Lösungsmittel:</u>

Wasser, Alkohole (z. B. Methanol, Ethanol, n-Propanol, i-Propanol, tert. Butanol); wässrige und/oder alkoholische Metallsalzlösungen, wässrige und/oder alkoholische niedermolekulare Polymerlösungen die Kationenaustauschergruppen enthalten.

<u>(7.2) Dipolar-aprotische Lösungsmittel:</u>

Aceton, Methylethylketon (MEK), Acetonitril (ACN), N-Methylformamid, N,N-Dimethylformamid (DMF), N-Methylacetamid, N,N-Dimethylacetamid (DMAc), N-Methylpyrrolidinon (NMP), Dimethylsulfoxid (DMSO), Sulfolan;

<u>(7.3) Etherlösungsmittel:</u>

Tetrahydrofuran, Oxan, Dioxan, Glyme, Diglyme, Triglyme, Tetraglyme, Diethylether, Di-tert.Butylether

*(8) Metalloxid-, Metallsalz- oder Metallhydroxidpulver, besonders bevorzugt sind nanoskalige Pulver:*

- Schichtsilikate auf der Basis von Montmorillonit, Smectit, Illit, Sepiolit, Palygorskit, Muscovit, Allevardit, Amesit, Hectorit, Talkum, Fluorhectorit, Saponit, Beidelit, Nontronit, Stevensit, Bentonit, Glimmer, Vermiculit, Fluorvermiculit, Halloysit, Fluor enthaltende synthetische Talkumtypen oder Mischungen aus zwei oder mehr der genannten Schichtsilikate.
- Natürliche und synthetische, gegebenenfalls ionenausgetauschte Zeolithe, insbesondere ZSM-5 Zeolith und Klinopthiolites
- Zusätzlich sind die Carbonate wie z. B. $MgCO_3xH_2O$ und $La(CO_3)_2xH_2O$ sowie Oxycarbonate und die protonenleitenden perowskitischen Oxide wie z. B. Strontium-Barium-Ceroxid, Barium-Calcium-Niobat etc. als keramische Komponenten geeignet.
- Wasserhaltige Partikel, die OH-Gruppen an ihrer Oberfläche besitzen, vor allem auf $Al_2O_3$ basierend (Bayerit, Pseudoböhmit, Gibbsit = Hydrargillit, Diaspor, Böhmit), sowie Vanadium- oder Wolfram-basierende Oxide ($V_2O_5$, $VO_x$, $WO_x$) oder Legierungen aus diesen Oxiden:

| | | |
|---|---|---|
| $Al_2O_3*xH_2O$ | x = 1-10 | |
| $V_2O_5*xH_2O$ | x = 1-10 | |
| $VO_x*yH_2O$ | y = 1-10 | x = 1,5 - 3 |
| $WO_x*yH_2O$ | y = 1-10 | x = 2 -3 |

- ionenausgetauschte, besonders bevorzugt sind protonierte Legierungen von Oxiden, die in ihrer ursprünglichen Ausgangszusammensetzung die β-Aluminat-Struktur formen. Diese Verbindungsklasse bildet sich aus den Legierungen der unten aufgezählten Oxide. Die Zusammensetzungsformeln beschreiben die Bereiche, in denen sich die Ausgangsverbindung, die β-Aluminate, bilden.
Als bevorzugte Komponente Me in $Me_2O$ wird Na oder K verwendet. Die hergestellten, alkalihaltigen Verbindungen müssen, bevor sie für die Membran verwendet werden können, einem Ionenaustausch unterzogen werden. Dabei wird das Alkaliion entfernt und die protonierte Form hergestellt.

| | | |
|---|---|---|
| $zMe_2O$-xMgO-$yAl_2O_3$, | $zMe_2O$-xZnO-$yAl_2O_3$, | $zMe_2O$-xCoO-$yAl_2O_3$, |
| $zMe_2O$-xMnO-$yAl_2O_3$, | $zMe_2O$-xNiO-$yAl_2O_3$, | $zMe_2O$-xCrO-$yAl_2O_3$, |
| $zMe_2O$-xEuO-$yAl_2O_3$, | $zMe_2O$-xFeO-$yAl_2O_3$, | |
| $zMe_2O$-xSmO-$yAl_2O_3$ | | |
| mit Me= Na, K, | z = 0,7 - 1,2. | |

(mit x = 0,1-10, y = 0,1 - 10), stabil bis ca. 300 °C

- Als weitere keramische Pulver kommen Zusammensetzungen in Betracht, welche die Komponenten MgO, ZnO, CoO, MnO, NiO, CrO, EuO, FeO, SmO enthalten.. Weitere geeignete Oxide basieren auf den Elementen Ti, V, Cr, Mn, Fe, Co, Ni, Cu, Zn, Zr, Nb, Mo, Ce, Ta, W, Sm, Eu, Gd, Yb, La
- Andere geeignete, z. T. schwerlösliche Metallsalze können sein: Phosphate und Hydrogenphosphate sowie saure und vollständig neutralisierte Diphosphate von Ti, V, Cr, Mn, Fe, Co, Ni, Cu, Zn, Zr, Nb, Mo, Ce, Ta, W, Sm, Eu, Gd, Yb, La.
- Auch Siliciumdioxid in seinen verschiedenen Modifikationen ist als keramische Komponente geeignet. Besonders bevorzugt sind hochdisperse Siliciumdioxide, beispielsweise aus der Gruppe der Aerosile®.

Besonders bevorzugt sind die Oxide $TiO_2$, $ZrO_2$ und $Al_2O_3$ und die schwerlöslichen Metallphosphate $Zr_3(PO_4)_4$ und $ZrP_2O_7$ und Zirkonhydrogenphosphate.

*(9) (Hetero)polysäuren und ihre Salze:*

Als (Hetero)polysäuren können zur Verwendung kommen: Polyphosphorsäure und Heteropolysäuren wie die Phosphorwolframsäure Hydrat $H_3PW_{12}O_{40}$x29 $H_2O$ (TPA) und Molybdatophosphorsäure Hydrat $H_3PMo_{12}O_{40}$ x 29 $H_2O$ (MPA) sowie die Alkalimetallsalze von Heteropolysäuren wie beispielsweise das Dinatriumsalz von TPA (Na-TPA).

*(10) Metallsalze $Me^+X^-$ und kovalente Metallverbindungen:*

Die Metallsalze sind Salze aus Übergangsmetallkationen (z. B. der Metalle Ti, V, Cr, Mn, Fe, Co, Ni, Cu, Zn, Zr, Sn, Nb, Mo, Ce, Ta, W, Sm, Eu, Gd, Yb, La) oder Übergangsmetalloxykationen wie $ZrO^{2+}$, $TiO^{2+}$, und Anionen von Mineralsäuren, wie z. B. $Hal^-$ (Hal=F, Cl, Br, I) oder $SO_4^{2-}$, die in Lösungsmitteln L2 (s. u.) löslich sind. Als Metallsalze sind insbesondere $ZrOCl_2$, $ZrOSO_4$, $TiOCl_2$, $TiOSO_4$, $ZrCl_4$ oder $TiCl_4$ bevorzugt.

*(11) Organisches Lösungsmittel L2:*

Als organische Lösungsmittel für die Metallsalze (10) kommen hauptsächlich dipolar-aprotische Lösungsmittel in Betracht. Als Lösungsmittel L2 ist insbesondere DMSO bevorzugt.

*(13) Kationenaustauscher-Gegenionen $C^+$:*

Als $C^+$ sind grundsätzlich alle dissoziierenden Kationen möglich. Bevorzugt werden dabei jedoch Alkalimetallkationen oder primäre, sekundäre oder tertiäre Ammoniumionen oder Pyrazolium- oder Imidazoliumionen sowie Pyridiniumionen.

*(14) Basische Metallhydroxide MOH oder Amine:*

Geeignete basische Metallhydroxide sind die Alkali- oder die Erdalkalimetallhydroxide, dabei sind NaOH und KOH bevorzugt. Geeignete Amine sind Ammoniak oder Triethylamin.

*(15) Schwerlösliche Metalloxide $Me_mO_n$:*

Als schwerlösliche Metalloxide sind grundsätzlich alle in *(8)* genannten Oxide möglich. Bevorzugt sind jedoch die z. T. wasserhaltigen Oxide, die durch Reaktion der Verbindungen *(10)* mit den wässrigen Basen *(14)* entstehen. Dabei sind insbesondere $TiO_2$ oder $ZrO_2$ bevorzugt.

*Schwerlösliche Metallhydroxide $Me_m(OH)_n$:*

Als schwerlösliche Metallhydroxide sind grundsätzlich alle in *(8)* genannten Hydroxide möglich.

*Mineralsäure HY:*

Als Mineralsäuren kommen Mono- Di- oder Polyphosphorsäuren oder Heteropolysäuren oder Schwefelsäure in Betracht. Bevorzugt wird jedoch Orthophosphorsäure.

## Anwendungsbeispiele

*1. Säure-Base-Blend-Composite-Membranen durch Addition einer Lösung von $ZrOCl_2$ *$8H_2O$ in Dimethylsulfoxid zur Polymerlösung*

**Vorbereitungen:**

In dieser Arbeit wurden Blend-Membranen aus sulfoniertem Poly(etherketon) PEK (S-PEK; IEC = 1,8 meq $SO_3H$/g Polymer) und PBI (IEC= 6,5 meq basisches N/g Polymer) als Säure- bzw. Basenkomponente hergestellt. Eine weitere Base (Imidazol) wurde zur Neutralisation von S-PEK verwendet. Und als anorganisches Material, das in den Membranen eingebaut werden sollte, wurde $ZrOCl_2$*$8H_2O$ gewählt. Aus S-PEK und Imidazol wurde jeweils eine 10%ige Lösung in NMP hergestellt. PBI-Lösung ließ sich in DMAc zu 9,5%ig herstellen. Aufgrund ihrer Löslichkeit und Mischbarkeit mit Polymerlösungen wurde $ZrOCl_2$*$8H_2O$ in DMSO gelöst (auch 10%).

| | | |
|---|---|---|
| Lösung1: | S-PEK | 10% in NMP |
| Lösung2: | PBI | 9,5% in DMAc |
| Lösung3: | Imidazol | 10% in NMP |
| Lösung4: | $ZrOCl_2$*$8H_2O$ | 10% in DMSO |

Um klare Membranen herstellen zu können, wurden alle Lösungen von Schwebeteilchen durch Filtration getrennt.

**Membranherstellung:**

S-PEK-Lösung wurde mit Imidazol (Lösung3) neutralisiert anschließend mit PBI versetzt (Lösung2) und gerührt. Dann wurde $ZrOCl_2$*$8H_2O$ zugegeben und gerührt. Als Vergleichsmembran (CPM2) wurde eine Lösung ohne Zugabe von $ZrOCl_2$*$8H_2O$ hergestellt. Die Polymerlösung wurde auf eine saubere Glasplatte gegossen und mit einer Rakel (1,0 mm Einkerbung) ausgerakelt. Die Glasplatte wurde umgehend in einen Trockenschrank bei 120°C 3h gelagert unddann über Nacht ein Vakuum angelegt.

Die Glasplatte wurde auf RT gekühlt und schließlich zur Ablösung der Membran für einige Minuten ins Wasser gelegt. Die Membranen wurde in drei Stücke zerlegt und als A, B oder C gekennzeichnet. Die Teilstücke wurden auf folgende Weise nachbehandelt:

A: in 10% NaOH bei 70°C, 24h; dann in VE-Wasser bei 70°C, 24h

B: in 10% NaOH bei 70°C, 24h; mit Wasser ausgespült; in 10% $H_3PO_4$, 70°C, 24h; dann in VE-Wasser bei 70°C, 24h

C: in 10% $H_3PO_4$, 70°C, 24h; dann in VE-Wasser bei 70°C, 24h

Die Referenzmembran CPM2 wurde entsprechend C behandelt, da sie kein anorganisches Material enthielt.

Es wurden folgende Membranen entsprechend der Tabelle1 hergestellt.

Tab.1: Membranzusammensetzungen

| | S-PEK [g] | Imidazol# [g] | PBI [g] | $ZrOCl_2$*$8H_2O$ [g] | $ZrOCl_2$*$8H_2O$ % |
|---|---|---|---|---|---|
| CPM1 | 2,0015 | 0,8025 | 0,1906 | 0,3038 | 12* |
| CPM4 | 2,0017 | 0,8011 | 0,1915 | 0,6030 | 21,6* |
| CPM2 (Ref.membran) | 2,0019 | 0,8004 | 0,1962 | 0 | 0 |
| #Zur Neutralisation der Poly(etherketonsulfonsäure) SPEK<br>* Bezogen auf S-PEK und PBI | | | | | |

**Ergebnisse:**

Quellverhalten:

Abbildung 3 zeigt das temperaturabhängige Quellverhalten von CPM1 und der Referenzmembran im Wasser. Bis 60°C weisen beide Membranen nahezu keine Temperaturabhängigkeit auf. Zwischen 60°C und 90°C jedoch steigt die Wasseraufnahme bei CPM1 um ca. 10% an und bei der Referenzmembran um ca. 20%. Das Quellverhalten der auf verschiedene Weise behandelten Membranen ähneln sich. Die nach Methode A nachbehandelte Membran weist die geringste Quellung auf, die nach C nimmt ca. 10% mehr Wasser auf.

Erhöht man die Menge an $ZrOCl_2{*}8H_2O$ um das Doppelte (CPM4), so verhält sich die Membran wie folgt: Zwischen 25°C und 90°C wird kaum mehr Wasser aufgenommen. Abbildung 4 stellt das Quellverhalten von CPM4 dar. Die Quellung dieser Membran liegt zwischen 28% und 45%.

Die Anwesenheit der anorganischen Bestandteile bewirkt offensichtlich und überraschenderweise eine Stabilisierung der Quellung über einen weiten Temperaturbereich. In beiden Fällen (CPM1 und CPM4) haben die mit NaOH behandelten Membranstücke die geringste Quellung gefolgt von denen mit $H_3PO_4$ behandelten. Die größte Wasseraufnahmefähigkeit zeigen die in NaOH und anschließend in $H_3PO_4$ nachbehandelten Membranen

Rückstandbestimmung mit Hilfe von TGA:

Mit Hilfe der thermischen Gravimetrie (TGA) werden die Rückstände der erwähnten Membranen bestimmt Hierfür werden kleine Membranstücke vorher in einem Trockenschrank bei 100°C über 3 Tage getrocknet. Dann werden sie für die Thermowaage zurecht geschnitten. Sie werden mit einer Heizrate von 20K/min. unter Sauerstoff geglüht. In der Tabelle 2 sind die Mengen der berechneten und experimentell bestimmten Rückstände der Membranen aufgelistet.

Tab.2: Membranrückstände

| | | Rückstand (TGA) % | Theo. $ZrO_2$ % | Theo. $ZrO(PO_3)_2$ od. $ZrP_2O_7$ % |
|---|---|---|---|---|
| CPM1 | A | 5,4 | 5,0 | 11,1 |
| | B | 7,9 | | |
| | C | 14,8 | | |
| CPM4 | A | 8,1 | 9,4 | 16,1 |
| | B | 24,2 | | |
| | C | 15,9 | | |
| **CPM2 Referenz.** | | **0** | **0** | **0** |
| *A: NaOH beh., *B: NaOH/$H_3PO_4$ beh. , C: $H_3PO_4$ beh. | | | | |

Membranen der A-Reihe, welche in NaOH nachbehandelt wurden und gemäß Gleichung 1 $ZrO_2$ als Rückstand enthalten, weisen eine gute Übereinstimmung des berechneten Werts mit dem experimentellen Befund auf. (CPM1-A: 5,0%/5,4%; CPM4-A: 9,4%/8,1%).

$$ZrOCl_2{*}8H_2O + 2NaOH \rightarrow ZrO_2{*}x\,H_2O + 2NaCl$$

$$ZrO_2 + H_3PO_4 \longrightarrow ZrO_2\,P_2O_5\text{-Addukt} + H_2O \longrightarrow Zr(HPO_4)_2{*}H_2O \qquad (2)$$

Waschen $-P_2O_5$ ↓ $ZrO_2$

Glühen ↓

$$ZrOCl_2{*}8H_2O + H_3PO_4 \longrightarrow ZrO(H_2PO_4)_2 \xrightarrow{\text{Glühen}} ZrO(PO_3)_2\,,\ ZrP_2O_7 \qquad (3)$$

Wird das Zirkonoxidaquat, welches aus der Nachbehandlung gemäß G1(1) entstand, mit Phosphorsäure behandelt (Membranstücke B), so findet anfänglich eine Adsorption[6] statt, die allmählich von der Reaktion der Bildung des Zirkonphosphat überlagert wird (G1.2). Die Adsorptionsverbindung enthält (formal) $ZrO_2$ und $P_2O_5$, welche beim Waschen (formal) $P_2O_5$ abgibt.

Beim Glühen von Zirkonphosphat bleibt als Rückstand laut[7] Zirkonylmetaphosphat $ZrO(PO_3)_2$ zurück. J.H. De Boer[8] fasste jedoch den Rückstand als Diphosphat ($ZrP_2O_7$) auf. Unabhängig von den unterschiedlichen Auffassungen sind beide Formeln für die Deutung von Analysenergebnissen gleichwertig. Demzufolge befinden sich im Rückstand der B-Reihe $ZrO(PO_3)_2$ oder $ZrP_2O_7$.

Unter der Annahme, dass (formal) $P_2O_5$ während der Nachbehandlung teilweise ausgewaschen wird, entspricht der experimentell gefundene Rückstand von CPM1-B in Höhe von 7,9% einen Wert, der zwischen dem reinen $ZrO_2$ und $ZrO(PO_3)_2$ liegt. Allerdings lässt sich der hohe Rückstand von CPM4B auf diese Weise nicht erklären.

Anders verhält sich das direkt durch $H_3PO_4$ aus den Lösungen von Zr-Salzen hergestellte Zirkonphosphat (Membranstücke C). Wegen der großen Stabilität des $ZrO^{2+}$-Ions und der praktischen Nichtexistenz von $Zr^{4+}$-Ionen in wässriger Lösung halten G.v. Hevesy und K. Kimura[7] die Formel $ZrO(H_2PO_4)_2$ für wahrscheinlich. In diesem Fall lässt sich $P_2O_5$ (formal) nicht auswaschen[6]. Das Zirkonyldihydrogenphosphat geht beim Glühen ebenfalls in Metaphosphat $ZrO(PO_3)_2$ über. Die gefundenen Rückstandsmengen bei CPM1C und CPM4C stimmen mit dem theoretischen Wert für $ZrO(PO_3)_2$ gut überein (CPM1-C: 14,8%/11,1%, CPM4-C. 15,9%/16,1 %).

[6] E. Wedekind, H. Wilke, Koll.-Z. 34 [1924] 283/9,284

[7] G.v.Hevesy, K. Kimura, Z.anorg.Ch. 38 [1925] 774/6; J. Am. Soc. 47 [1925] 2540/4

[8] J.H. De Boer, Z. Anorg. Ch. 144 [1925] 190/6

Die Referenzmembran CPM2 vergluht aufgrund fehlenden anorganischen Bestandteils, ohne einen Rückstand zu hinterlassen.

<u>Ionische Kapazität und der Spezifische Widerstand</u>

Die ionische Kapazität einer Membran wird bestimmt, indem ein Membranstuck m eine wässrige gesättigte NaCl-Lsg. eingelegt und konditioniert wird. Dabei findet ein Ionenaustausch statt, bei dem $Na^+$-Ionen in die Membran diffundieren, während $H^+$-Ionen aus ihr verdrängt werden Die nun in der Lösung vorliegenden Protonen werden mit NaOH bis zum Äquivalenzpunkt titriert Aus der verbrauchten NaOH-Menge lasst sich die direkte Ionenkapazität (IEC Dir.) berechnen Sie entspricht der Anzahl der m der Membran frei vorliegenden $H^+$-Ionen. Titriert man mit NaOH über, bricht man die vorhandenen ionischen Wechselwirkungen der Membran auf. Diesen Mehrverbrauch an NaOH, den man durch Rücktitration bestimmen kann, entspricht genau der Menge ionischer Wechselwirkungen und geht m die Gesamtionenkapazität (IEC Ges.) ein-.

Tabelle 3 zeigt die experimentell ermittelte und die theoretisch berechnete Ionenkapazität der Membranen CPM1, CPM2 und CPM4

Tab. 3: Ionenkapazität und Spez Widerstand

| | | IEC theo. Eq/g | | IEC exp Eq./g | | Spez. Widerstand Ω*cm |
|---|---|---|---|---|---|---|
| | | Dir | Ges | Dir. | Ges | |
| CPM1 | A* | 0,99 | **1,55** | 0,84 | **2,05** | 28,25 |
| | B | | | 1,05 | 2,21 | 26,42 |
| | C | 0,95 | 2,22 | 0,96 | 2,59 | 34,82 |
| CPM4 | A | **0,94** | **1,48** | **0,58** | **1,96** | 10,5 |
| | B | | | 0,63 | 2,62 | 19,4 |
| | C | 0,85 | 2,67 | 0,8 | 2,53 | 29,3 |
| CPM2 Referenz | | 1,06 | 1,64 | 0,96 | 1,52 | 39,6 |
| *A NaOH beh. , B: NaOH/$H_3PO_4$ beh., C. $H_3PO_4$ beh. | | | | | | |

Für die Berechnung der theoretischen Ionenkapazität der A-Reihe (NaOH-Nachbehandlung) wird gemäß Gl. (1) neben S-PEK und PBI Zirkondioxid in die Gesamtmassenbilanz einbezogen, und für die C-Reihe ($H_3PO_4$-Nachbehandlung) $ZrO(H_2PO_4)_2$ gemäß Gl (3). Darüber hinaus werden Protonen des Dihydrogenphosphats mit in die Gesamt-Ionenkapazität bilanziert. Auf die Berechnung für Membranen der B-Reihe (NaOH-$H_3PO_4$-Nachbehandlung) wird verzichtet, da nach Gl. (2) unklar ist, wie viel (formal) $P_2O_5$ ausgewaschen wird. Die IEC dieser Membranreihe müsse im

Bereich zwischen den IEC der A und C-Reihe liegen. Gute Übereinstimmung zwischen theoretischen und experimentell ermittelten IEC zeigen sowohl Membranen mit anorganischem Bestandteil (CPM1 und CPM4) als auch die ohne Zirkonverbindung enthaltende Referenzmembran (CPM2). Lediglich bei den mit NaOH nachbehandelten Membranen (A-Reihe) werden größere Abweichungen festgestellt. (fett hervorgehoben).

Auffällig ist die große Differenz zwischen $IEC_{dir.}$ und $IEC_{ges.}$ von CPM1-C und CPM4-C (ca.1,5 Eq./g) im Vergleich zur Referenzmembran (ca. 0,6 Eq./g).

Es wird darauf zurückgeführt, dass diese Membranen Zirkondihydrogenphosphat enthalten, welche ihre beiden Protonen erst im neutralen bis stark alkalischen Medium abgeben[9], und somit erst bei der Bestimmung der Gesamt-Ionenkapazität erfasst werden.

[9] Holleman, Wiberg, Lehrbuch der Anorganischen Chemie, 91.-100. [1985] 653

Diese durch das Dihydrogenphosphat zusätzlich zur Verfügung gestellten Protonen sollten den ionischen Widerstand der Membran stark herabsetzen. Der Widerstand der Membranen der C-Reihe sollte demnach kleiner sein als der der A- und B-Reihe. Die experimentellen Befunde zeigen jedoch ein umgekehrtes Bild.

Ursache dieser Diskrepanz liegt in der routinenmäßigen Probenvorbereitung zur Bestimmung der Membranimpedanz. Hierzu werden die Membranen in kleine Stücke (ca. 1,5cm x 1,5cm) geschnitten und in 1N $H_2SO_4$ konditionert. In diesem sauren Medium wird der spezifische Widerstand bestimmt.

Laut[10] entsteht aus einer Lösung von $ZrO_2$ und überschüssigem $H_2SO_4$ das Zirkonsulfat $Zr(SO_4)_2{*}4H_2O$. Dieses liegt in wässriger Lösung als eine komplexe Zirkoniumoxidschwefelsäure der Formel $H_2[ZrO(SO_4)_2]$ vor und dissozüert unter Freisetzung von Protonen entsprechend der Gleichung 4.

$$ZrO_2 + H_2SO_4 \longrightarrow Zr(SO_4)_2{*}4H_2O \xrightarrow{\text{wäßrig}} H_2[ZrO(SO_4)_2] \xrightarrow{\text{Diss.}} [ZrO(SO_4)_2]^{2-} + 2H^+ \qquad (4)$$

[10] Gmelin, Handbuch Syst. Nr. 42 [1958] 337

Vermutlich läuft dieselbe Reaktion in den Membranen der Reihe A und teilweise auch der Reihe B ab. In beiden Fällen ist die Schwefelsäure in der Membranmatrix eingebunden und bewirkt, dass der spezifische Widerstand stark abnimmt. Da $H_2SO_4$ eine starke Säure ist, ist der Effekt umso ausgeprägter.

Die experimentell ermittelte Membranimpedanz spiegelt insofern nicht den tatsächlichen ionischen Widerstand wider, da dieser durch die Anwesenheit der Schwefelsäure verfälscht wird.

Unklar ist, ob die durch die Dissoziation entstandenen Ionen in der Membran bleiben und den Zustand hoher Protonenleitfähigkeit aufrechterhalten, oder aber mit der Zeit ausgewaschen werden.

Das schwerlösliche Zirkondihydrogenphosphat in CPM1-C und CPM4-C bleibt von dieser Reaktion unberührt[10] [5]. Zwar existieren im Dihydrogenphosphat Protonen, doch sind sie im sauren Medium festgebunden und haben weniger Einfluss auf die Protonenleitfähigkeit als Zirkoniumoxidschwefelsäure.

Fest steht, Compositemembranen dieser Art haben einen kleineren ionischen Widerstand gegenüber einer rein organischen Membran.

<u>Zusammenfassung:</u>

1) Die Compositemembranen haben einen niedrigeren ionischen Widerstand als die Membran ohne anorganische Bestandteile

2) der spezifische Widerstand der A- und B-Reihe ist kleiner als die C-Reihe, aufgrund der Dissoziation des eingeschlossenen Zirkonsulfats. Unklar ist, ob die durch die Dissoziation entstandenen Ionen aus der Membran ausgewaschen werden.

3) Die Membranen der C-Reihe enthalten Zirkondihydrogenphosphat, welches die Gesamt-Ionenkapazität stark erhöht. Es wird angenommen, dass die Protonen des Dihydrogenphosphats teilweise zur Protonenleitfähigkeit beitragen. Dieser Effekt äußert sich durch einen niedrigeren spezifischen Widerstand gegenüber der Membran ohne anorganischen Bestandteil (CPM1C, CPM4C gegenüber CPM2).

4) Der hohe anorganische Anteil in CPM4 hält die Quellung über einen großen Temperaturbereich konstant.

<u>Anmerkung</u>

1) Optisches Aussehen der Membranen:

| | |
|---|---|
| a) S-PEK/Imidazol/PBI/$ZrOCl_2$*8$H_2O$: | klar, transparent |
| b) S-PEEK/Imidazol/PBI/$ZrOCl_2$*8$H_2O$: | klar, transparent |
| c) S-PSU/ $ZrOCl_2$*8$H_2O$ | trüb |
| d) PSU/ $ZrOCl_2$*8$H_2O$ | trüb |

2) $ZrOCl_2$*8$H_2O$-DMSO-Lösung kristallisiert mit der Zeit aus. Wiederholungsversuche zur Membranherstellung, bei denen die über den Bodensatz befindliche Lösung eingesetzt wurde, zeigen dass die Membranen kein Zirkon und Phosphor enthalten (laut WDX-Methode) und thermogravimetrisch keinen Rückstand hinterlassen. Aus diesem Grund sollte die Lösung immer frisch angesetzt werden.

3) Mechanische Stabilität:

Wie mittels sensorischer Prüfung festgestellt werden konnte, sind Compositemembranen, besonders im System Polyetherketon, sehr stabil. Es sind über einen weiten Mischungsbereich keine signifikanten Nachteile gegenüber rein organischen Membranen erkennbar. Lediglich CPM4, die einen erhöhten Anteil an Zirkonverbindung enthält, zeigt größere Sprödigkeit gegenüber CPM1.

*2. Compositemembranen durch nachträglichen IonenaustauschlAusfällung in vorgeformten Arylhauptkettenpolymerblendmembranen*

**Untersuchte Membranen:**

| Membran [Nr.] | Typ | Zusammensetzung [g] | $R_{sp}^{H+}$ (0,5N HCl) [Ω*cm][b] |
|---|---|---|---|
| 1025 H | Kovalent vernetzt[c] | 4,066 PEK$(SO_3H)_{0,4}$[e]<br>1,8 PSU$(SO_2Li)$[f] | 53,7 |
| 1025 I | Kovalent vernetzt | 4,066 PEK$(SO_3H)_{0,4}$[e]<br>1,8 PSU$(SO_2Li)$[f] | 27 |
| 1030 C | Kovalent vernetzt | 2 PEEK$(SO_3H)_1$[g]<br>2,3 PSU$(SO_2Li)$[f] | 35,9 |
| 810H | Ionisch vernetzt[d] | 4,5 PEK$(SO_3H)_{0,4}$ 0.3 PBI[h]<br>0.3 PSU-[C(OH)(4-Diethylaminophenyl)$_2$][i] | 27,2 |

[a] Impedanz, gemessen zwischen 2 Nafion®117 Membranen in Wasser
[b] Impedanz, gemessen zwischen 2 Nafion®117 Membranen in 0,5N HCl
[c] Vernetzung durch Alkylierung von Sulfinatgruppen mit 1,4-Diiodbutanl[11]
[11] Jochen Kerres, Wei Cui, Martin Junginger, J. Memb. Sci. 139, 227-241 (1998)
[d] Ionische Vernetzung durch Protonentransfer von $SO_3H$-Gruppe auf basischen Imidazol-N
[e] sulfonierter Poly(etherketon) Victrex®
[f] sulfiniertes PSU, hergestellt durch Reaktion von lithiiertem PSU mit $SO_2$[12]
[12] J. Kerres, W. Cui, S. Reichle, J. Polym. Sci.: Part A: Polym. Chem. 34, 2421-2438 (1996)
[g] sulfoniertes Poly(etheretherketon) Victrex®
[h] Polybenzimidazol Celazol®
[i] herstellbar durch Reaktion von lithiiertem PSU mit Bis(diethylamino)benzophenon[13]
[13] J. Kerres, A. Ullrich, M. Hein, J. Polym. Sci.: Part A: Polym. Chem. 39, 2874-2888 (2001)

**Herstellung der Nachbehandlungs-Lösung:**

1. $ZrOCl_2$ wird in folgenden Gemischen zu einer lmolaren Lösung aufgelöst:

Mischung 1: Wasser/NMP 70/30
Mischung 2: Wasser/NMP 50/50
Mischung 3: Wasser/NMP 30/70

2. 10%ige Phosphorsäure wird hergestellt durch Mischen von 85%iger Phosphorsäure mit Wasser

**Membran-Nachbehandlung:**

1. Die Membranen werden bei Raumtemperatur für 24h in die entsprechende 1M $ZrOCl_2$-Lösung eingelegt, um die $H^+$-Ionen der Sulfonsäuregruppen gegen $ZrO^{2+}$-Ionen auszutauschen.
2. Die Membranen werden bei Raumtemperatur für 24h in vollentsalztes Wasser eingelegt, um alles überschüssige $ZrOCl_2$ aus der Membranmatrix zu entfernen.
3. Die Membranen werden bei Raumtemperatur für 24h in 10%ige Phosphorsäure eingelegt, um in der Membranmatrix $Zr_3(PO_4)_4$ auszufällen.
4. Die Membranen werden für 24h in vollentsalztes Wasser eingelegt, um überschüssige Phosphorsäure aus der Membranmatrix zu entfernen.

**Ergebnisse der Ermittlung des Widerstands der Membranen mit der jeweiligen Nachbehandlung:**

| Membran | $R_{sp}^{H+}$ (0,5N HCl) Referenz [Ω*cm] | $R_{sp}^{H+}$ (0,5N HCl) Mischung 1 [Ω*cm] | $R_{sp}^{H+}$ (0,5N HCl) Mischung 2 [C2*cm] | $R_{sp}^{H+}$ (0,5N HCl) Mischung 3 [Ω*cm] |
|---|---|---|---|---|
| 810 H | 53,7 | 24,4 | 15,35 | 8,07 |
| 1025 I | 27 | 49,5 | 6,62 | 8,48 |
| 1025 H | 27,2 | 51,3 | 27,3 | 5 |
| 1030 C | 35,9 | 33,03 | 48,12 | 10,2 |

Aus der Tabelle kann ersehen werden, dass (von Ausreißern abgesehen) der Widerstand der Membranen mit steigendem Anteil an NMP in der Imolaren $ZrOCl_2$-Lösung abnimmt. Die Ausreißer können daher rühren, dass die Membrannachbehandlung bei Raumtemperatur durchgeführt wurde, wodurch die Zugänglichkeit der Membran für die Ionenaustausch- und Ausfällungsreaktion limitiert sein könnte.

*3. Compositemembranen durch nachträglichen Ionenaustausch/Ausfällung in vorgeformten binären Arylhauptkettenpolymerblendmembranen, in die vor der Membranherstellung ein Zirkonphosphat "ZrP" als nanoskaliges Pulver eingemischt worden war*

**a Herstellung von Compositemembranen durch Einmischung von ZrP-Pulver in Polymerlösungen, enthaltend ein saures Polymer (sPEK) und ein basisches Polymer (PBI)**

Die Polymerlösungen werden in den in der Tabelle angegebenen Mischungsverhältnissen hergestellt. Danach wird das anorganische "ZrP" Pulver zur Polymerlösung hinzugegeben.

| Name | SPEKH* (IEC = 1,8) /g | PBI** g | sPEKH Lsg. (15%) | PBI Lsg (12,1%) | Propyl-amin | Anorg. Komponente/g | Gewichts prozent |
|---|---|---|---|---|---|---|---|
| **ZrP 1a** | 2,25 | 0,15 | 15 | 1,25 | 1,5 | ZrP*** 0,12 | 5 |
| **ZrP 1b** | 2,25 | 0,15 | 15 | 1,25 | 1,5 | ZrP 0,24 | 10 |
| **ZrP 1c** | 2,25 | 0,15 | 15 | 1,25 | 1,5 | ZrP 0,48 | 20 |

(fortgesetzt)

| Name | SPEKH* (IEC = 1,8) /g | PBI** g | sPEKH Lsg. (15%) | PBI Lsg (12,1%) | Propyl-amin | Anorg. Komponente/g | Gewichts prozent |
|---|---|---|---|---|---|---|---|
| **ZrP 1d** | 2,25 | 0,15 | 15 | 1,25 | 1,5 | ZrP 0,72 | 30 |

* sulfoniertes Polyetherketon (Hersteller: Victrex), IEC=1,8 meq $SO_3H/g$
** Polybenzimidazol Celazol (Hersteller: Celanese)
*** ZrP: feindisperses Zirkonschichtphosphat, hergestellt durch Ausfällung aus $ZrOCl_2$, aus der Arbeitsgruppe von Prof. Linkov, University of the Western Cape, Südafrika

(30 g Lsg für 2 Membranen) auf einer Platte

| | |
|---|---|
| 4,5 g sPEKH (IEC = 1,8) | 30 g Lsg (15%) |
| 3 ml Propylamin | |
| 0,3 g PBI (10%) | 3 g Lsg (10%) |

Alle Lösungen werden vor dem Membranziehen auf dem Magnetrührer erwärmt und warm verarbeitet!

**800 μm-Rakel, je 2 Membranen pro Glasplatte, 2 h bei 130 °C/800 mbar, dann Vakuum 2h/130 °C, in $H_2O$ ablösen, 2 d mit 10 % HCl bei 90 °C nachbehandeln, neutral waschen und 1 d bei 60 °C in $H_2O$ nachbehandeln.**

Die sensorische Kontrolle der Membranen ergibt:

| Name | Aussehen | Homogenität | Stabilität |
|---|---|---|---|
| **ZrP 1a** | braun, leicht trüb | schwach inhomogen | gut |
| **ZrP 1b** | braun, leicht trüb | schwach inhomogen | gut |
| **ZrP 1c** | braun, leicht trüb | schwach inhomogen | mittel |
| **ZrP 1d** | braun, leicht trüb | schwach inhomogen | mittel |

**b Änderung der Membran-Leitfähigkeit durch nachträglichen Einbau von Zirkonverbindungen**

Teilstücke der Membranen werden 24 h bei 60 °C in einer Lösung von 30 % NMP / 70 % $H_2O$ aufgequollen. Die so behandelten Membranen werden in eine 1 M $ZrOCl_2$ eingelegt und erneut 24 h bei 60 °C behandelt, um die $H^+$ - Ionen der Sulfonsäuregruppen gegen $Zr^{4+}$ auszutauschen. Die Membranen werden mit $H_2O$ ausgewaschen und anschließend in 2 gleiche große Stücke (A + B) zerschnitten. Die Membranen A werden in einer 10 % $H_3PO_4$-Lsg 24 h bei 60 °C behandelt (Spalte "H" in Tabelle), die Membranen B entsprechend in 10 % NaOH (Spalte "N" in Tabelle). Die Stücke werden wieder mit $H_2O$ ausgewaschen und 24 h bei 60 °C mit 10 % HCl erhitzt, um sie in die $SO_3H$-Form zu überführen. Nach dem Auswaschen mit $H_2O$ werden kleine Stücke abgeschnitten; an ihnen wird die Quellung (25-, 40-, 60- und 90 °C), Leitfähigkeit (nur in HCl) und IEC gemessen. Die weiteren Membranstücke werden wiederum in $ZrOCl_2$ bei 60 °C für 24 h eingelegt, dann Behandlung analog zu erstem Durchgang.

"0" bedeutet: jeweilige Eigenschaft der Membran vor der $ZrOCl_2$-$H_3PO_4$- oder $ZrOCl_2$-NaOH-Nachbehandlung
"1" bedeutet: jeweilige Eigenschaft der Membran nach der 1. $ZrOCl_2$-$H_3PO_4$- oder $ZrOCl_2$-NaOH-Nachbehandlung
"2" bedeutet: jeweilige Eigenschaft der Membran nach der 2. $ZrOCl_2$-$H_3PO_4$- oder $ZrOCl_2$-NaOH-Nachbehandlung

| **$Zr_3(PO_4)_4$** | ZrP 1 a | ZrP 1 b | ZrP 1 c | ZrP 1 d |
|---|---|---|---|---|
| Quellung 0 25 °C | 39,36 [%] | 35,14 | 35,48 | 31,03 |
| Quellung 0 40 °C | 43,62 | 40,54 | 35,48 | 34,48 |
| Quellung 0 60 °C | 47,87 | 44,16 | 43,01 | 35,63 |
| Quellung 0 90 °C | 104,26 | 98,20 | 92,47 | 81,61 |

(fortgesetzt)

| $Zr_3(PO_4)_4$ | ZrP 1 a | | ZrP 1 b | | ZrP 1 c | | ZrP 1 d | |
|---|---|---|---|---|---|---|---|---|
| Spez. Widerstand 0 [HCl] | 7,79 [Ohm cm] (78) | | 9,35 (67) | | 6,86 (70) | | 9,11 (73) | |
| IEC direkt | 1,25 | | 1,28 | | 1,29 | | 1,27 | |
| IEC gesamt | 1,80 | | 2,02 | | 2,17 | | 2,37 | |
| Quellung 1 25 °C | 44,66 | 54,24 | 44,93 | 54,0 | 43,10 | 46,0 | 41,44 | 44,0 |
| Quellung 1 40 °C | 48,54 | 59,32 | 45,65 | 56,0 | 44,83 | 56,0 | 44,14 | 56,0 |
| Quellung 1 60 °C | 48,54 | 66,10 | 45,65 | 62,0 | 45,69 | 58,0 | 44,14 | 62,0 |
| Quellung 1 90 °C | 48,54 | 98,31 | 47,10 | 98,0 | 45,69 | 88,0 | 44,14 | 90,0 |
| Spez. Widerstand 1 | 16,99 | 7,32 | 15,27 | 9,75 | 15,06 | 6,69 | 10,69 | 7,68 |
| IEC direkt | 0,40 | / | 0,38 | 1,30 | 0,35 | 1,18 | 0,38 | 1,30 |
| IEC gesamt | 3,87 | / | 2,75 | 2,28 | 2,62 | 1,97 | 2,95 | 2,04 |
| Quellung 2 25 °C | 42,03 | 43,88 | 41,94 | 44,32 | 38,33 | 45,0 | / | 47,27 |
| Quellung 2 40 °C | 42,03 | 48,98 | 41,94 | 48,86 | 43,33 | 51,0 | / | 50,91 |
| Quellung 2 60 °C | 43,48 | 50,0 | 41,94 | 48,86 | 45,0 | 51,0 | / | 56,36 |
| Quellung 2 90 °C | 43,48 | 54,08 | 43,55 | 61,36 | 45,0 | 61,0 | / | 69,09 |
| Spez. Widerstand 2 | 14,47 | 10,39 | 14,82 | 6,48 | 11,27 | 23,21 | 14,32 | 7,01 |
| IEC direkt | 1,71 | 0,08 | 1,97 | 0,07 | 1,82 | 0,09 | 1,76 | 0,08 |
| IRC gesamt | 5,13 | 0,25 | 5,83 | 0,21 | 5,20 | 0,17 | 5,88 | 0,17 |
| H | N | H | N | H | N | H | N | |

*4. Compositemembranen durch nachträglichen Ionenaustausch/Ausfällung in vorgeformten ternären Arylhauptkettenpolymerblendmembranen, in die vor der Membranherstellung ein Zirkonphosphat "ZrP" als nanoskaliges Pulver eingemischt worden war*

**a Herstellung von Compositemembranen durch Einmischung von ZrP-Pulver in Polymerlösungen, enthaltend ein saures Polymer (sPEK) und zwei basische Polymere (PBI und PSU-*ortho*-Sulfon-(C(OH)(4-diethylaminophenyl)$_2$)**

Die Polymerlösungen werden in den in der Tabelle angegebenen Mischungsverhältnissen hergestellt. Danach wird das anorganische "ZrP" Pulver zur Polymerlösung hinzugegeben.

| Name | sPEKH*/g | PBI /g | sPEKH Lsg. (15%) /g | PBI Lsg (11,47%) /g | PropylAmin /ml | Anorg. Komponente/ g | wt% in Membran | A1105 (15%) **** |
|---|---|---|---|---|---|---|---|---|
| **ZrP 2a** | 2,25 | 0,15 | 15 | 1,31 | 1,5 | ZrP*** 0,12 | 5 | 1 |
| **ZrP 2b** | 2,25 | 0,15 | 15 | 1,31 | 1,5 | ZrP 0,24 | 10 | 1 |
| **ZrP 2c** | 2,25 | 0,15 | 15 | 1,31 | 1,5 | ZrP 0,48 | 20 | 1 |
| **ZrP 2d** | 2,25 | 0,15 | 15 | 1,31 | 1,5 | ZrP 0,72 | 30 | 1 |

* sulfoniertes Polyetherketon (Hersteller: Victrex), IEC=1,8 meq $SO_3H$/g
** Polybenzimidazol Celazol (Hersteller: Celanese)
*** ZrP: feindisperses Zirkonschichtphosphat, hergestellt durch Ausfällung aus $ZrOCl_2$, aus der Arbeitsgruppe von Prof. Linkov, University of the Western Cape, Südafrika
**** Strukturformel:

*Zusammensetzung der Standardmembran 504 (ohne ZrP):*

| Name | sPEKH(IEC = 1,8) /g | PBI g | sPEKH Lsg.(15%) | PBI Lsg (11,47%) | Propylamin | A 1105 (15%) |
|---|---|---|---|---|---|---|
| St 1a | 2,25 | 0,15 | 15 | 1,31 | 1,5 | 1 |
| St 1b | 2,25 | 0,15 | 15 | 1,31 | 1,5 | 1 |

(30 g Lsg für 2 Membranen) auf einer Platte

| | |
|---|---|
| 4,5 g sPEKH (IEC = 1,8) | 30 g Lsg (15%) |
| 3 ml Propylamin | |
| 0,3 g PBI (11,47%) | 2,61 g Lsg (10%) |

alle Lösungen werden vor dem Membranziehen auf dem Magnetrührer erwärmt und warm verarbeitet!

**60-Rakel, je 2 Membranen pro Glasplatte, 2 h bei 130 °C/800 mbar, dann Vakuum 2h/130 °C, in $H_2O$ ablösen, 2 d mit 10 % HCl bei 90 °C nachbehandeln, neutral waschen und 1 d bei 60 °C in $H_2O$ nachbehandeln.**

Die sensorische Kontrolle der Membranen ergibt:

| Name | Aussehen | Homogenität | Stabilität |
|---|---|---|---|
| ZrP 2a | hellbraun, leicht trüb | homogen | gut |
| ZrP 2b | hellbraun, leicht trüb | homogen | mittel |
| ZrP 2c | hellbraun, leicht trüb | homogen | schlecht |
| ZrP 2d | hellbraun, leicht trüb | homogen | schlecht |
| St 1a | grün, durchsichtig | homogen | sehr gut |
| St 1b | grün, durchsichtig | homogen | sehr gut |

**b Änderung der Membran-Leitfähigkeit durch nachträglichen Einbau von Zirkonphosphat**

Teilstücke der Membranen werden 24 h bei 60 °C in einer Lösung von 30 % NMP / 70 % $H_2O$ aufgequollen. Die so behandelten Membranen werden in eine 1 M $ZrOCl_2$ eingelegt und erneut 24 h bei 60 °C behandelt, um die $H^+$ - Ionen der Sulfonsäuregruppen gegen $Zr^{4+}$ auszutauschen. Die Membranen werden mit $H_2O$ ausgewaschen Die Membranen werden in einer 10 % $H_3PO_4$-Lsg 24 h bei 60 °C behandelt. Die Stücke werden wieder mit $H_2O$ ausgewaschen und 48 h bei 90 °C mit 10 % HCl erhitzt, um sie in die $SO_3H$-Form zu überführen. Nach dem Auswaschen mit $H_2O$ werden kleine Stücke abgeschnitten; an ihnen wird die Quellung (25-, 40-,60- und 90 °C), Leitfähigkeit (nur in HCl) und IEC gemessen.

"0" bedeutet: jeweilige Eigenschaft der Membran vor der $ZrOCl_2$-$H_3PO_4$-(Spalte H in Tabelle) oder $ZrOCl_2$-NaOH-Nachbehandlung (Spalte N in Tabelle)

"1" bedeutet: jeweilige Eigenschaft der Membran nach der 1. $ZrOCl_2$-$H_3PO_4$- oder $ZrOCl_2$-NaOH-Nachbehandlung

| **A 504 Stand. 1** | St 1a | **A 504 Stand. 2** | St 1b |
|---|---|---|---|
| Quellung 0 25 °C | 25,40 [%] | Quellung 0 25 °C, | 22,55 [%] |
| Quellung 0 40 °C | 26,98 | Quellung 0 40 °C | 23,53 |
| Quellung 0 60 °C | 30,16 | Quellung 0 60 °C | 24,51 |
| Quellung 0 90 °C | 45,24 | Quellung 0 90 °C | 38,24 |
| Spez. Widerstand 0 [HCl] | 41,42[Ohm˙cm] (53) | Spez. Widerstand 0 [HCl] | 43,88[Ohm˙cm] (40) |

(fortgesetzt)

| **A 504 Stand. 1** | St 1a | **A 504 Stand. 2** | St 1b |
|---|---|---|---|
| IEC direkt | 1,17 | IEC direkt | 1,14 |
| IEC gesamt | 1,59 | IEC gesamt | 1,74 |

| **$Zr_3(PO_4)_4$** | ZrP 2a | | ZrP 2b | | ZrP 2c | | ZrP 2d | |
|---|---|---|---|---|---|---|---|---|
| | | | | | | | | |
| Quellung 0 25 °C | 26,94 [%] | | 23,21 | | 26,14 | | 22,45 | |
| Quellung 0 40 °C | 30,05 | | 26,79 | | 29,55 | | 26,53 | |
| Quellung 0 60 °C | 30,57 | | 28,57 | | 32,95 | | 34,69 | |
| Quellung 0 90 °C | 47,15 | | 39,29 | | 45,45 | | 38,78 | |
| Spez. Widerstand 0 [HCl] | 52,50 [Ohm cm] (50) | | 40,87 (63) | | 48,16 (56) | | 45,23 (66) | |
| IEC direkt | 1,14 | | 1,13 | | 1,18 | | 1,06 | |
| IEC gesamt | 1,88 | | 2,15 | | 2,42 | | 1,59 | |
| Quellung 1 25 °C | / | / | 61,34 | / | 45,83 | / | / | / |
| Quellung 1 40 °C | / | / | 89,08 | / | 45,83 | / | / | / |
| Quellung 1 60 °C | / | / | 89,08 | / | 45,83 | / | / | / |
| Quellung 1 90 °C | / | / | 89,08 | / | 45,83 | / | / | / |
| Spez. Widerstand 1 | / | / | 87,61 | / | 151,29 | / | / | / |
| IEC direkt | / | / | 1,32 | / | 1,40 | / | / | / |
| IEC gesamt | / | / | 3,50 | / | 4,03 | / | / | / |
| | H | N | H | N | H | N | H | N |

*5. Compositemembranen durch nachträglichen Ionenaustausch/Ausfällung in vorgeformten ionisch und/oder kovalent vernetzten Arylhauptkettenpolymerblendmembranen*

**5.1 Membranherstellung**

5.1.1 Membran 1202

Folgende Polymere werden als 15 Gew%ige Lösungen in N-Methylpyrrolidinon (NMP) zusammengemischt:

- 4,222 g sulfochloriertes PEKEKK Ultrapek (IEC=3 meq $SO_3H$/g Polymer (hydrolysiert))
- 5,52 g PSU-$SO_2Li$ (1 Gruppe pro Wiederholungseinheit)

Nach der Homogenisierung werden 0,7 ml Diiodbutan in die Polymerlösung eingespritzt. Danach wird die Polymerlösung auf einer Glasplatte mit einer Rakel zu einem dünnen Polymerfilm ausgestrichen. Das Lösungsmittel wird nach folgender Methode in einem Vakuumtrockenschrank abgedampft:

1) 2 Stunden bei 90°C und 800 mbar
2) 3 Stunden bei 130°C und 150-50 mbar

Danach wird die Glasplatte mit der Membran dem Vakuumschrank entnommen und nach Abkühlung in ein Wasserbad eingelegt. Dabei löst sich die Membran von der Glasplatte ab. Die Membran wird folgendermaßen nachbehandelt:

1) 48 h bei 25°C in 10% NaOH

2) 48 h bei 90°C in 7% HCl
3) 48 h bei 60°C in $H_2O$

Danach erfolgt die Membrancharakterisierung

5.1.2 Membran 1203

Folgende Polymere werden als 15 Gew%ige Lösungen in N-Methylpyrrolidinon (NMP) zusammengemischt:

- 4,222 g sulfochloriertes $PSU(SO_2Cl)_2$ (IEC=3 meq $SO_3H$/g Polymer (hydrolysiert))
- 5,52 g PSU-$SO_2$Li (1 Gruppe pro Wiederholungseinheit)

Nach der Homogenisierung werden 0,7 ml Diiodbutan in die Polymerlösung eingespritzt. Danach wird die Polymerlösung auf einer Glasplatte mit einer Rakel zu einem dünnen Polymerfilm ausgestrichen. Das Lösungsmittel wird nach folgender Methode in einem Vakuumtrockenschrank abgedampft:

1) 2 Stunden bei 90°C und 800 mbar
2) 3 Stunden bei 130°C und 150-50 mbar

Danach wird die Glasplatte mit der Membran dem Vakuumschrank entnommen und nach Abkühlung in ein Wasserbad eingelegt. Dabei löst sich die Membran von der Glasplatte ab. Die Membran wird folgendermaßen nachbehandelt:

1) 48 h bei 25°C in 10% NaOH
2) 48 h bei 90°C in 7% HCl
3) 48 h bei 60°C in $H_2O$

Danach erfolgt die Membrancharakterisierung

5.1.3 Membran 1204

Zuerst werden 4 g sulfoniertes PEKEKK zu einer 15 Gew%igen Lösung in NMP gelöst, danach werden 1,95 g Carbonyldiimidazol zur Lösung hinzugefügt, um die $SO_3H$-Gruppen zu maskieren. Danach werden 1,95 g PSU-orthosulfon(C(OH)$CH_3$(4-Pyridyl))$_{1,5}$ als 15 Gew%ige Lösung zur Reaktionsmischung hinzugefügt.

Nach der Homogenisierung wird die Polymerlösung auf einer Glasplatte mit einer Rakel zu einem dünnen Polymerfilm ausgestrichen. Das Lösungsmittel wird nach folgender Methode in einem Vakuumtrockenschrank abgedampft:

1) 2 Stunden bei 90°C und 800 mbar
2) 3 Stunden bei 130°C und 150-50 mbar

Danach wird die Glasplatte mit der Membran dem Vakuumschrank entnommen und nach Abkühlung in ein Wasserbad eingelegt. Dabei löst sich die Membran von der Glasplatte ab. Die Membran wird folgendermaßen nachbehandelt:

1) 48 h bei 25°C in 10% NaOH
2) 48 h bei 90°C in 7% HCl
3) 48 h bei 60°C in $H_2O$

Danach erfolgt die Membrancharakterisierung

5.1.4 Membran 1205

Zuerst werden 4 g sulfoniertes PEKEKK zu einer 15 Gew%igen Lösung in NMP gelöst, danach werden 1,95 g Carbonyldiimidazol zur Lösung hinzugefügt, um die $SO_3H$-Gruppen zu maskieren. Danach werden 0,918 g PSU-orthosulfon(C(OH)$CH_3$(4-Pyridyl))$_{1,5}$ als 15 Gew%ige Lösung zur Reaktionsmischung hinzugefügt. Danach addiert man noch 2,6 g PSU($SO_2$Li) (1Gruppe pro Wiederholungseinheit) zur Lösung, und schließlich werden in die Reaktionsmischung noch 0,48 ml 1,4-Diiodbutan eingespritzt.

Nach der Homogenisierung wird die Polymerlösung auf einer Glasplatte mit einer Rakel zu einem dünnen Polymerfilm ausgestrichen. Das Lösungsmittel wird nach folgender Methode in einem Vakuumtrockenschrank abgedampft:

1) 2 Stunden bei 90°C und 800 mbar
2) 3 Stunden bei 130°C und 150-50 mbar

Danach wird die Glasplatte mit der Membran dem Vakuumschrank entnommen und nach Abkühlung in ein Wasserbad eingelegt. Dabei löst sich die Membran von der Glasplatte ab. Die Membran wird folgendermaßen nachbehandelt:

1) 48 h bei 25°C in 10% NaOH
2) 48 h bei 90°C in 7% HCl
3) 48 h bei 60°C in $H_2O$

Danach erfolgt die Membrancharakterisierung.

5.1.5 Membran 504

Zuerst werden 4,5 g sulfoniertes PEK (IEC=1,8 meq/g) zu einer 15 Gew%igen Lösung in NMP gelöst, danach werden 3 ml n-Propylamin zur Lösung hinzugefügt, um die $SO_3H$-Gruppen zu neutralisieren. Danach werden 0,3 g PSU-ortho-sulfon(C(OH)(4-Diethylaminophenyl)$_2$ als 15 Gew%ige Lösung zur Reaktionsmischung hinzugefügt. Danach addiert man noch 0,3 g Polybenzimidazol PBI Celazol® als 8,755 Gew%ige Lösung zur Lösung.

Nach der Homogenisierung wird die Polymerlösung auf einer Glasplatte mit einer Rakel zu einem dünnen Polymerfilm ausgestrichen. Das Lösungsmittel wird nach folgender Methode in einem Vakuumtrockenschrank abgedampft:

1) 2 Stunden bei 90°C und 800 mbar
2) 3 Stunden bei 130°C und 150-50 mbar

Danach wird die Glasplatte mit der Membran dem Vakuumschrank entnommen und nach Abkühlung in ein Wasserbad eingelegt. Dabei löst sich die Membran von der Glasplatte ab. Die Membran wird folgendermaßen nachbehandelt:

1) 48 h bei 25°C in 10% NaOH
2) 48 h bei 90°C in 7% HCl
3) 48 h bei 60°C in $H_2O$

Danach erfolgt die Membrancharakterisierung.

**5.2 Membrannachbehandlung mit $ZrOCl_2$-$H_3PO_4$**

5.2.1 1. Zyklus

Die Membranen werden 2 Tage bei 60°C in eine 1M $ZrOCl_2$-Lösung eingelegt. Danach werden die Membranen 2 Tage bei 60°C in Wasser, dann 2 Tage bei 60°C in 10%ige $H_3PO_4$, und schließlich 2 Tage in Wasser eingelegt.

5.2.2 2. Zyklus

Die Membranen werden 3 Tage bei 60°C in eine 1M $ZrOCl_2$-Lösung eingelegt. Danach werden die Membranen 2 Tage bei 60°C in Wasser, dann 2 Tage bei 60°C in 10%ige $H_3PO_4$, und schließlich 2 Tage in Wasser eingelegt.

5.2.3 3. Zyklus

Die Membranen werden 3 Tage bei 60°C in eine 1M $ZrOCh_2$-Lösung eingelegt. Danach werden die Membranen 2 Tage bei 60°C in Wasser, dann 2 Tage bei 60°C in 10%ige $H_3PO_4$, und schließlich 2 Tage in Wasser eingelegt.

### 5.3 Membrancharakterisierung

In der folgenden Tabelle sind die Charakterisierungsergebnisse der Membranen aufgelistet. Dabei bedeutet "2d" die Charakterisierungsergebnisse nach dem ersten Nachbehandlungszyklus mit $ZrOCl_2$-$H_3PO_4$, "5d" die Charakterisierungsergebnisse nach dem zweiten Nachbehandlungszyklus mit $ZrOCl_2$-$H_3PO_4$, und "8d" die Charakterisierungsergebnisse nach dem dritten Nachbehandlungszyklus mit $ZrOCl_2$-$H_3PO_4$.

| Membran | IEC[14] | $R_{sp}^{H+}$[15] | SW[16] | IEC(gesamt)[17] |
|---|---|---|---|---|
| [Nr.] | [meq/g] | [Ω*cm] | [%] | [meq/g] |
| **1203-1b** | 0,905 | 63,29 | 34,54 | 0,905 |
| 2d | 0,97 | 38,64 | 19,15 | 1,53 |
| 5d | 0,99 | 38,4 | 17,56 | 1,36 |
| 8d | 1,07 | 43,05 | 17,58 | 2,05 |
| | | | | |
| **1202-2b** | 1,174 | 3,51 | 43,85 | 1,174 |
| 2d | 1,32 | 23,32 | 30,4 | 2,61 |
| 5d | 1,3 | 23,94 | 26,09 | 2,45 |
| d | 1,3 | 24,53 | 25,93 | 2,42* |
| | | | | |
| 1204 | 1,08 | 13,44 | 111,83 | |
| 2d | 1,41 | 6,77 | 74,69 | 3,79 |
| 5d | 1,51 | 9,12 | 51,74 | 3,67 |
| 8d | 1,41 | 11,81 | 37,7 | 2,73* |
| Membran | IEC | $R_{sp}^{H+}$ | SW | IEC(gesamt) |
| [Nr.] | [meq/g] | [Ω*cm] | [%] | [meq/g] |
| | | | | |
| **1205** | 1,295 | 10,04 | 68,89 | 1,37 |
| 2d | 1,04 | 10,11 | 67,73 | 2,42 |
| 5d | 1,04 | 13,04 | 23,88 | 2,35 |
| 8d | 1,13 | 24,73 | 19,68 | 2,23* |
| | | | | |
| **A504** | 1,5 | 18,57 | 32,28 | 1,93 |
| 2d | 1,37 | 12,17 | 35,62 | 2,6 |
| 5d | 1,57 | 10 | 36,36 | 2,84 |
| 8d | 1,45 | 11,12 | 35,64 | 3,64 |

[14] Direkttitration mit 0,1 N NaOH
[15] spezifischer Widerstand, gemessen via Impedanzspektroskopie in 0,5 N HCl
[16] Wasseraufnahme (Quellung) bei 25°C, bestimmt via SW= $((m_{naß}-m_{trocken})/m_{trocken})*100$
[17] Rücktitration: zuerst mit Überschuss an 0,1 N NaOH versetzen, dann mit 0,1 N HCl zurücktitrieren

In den folgenden Abbildungen wird die Quellung (Wasseraufnahme) der Membranen 1202 (Abb. 5), 1203 (Abb.

6), 1204 (Abb. 7), 1205 (Abb. 8) und 504 (Abb. 9) in Abhängigkeit von T ohne Nachbehandlung mit $ZrOCl_2$-$H_3PO_4$, nach dem 1. Zyklus der Nachbehandlung mit $ZrOCl_2$-$H_3PO_4$ ("2 days"), nach dem 2. Zyklus der Nachbehandlung mit $ZrOCl_2$-$H_3PO_4$ ("5 days"), und nach dem 3. Zyklus der Nachbehandlung mit $ZrOCl_2$-$H_3PO_4$ ("8 days") gezeigt. Man siehr aus den Abbildungen, dass die Nachbehandlung mit $ZrOCl_2$-$H_3PO_4$ zu einem starken Rückgang der Wasseraufnahme und zum Teil sogar zu einer Verbesserung der Protonenleitfähigkeit der Membranen führt. Dies war so nicht vorauszusehen und ist damit überraschend.

**Zitierte Nichtpatentliteratur**

[2] C. Yang, et al., Electrochem. Solid St. Lett. 4(4) A31-A34 (2001)
[3] Jochen Kerres, Deutsche Patentanmeldung 10021106 vom 2.5.2000
[4] Jochen Kerres, Thomas Häring, Deutsche Patentanmeldung 10021104 vom 2.5.2000
[5] S. M. J. Zaidi, S. D. Mikhailenko, G. P. Robertson, M. D. Guiver, S. Kaliaguine, J. Memb. Sci. 173, 17-34 (2000)
[6] E. Wedekind, H. Wilke, Koll.-Z. 34 [1924] 283/9,284
[7] G.v.Hevesy, K. Kimura, Z.anorg.Ch. 38 [1925] 774/6; J. Am. Soc. 47 [1925] 2540/4
[8] J.H. De Boer, Z. Anorg. Ch. 144 [1925] 190/6
[9] Holleman, Wiberg, Lehrbuch der Anorganischen Chemie, 91.-100. [1985] 653
[10] Gmelin, Handbuch Syst. Nr. 42 [1958] 337
[11] Jochen Kerres, Wei Cui, Martin Junginger, J. Memb. Sci. 139, 227-241 (1998)
[12] J. Kerres, W. Cui, S. Reichle, J. Polym. Sci.: Part A: Polym. Chem. 34, 2421-2438 (1996)
[13] J. Kerres, A. Ullrich, M. Hein, J. Polym. Sci.: Part A: Polym. Chem. 39, 2874-2888 (2001)


**Patentansprüche**

**1.** Ionisch vernetzte Kompositmembran, bestehend aus:

a) einem Polymer A mit wenigstens Kationenaustauschergruppierungen oder deren nichtionischen Vorstufen;
und
einem Polymer B mit wenigstens Anionenaustauschergruppen und/oder N-basischen Gruppen;
und
einem anorganischen Salz und/oder Oxid und/oder Hydroxid, das durch einen Hydrolyse- und/oder Fällungsprozess in der Membranmatrix ausgefällt worden war; und
einer Heteropolysäure oder einer Polysäure oder deren Alkalimetallsalzen; und
einem feinen, gegebenenfalls nanoskaligen schwerlöslichen Salz-, Oxid- oder Hydroxidpulver, das in Pulverform der Polymerlösung zugesetzt worden war;
oder
b) einem Polymer D1 mit Kationenaustauschergruppierungen oder deren nichtionischen Vorstufen und Anionenaustauscher- und/oder anderen N-basischen Gruppen;
und
einem Polymer B mit wenigstens Anionenaustauschergruppen und/oder N-basischen Gruppen;
und
einem anorganischen Salz und/oder Oxid und/oder Hydroxid, das durch einen Hydrolyse und/oder Fällungsprozess in der Membranmatrix ausgefällt worden war;
und
einer Heteropolysäure oder einer Polysäure oder deren Alkalimetallsalzen;
und
einem feinen, gegebenenfalls nanoskaligen schwerlöslichen Salz-, Oxid- oder Hydroxidpulver, das in Pulverform der Polymerlösung zugesetzt worden war.

**2.** Kovalent vernetzte Compositemembran, bestehend aus:

a) einem Polymer A mit wenigstens Kationenaustauschergruppierungen oder deren nichtionischen Vorstufen;
und
einem Polymer C mit wenigstens Vernetzergruppen, die durch einen Vernetzer oder Vernetzungsinitiator vernetzt worden waren;

und
einem anorganischen Salz und/oder Oxid und/oder Hydroxid, das durch einen Hydrolyse- und/oder Fällungsprozess in der Membranmatrix ausgefällt worden war;
und
einer Heteropolysäure oder einer Polysäure oder deren Alkalimetaüsalzen; und
einem feinen, gegebenenfalls nanoskaligen schwerlöslichen Salz-, Oxid- oder Hydroxidpulver, das in Pulverform der Polymerlösung zugesetzt worden war;
oder
b) einem Polymer D2 mit Kationenaustauschergruppierungen oder deren nichtionischen Vorstufen und mit wenigstens Vernetzergruppen, die durch einen Vernetzer oder Vernetzungsinitiator vernetzt worden waren;
und
einem Polymer C mit wenigstens Vernetzergruppen, die durch einen Vernetzer oder Vernetzungsinitiator vernetzt worden waren;
und
einem anorganischen Salz und/oder Oxid und/oder Hydroxid, das durch einen Hydrolyse- und/oder Fällungsprozess in der Membranmatrix ausgefällt worden war; und
einer Heteropolysäure oder einer Polysäure oder deren Alkalimetallsalzen; und
einem feinen, gegebenenfalls nanoskaligen schwerlöslichen Salz-, Oxid- oder Hydroxidpulver, das in Pulverform der Polymerlösung zugesetzt worden war; oder
c) einem Polymer D2 mit Kationenaustauschergruppierungen oder deren nichtionischen Vorstufen und mit wenigstens Vernetzergruppen, die durch einen Vernetzer oder Vernetzungsinitiator vernetzt worden waren;
und
einem Polymer B mit wenigstens Anionenaustauschergruppen und/oder N-basischen Gruppen;
und
einem anorganischen Salz und/oder Oxid und/oder Hydroxid, das durch einen Hydrolyse- und/oder Fällungsprozess in der Membranmatrix ausgefällt worden war;
und
einer Heteropolysäure oder einer Polysäure oder deren Alkalimetallsalzen; und
einem feinen, gegebenenfalls nanoskaligen schwerlöslichen Salz-, Oxid- oder Hydroxidpulver das in Pulverform der Polymerlösung zugesetzt worden war.

**3.** Kovalent-ionisch vernetzte Compositemembran, bestehend aus:

a) einem Polymer A
und
einem Polymer C
und
einem Polymer B
und
einem anorganischen Salz und/oder Oxid und/oder Hydroxid, das durch einen Hydrolyse- und/oder Fällungsprozess in der Membranmatrix ausgefällt worden war;
und gegebenenfalls
einer Heteropolysäure oder einer Polysäure oder deren Alkalimetallsalzen;
und
einem feinen, nanoskaligen schwerlöslichen Salz-, Oxid- oder Hydroxidpulver, das in Pulverform der Polymerlösung zugesetzt worden war;
oder
b) einem Polymer D2;
und
einem Polymer B;
und
einem anorganischen Salz und/oder Oxid und/oder Hydroxid, das durch einen Hydrolyse- und/oder Fällungsprozess in der Membranmatrix ausgefällt worden war; und
einer Heteropolysäure oder einer Polysäure oder deren Alkalimetallsalzen;
und
einem feinen, gegebenenfalls nanoskaligen schwerlöslichen Salz-, Oxid- oder Hydroxidpulver, das in Pulverform der Polymerlösung zugesetzt worden war;
oder

c) einem Polymer D1;
und
einem Polymer C;
und
einem anorganischen Salz und/oder Oxid und/oder Hydroxid, das durch einen Hydrolyse- und/oder Fällungsprozess in der Membranmatrix ausgefällt worden war;
und
einer Heteropolysäure oder einer Polysäure oder deren Alkalimetallsalzen;
und gegebenenfalls
einem feinen, nanoskaligen schwerlöslichen Salz-, Oxid- oder Hydroxidpulver, das in Pulverform der Polymerlösung zugesetzt worden war;
oder
d) einem Polymer A;
und
einem Polymer B;
und
einem anorganischen Salz und/oder Oxid und/oder Hydroxid, das durch einen Hydrolyse- und/oder Fällungsprozess in der Membranmatrix ausgefällt worden war;
und
einer Heteropolysäure oder einer Polysäure oder deren Alkalimetalsalzen;
und gegebenenfalls
einem feinen, nanoskaligen schwerlöslichen Salz-, Oxid- oder Hydroxidpulver, das in Pulverform der Polymerlösung zugesetzt worden war;
oder
e) einem Polymer D4 mit Kationenaustauschergruppen oder deren nichtionischen Vorstufen und mit Anionenaustauscher- oder anderen N-basischen Gruppen und mit Vernetzergruppen;
und
einem anorganischen Salz und/oder Oxid und/oder Hydroxid, das durch einen Hydrolyse- und/oder Fällungsprozess in der Membranmatrix ausgefällt worden war;
und
einer Heteropolysäure oder einer Polysäure oder deren Alkalimetallsalzen;
und
einem feinen, gegebenenfalls nanoskaligen schwerlöslichen Salz-, Oxid- oder Hydroxidpulver, das in Pulverform der Polymerlösung zugesetzt worden war;
oder
f) einem Polymer A;
und
einem Polymer D3 mit Anionenaustauschergruppen und/oder N-basischen Gruppen und mit Vernetzergruppen;
und,
einem anorganischen Salz und/oder Oxid und/oder Hydroxid, das durch einen Hydrolyse- und/oder Fällungsprozess in der Membranmatrix ausgefällt worden war;
und
einer Heteropolysäure oder einer Polysäure oder deren Alkalimetallsalzen;
und
einem feinen, gegebenenfalls nanoskaligen schwerlöslichen Salz-, Oxid- oder Hydroxidpulver, das in Pulverform der Polymerlösung zugesetzt worden war.

**4.** Membranen nach den Ansprüchen 1 bis 3, **dadurch gekennzeichnet, dass** die Polymerhauptketten der Polymere A, B, C, D1, D2, D3 und D4 ausgewählt sind aus:

- Polyolefine wie Polyethylen, Polypropylen, Polyisobutylen, Polynorbornen, Polymethylpenten, Poly(1,4-isopren), Poly(3,4-isopren), Poly(1,4-butadien), Poly(1,2-butadien)
- Styrol(co)polymere wie Polystyrol, Poly(methylstyrol), Poly($\alpha$,$\beta$,$\beta$-trifluorstyrol), Poly(pentafluorostyrol)
- perfluorierten Ionomere wie Nafion® oder der $SO_2$Hal-Vorstufe von Nafion® (Hal=F, Cl, Br, I), Dow®-Membrane, GoreSelect®-Membrane.
- N-basische Polymere wie Polyvinylcarbazol, Polyethylenimin, Poly(2-vinylpyridin), Poly(3-vinylpyridin), Poly(4-vinylpyridin)
- (Het)arylhauptkettenpolymere, die folgende Baugruppen enthalten:

**Polymerbausteine:**

$R_2=C_nH_{2n+1}$, $C_nHal_{2n-1}$, Phenyl, Hal, H (Hal=F, Cl, Br, I)

$R_1=$ 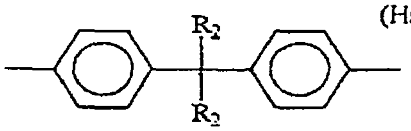

$R_3=$ 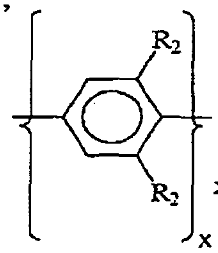 x=1-1000

$R_5=$ 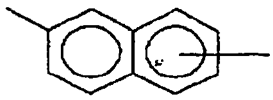

$R_6=$ 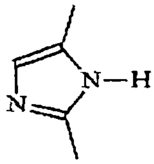

$R_7=$ 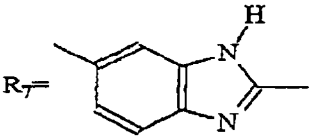

**Brückengruppen:**

$R_8=$ —O— $R_9=$ 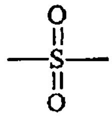 $R_{10}=$ 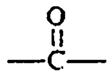 $R_{11}=$ —S— $R_{12}=$ 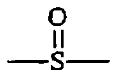

5. Membranen nach Anspruch 4, **dadurch gekennzeichnet, dass** die Hauptketten der Polymere A, B, C, D1, D2, D3 und D4 ausgewählt sind aus:

- Polyetherketone wie Polyetherketon PEK Victrex®, Polyetheretherketon PEEK Victrex®, Polyetheretherketonketon PEEKK, Polyetherketonetherketonketon PEKEKK Ultrapek®, Polyetherketonketon PEKK
- Polyethersulfone wie Polysulfon Udel®, Polyphenylsulfon Radel R®, Polyetherethersulfon Radel A®, Polyethersulfon PES Victrex®
- Poly(benz)imidazole wie PBI Celazol® und andere den (Benz)imidazol-Baustein enthaltende Oligomere und Polymere, wobei die (Benz)imidazolgruppe in der Hauptkette oder in der Polymerseitenkette vorhanden sein kann
- Polyphenylenether wie z. B. Poly(2,6-dimethyloxyphenylen), Poly(2,6-diphenyloxyphenylen)
- Polyphenylensulfid und Copolymere
- Poly(1,4-phenylene) oder Poly(1,3-phenylene), die in der Seitengruppe ggf mit Benzoyl-, Naphtoyl- oder o-Phenyloxy-1,4-Benzoylgruppen, m-Phenyloxy-1,4-Benzoylgruppen oder p-Phenyloxy-1,4-Benzoylgruppen modifiziert sein können.
- Poly(benzoxazole) und Copolymere
- Poly(benzthiazole) und Copolymere
- Poly(phtalazinone) und Copolymere
- Polyanilin und Copolymere
- Polythiazol
- Polypyrrol

6. Membranen nach den Ansprüchen 1 bis 5, **dadurch gekennzeichnet, dass** die Kationenaustauschergruppen oder deren nichtionische Vorstufen ausgewählt sind aus:

$SO_3H$, $SO_3Me$; $PO_3H_2$, $PO_3Me_2$; COOH, COOMe
$SO_2X$, $POX_2$, COX mit X=Hal, $OR_2$, $N(R_2)_2$, Anhydridrest, N-Imidazolrest

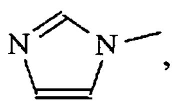,

N-Pyrazolrest

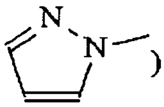

Mit Me=beliebiges Kation

**7.** Membranen nach Anspruch 6, **dadurch gekennzeichnet, dass** als funktionelle Gruppen folgende Gruppierungen bevorzugt sind:

$SO_3H$, $SO_3Me$; $PO_3H_2$, $PO_3Me_2$ bzw. $SO_2X$, $POX_2$

**8.** Membranen nach den Ansprüchen 1 bis 7, **dadurch gekennzeichnet, dass** die Anionenaustauschergruppen oder N-basischen Gruppen ausgewählt sind aus:

$N(R_2)_3{}^+Y^-$, $P(R_2)_3{}^+Y^-$, wobei die $R_2$-Reste gleich oder voneinander verschieden sein können; $N(R_2)_2$ (primäre, sekundäre oder tertiäre Amine);
Polymere mit folgenden N-basischen (Het)aryl- und Heterocyclusgruppen:

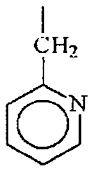
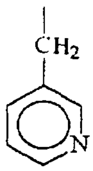
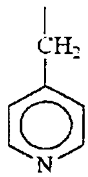
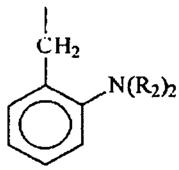
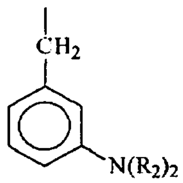
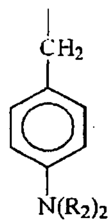

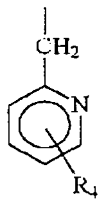
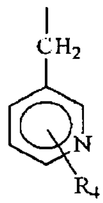
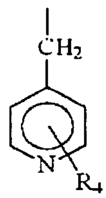
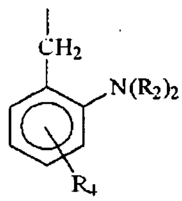
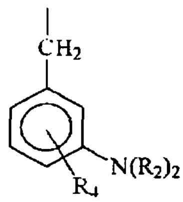
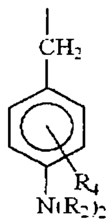

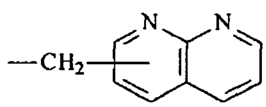
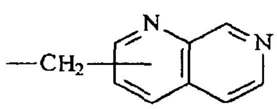
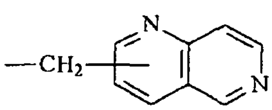
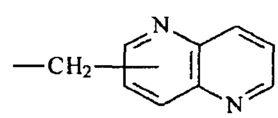

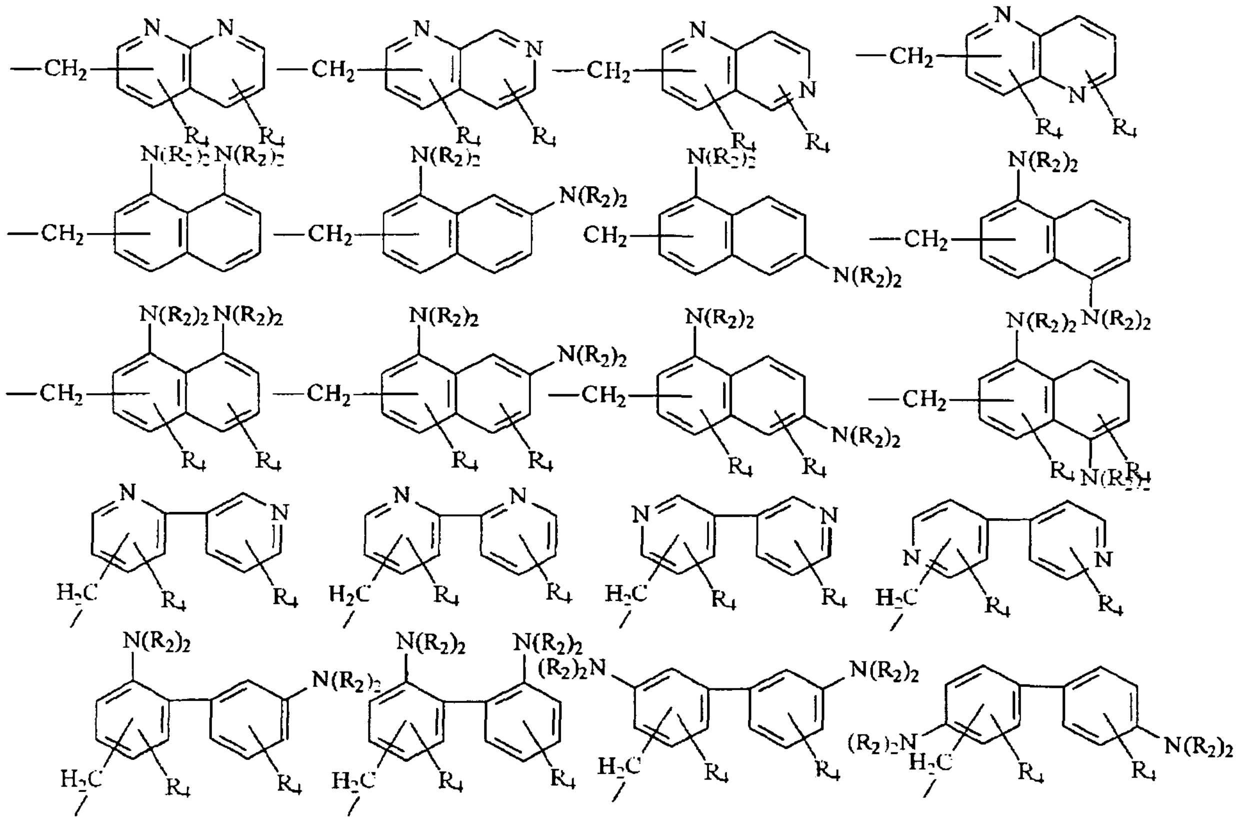

$R_4$=H, $NO_2$, Hal, $R_2$, $N(R_2)_2$, $SO_2R_2$, NO, $SO_2M$

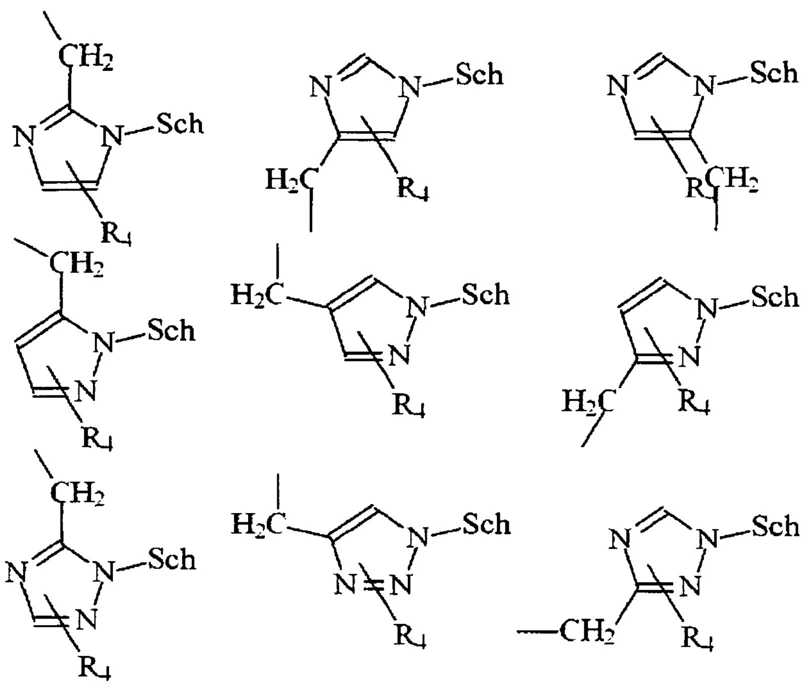

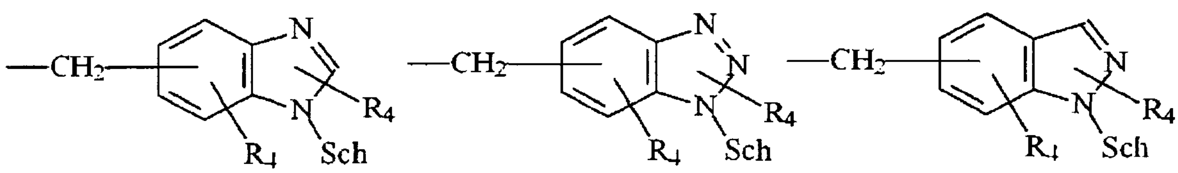

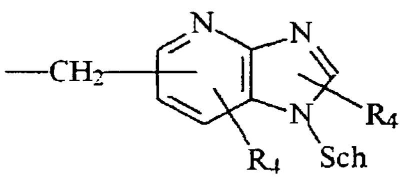
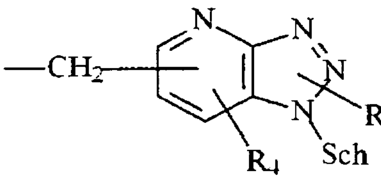
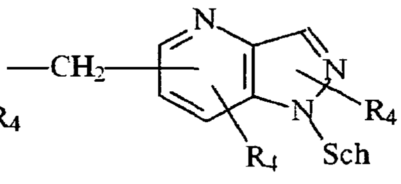

Sch=Schutzgruppe=Trityl (Triphenylmethyl) oder BOC, CBz, Dan, Tos, Tfa, Aca, FMOC, TH] 9-BBN

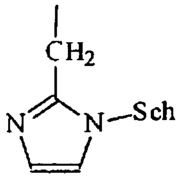
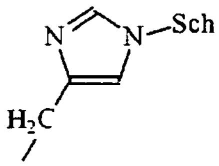
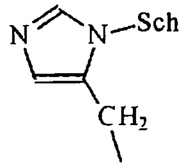
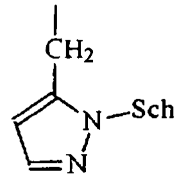

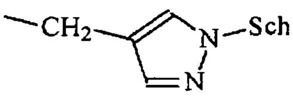
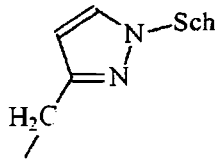
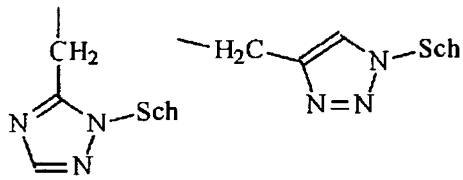

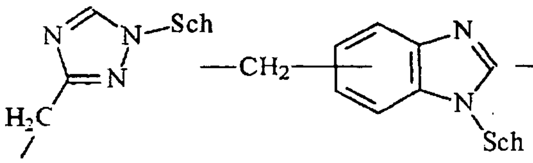
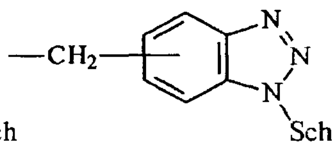
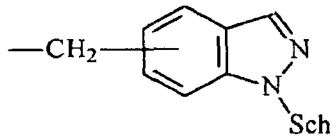

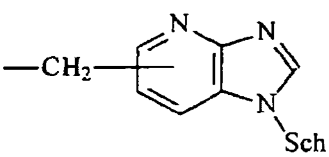
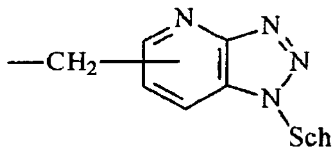
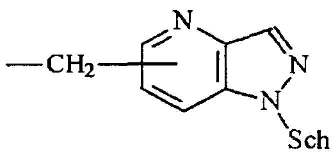

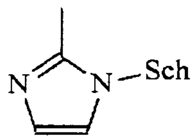
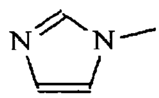
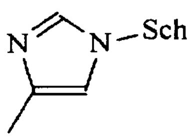
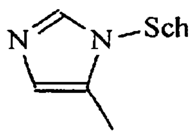

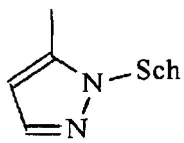
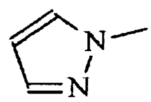
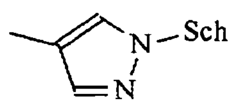
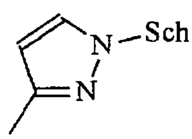

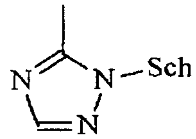
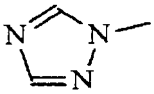
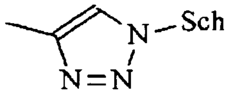
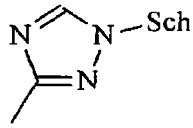
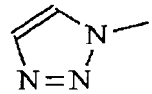

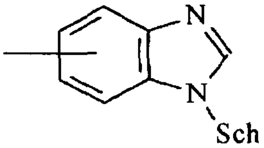
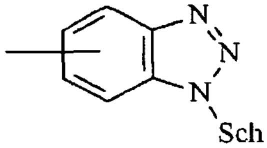
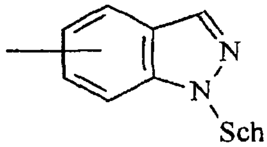

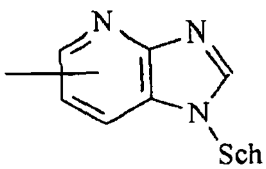
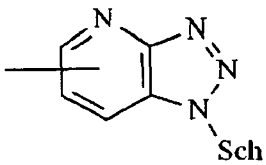
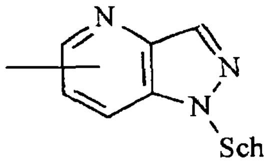

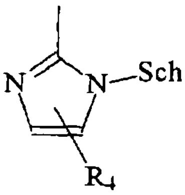
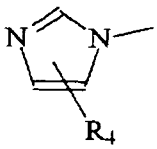
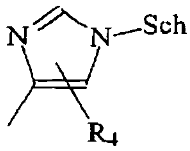
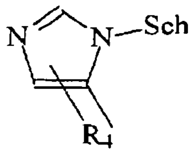

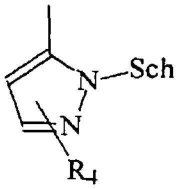
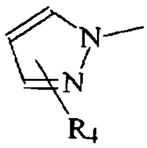
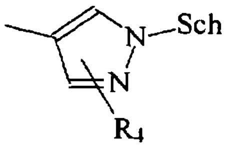
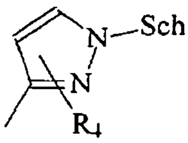

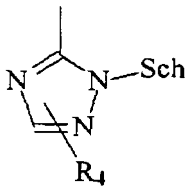
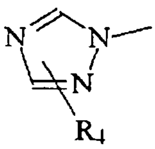
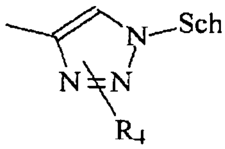
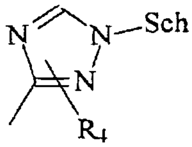
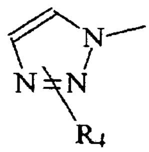

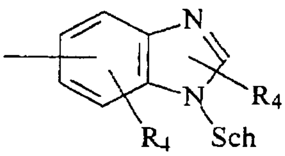
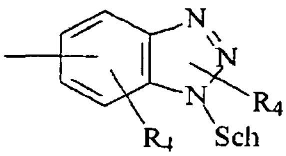
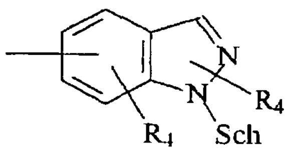

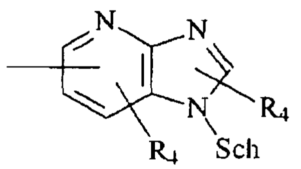 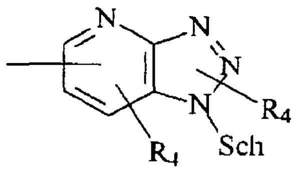 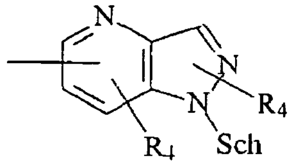

Sch=Schutzgruppe=Trityl (Triphenylmethyl) oder BOC, CBz, Dan, Tos, Tfa, Aca, FMOC, THP, 9-BBN

**9.** Membranen nach Anspruch 8, **dadurch gekennzeichnet, dass** als basische Gruppen primäre, sekundäre und tertiäre Aminogruppen, Pyridylgruppen und Imidazolgruppen bevorzugt werden, wobei die Imidazolgruppen in der Polymerhauptkette liegen können oder eine Seitengruppe darstellen können.

**10.** Membranen nach den Ansprüchen 1 bis 9, **dadurch gekennzeichnet, dass** die Polymere folgende Vemetzungsgruppen aufweisen können:

a) Alkengruppen: Polymer-$C(R_{13})=C(R_{14}R_{15})$ mit $R_{13}$, $R_{14}$, $R_{15}=R_2$ oder $R_4$
b) Polymer-$Si(R_{16}R_{17})$-H mit $R_{16}$, $R_{17}= R_2$ oder $R_4$
c) Polymer-COX, Polymer-$SO_2X$, Polymer-$POX_2$
d) Sulfinatgruppen Polymer-$SO_2Me$
e) Polymer-$N(R_2)_2$ mit $R_2 \neq H$.

und dass die Vernetzung stattfinden kann durch:

(I) Gruppe a) durch Addition von Peroxiden;
(II) Gruppe a) mit Gruppe b) unter Pt-Katalyse via Hydrosilylierung;
(III) Gruppe d) mit Dihalogenalkan- oder Dihalogenaryl-Vernetzern (z. B. Hal-$(CH_2)_x$-Hal, x=3-20) unter S-Alkylierung der Sulfinatgruppe;
(IV) Gruppe e) mit Dihalogenalkan- oder Dihalogenaryl-Vernetzern (z. B. Hal-$(CH_2)_x$-Hal, x=3-20) unter Alkylierung der tertiären basischen N-Gruppe
(V) Gruppe d) und Gruppe e) mit Dihalogenalkan- oder Dihalogenaryl-Vernetzern (z. B. Hal-$(CH_2)_x$-Hal, x=3-20) unter S-Alkylierung der Sulfinatgruppe und Alkylierung der tertiären basischen N-Gruppe
(VI) Gruppe c) durch Reaktion mit Diaminen.

**11.** Membranen nach Anspruch 10, **dadurch gekennzeichnet, dass** als Vernetzungsreaktionen die Vernetzungsreaktionen (III), (IV) und (V) und insbesondere die Vernetzungsreaktion (III) bevorzugt sind.

**12.** Membranen nach den Ansprüchen 1 bis 11, **dadurch gekennzeichnet, dass** das anorganische Salz und/oder Oxid und/oder Hydroxid, das durch einen Hydrolyse- und/oder Fällungsprozess in der Membranmatrix ausgefällt worden war, ausgewählt ist aus:

- Phosphate und Hydrogenphosphate sowie saure und vollständig neutralisierte Diphosphate oder Carbonate von Ti, V, Cr, Mn, Fe, Co, Ni, Cu, Zn, Zr, Nb, Mo, Ce, Ta, W, Sm, Eu, Gd, Yb, La;
- Oxide und Hydroxide bzw. wasserhaltige Oxide von Ti, V, Cr, Mn, Fe, Co, Ni, Cu, Zn, Zr, Nb, Mo, Ce, Ta, W, Sm, Eu, Gd, Yb, La

**13.** Membranen nach Anspruch 12, **dadurch gekennzeichnet, dass** die Oxide $TiO_2$, $ZrO_2$ und die schwerlöslichen Metallphosphate $Zr_3(PO_4)_4$, $Ti_3(PO_4)_4$, $ZrP_2O_7$, $TiP_2O_7$ und Zirkon- sowie Titanhydrogenphosphate bevorzugt sind.

**14.** Membranen nach den Ansprüchen 1-13, **dadurch gekennzeichnet, dass** die Heteropolysäure oder die Polysäure oder deren Alkalimetallsalze ausgewählt sind aus:

Polyphosphorsäure und Heteropolysäuren wie die Phosphorwolframsäure Hydrat $H_3PW_{12}O_{40}x29\ H_2O$ (TPA) und Molybdatophosphorsäure Hydrat $H_3PMo_{12}O_{40}$ x 29 $H_2O$ (MPA) sowie die Alkalimetallsalze von Heteropolysäuren wie beispielsweise das Dinatriumsalz von TPA (Na-TPA).

**15.** Membranen nach den Ansprüchen 1 bis 14, **dadurch gekennzeichnet, dass** das feine, gegebenenfalls nanoskalige Salz- Oxid- oder Hydroxid, das in Pulverform der Polymerlösung zugesetzt worden war, ausgewählt ist aus:

- Wasserhaltige Partikel, die OH-Gruppen an ihrer Oberfläche besitzen, vor allem auf $Al_2O_3$ basierend (z.B. Bayerit, Pseudoböhmit, Gibbsit = Hydrargillit, Diaspor, Böhmit), sowie Vanadium- oder Wolfram-basierende Oxide ($V_2O_5$, $VO_x$, $WO_x$) oder Legierungen aus diesen Oxiden:

| | | |
|---|---|---|
| $Al_2O_3*xH_2O$ | x = 1-10 | |
| $V_2O_5*xH_2O$ | x = 1-10 | |
| $VO_x*yH_2O$ | y = 1-10 | x = 1,5 - 3 |
| $WO_x*yH_2O$ | y = 1-10 | x = 2 -3 |

- protonierte, ionenausgetauschte Legierungen von Oxiden, die in ihrer ursprünglichen Ausgangszusammensetzung die β-Aluminat-Struktur formen. Diese Verbindungsklasse bildet sich aus den Legierungen der unten aufgezählten Oxide. Die Zusammensetzungsformeln beschreiben die Bereiche, in denen sich die Ausgangsverbindung, die β-Aluminate, bilden.
Als bevorzugte Komponente Me in $Me_2O$ wird Na oder K verwendet. Die hergestelltenalkalihaltigen Verbindungen müssen, bevor sie für die Membran verwendet werden können, einem Ionenaustausch unterzogen werden. Dabei wird das Alkaliion entfernt und die protonierte Form hergestellt.

| | | |
|---|---|---|
| $zMe_2O\text{-}xMgO\text{-}yAl_2O_3$, | $_zMe_2O\text{-}xZnO\text{-}yAl_2O_3$, | $zMe_2O\text{-}xCoO\text{-}yAl_2O_3$, |
| $zMe_2O\text{-}xMnO\text{-}yAl_2O_3$, | $zMe_2O\text{-}xNiO\text{-}yAl_2O_3$, | $zMe_2O\text{-}xCrO\text{-}yAl_2O_3$, |
| $zMe_2O\text{-}xEuO\text{-}yAl_2O_3$, | $zMe_2O\text{-}xFeO\text{-}yAl_2O_3$, | |
| $zMe_2O\text{-}xSmO\text{-}yAl_2O_3$ | | |
| mit Me= Na, K, | z = 0,7 - 1,2. | |

(mit x = 0,1-10, y = 0,1 - 10), stabil bis ca. 300 °C
- Als weitere keramische Pulver kommen Zusammensetzungen in Betracht, welche die Komponenten MgO, ZnO, CoO, MnO, NiO, CrO, EuO, FeO, SmO enthalten.. Weitere geeignete Oxide basieren auf den Elementen Ti, V, Cr, Mn, Fe, Co, Ni, Cu, Zn, Zr, Nb, Mo, Ce, Ta, W, Sm, Eu, Gd, Yb, La
- Zusätzlich sind die Carbonate wie z. B. $MgCO_3$ x $H_2O$ und $La(CO_3)_2$ x $H_2O$ sowie Oxycarbonate und die protonenleitenden perowskitischen Oxide wie z. B. Strontium-Barium-Ceroxid, Barium-Calcium-Niobat etc. als keramische Komponenten geeignet.
- Andere geeignete, z. T. schwerlösliche Metallsalze können sein: Phosphate und Hydrogenphosphate sowie saure und vollständig neutralisierte Diphosphate sowie Phosphorwolframate und Phosphormolybdate von Ti, V, Cr, Mn, Fe, Co, Ni, Cu, Zn, Zr, Nb, Mo, Ce, Ta, W, Sm, Eu, Gd, Yb, La.
- Auch Siliciumdioxid in seinen verschiedenen Modifikationen ist als keramische Komponente geeignet. Besonders bevorzugt sind hochdisperse Siliciumdioxide, beispielsweise aus der Gruppe der Aerosile®.
- Schichtsilikate auf der Basis von Montmorillonit, Smectit, Illit, Sepiolit, Palygorskit, Muscovit, Allevardit, Amesit, Hectorit, Talkum, Fluorhectorit, Saponit, Beidelit, Nontronit, Stevensit, Bentonit, Glimmer, Vermiculit, Fluorvermiculit, Halloysit, Fluor enthaltende synthetische Talkumtypen oder Mischungen aus zwei oder mehr der genannten Schichtsilikate.
- Natürliche und synthetische, gegebenenfalls ionenausgetauschte Zeolithe, insbesondere ZSM-5 Zeolith und Klinopthiolites

**16.** Methode "Methode I" zur Herstellung von Membranen nach den Ansprüchen 1 bis 15, **dadurch gekennzeichnet, dass** sie aus folgenden Arbeitsschritten besteht:

I.1. Herstellung der Lösung eines oder mehrerer Polymere des Typs A (Polymer mit Kationenaustauschergruppen in der Säure- oder Salzform oder deren nichtionischen Vorstufen) und gegebenenfalls eines oder mehrerer Polymere des Typs B (Polymer mit N-basischen Gruppen und/oder Anionenaustauschergruppen) und gegebenenfalls des Typs C (Polymere mit Vernetzungsgruppen wie Sulfinatgruppen und/oder ungesättigten Gruppen) und/oder Polymere des Typs D (Polymere mit Kationenaustauschergruppen in der Säure- oder Salzform oder deren nichtionischen Vorstufen und Anionenaustauschergruppen und/oder basischen N-Gruppen und/ oder Vernetzungsgruppen) in einem Lösungsmittel L1 und gegebenenfalls eines gegebenenfalls nanoskaligen Metalloxid-, Metallsalz- oder Metallhydroxidpulvers *(8);*
1.2. Herstellung der Lösung eines oder mehrerer Metallsalze $Me^+X^-$ *(10)* in einem organischen Lösungsmittel L2 *(11)*, gegebenenfalls unter Hinzufügen einer (Hetero)polysäure oder deren Alkalimetallsalz *(9)*;
I.3. Vereinigung der Lösungen aus I.1. und I.2.;

I.4. Ziehen eines dünnen Films des Gemischs aus 3. auf einer Unterlage (Folie oder Gewebe oder Vlies oder Glasplatte oder Metallplatte);

I.5. Abdampfen der Lösungsmittel L1 und L2 bei erhöhter Temperatur und gegebenenfalls erniedrigtem Druck;

1.6. Ablösen des Compositefilms von der Unterlage;

1.7. Einlegen des Compositefilms in folgende Flüssigkeiten:

I.7a wässrige Lösung eines basischen Metallhydroxids MOH oder eines Amins oder Ammoniak $N(R_2)_3$ bei Temperaturen von 0°C bis 100°C, wobei Ausfällung eines schwerlöslichen Metalloxids $Me_mO_n$ oder Metallhydroxids $Me_m(OH)_n$ oder gemischter Metalloxid-hydroxide $Me_mO_n$ *x $H_2O$ in der Membranmatrix stattfindet;

I.7b wässrige Lösung einer Mineralsäure HY bei Temperaturen von 0°C bis 100°C, die ein schwerlösliches Metallsalz $Me_mY_n$ in der Membranmatrix ausfällt;

I.7c Wasser bei Temperaturen von 0°C bis 100°C.

**17.** Methode "Methode II" zur Herstellung von Membranen nach den Ansprüchen 1 bis 15, **dadurch gekennzeichnet, dass** sie aus folgenden Arbeitsschritten besteht:

II.1. Herstellung der Lösung eines oder mehrerer Polymere des Typs A (Polymer mit Kationenaustauschergruppen in der Säure- oder Salzform oder deren nichtionischen Vorstufen) und gegebenenfalls eines oder mehrerer Polymere des Typs B (Polymer mit N-basischen Gruppen und/oder Anionenaustauschergruppen) und gegebenenfalls des Typs C (Polymere mit Vernetzungsgruppen wie Sulfinatgruppen und/oder ungesättigten Gruppen) und/oder Polymere des Typs D (Polymere mit Kationenaustauschergruppen in der Säure- oder Salzform oder deren nichtionischen Vorstufen und Anionenaustauschergruppen und/oder basischen N-Gruppen und/oder Vernetzungsgruppen) und gegebenenfalls Zugabe eines Vernetzers (beispielsweise Alkylierungsvernetzer (z. B. $\alpha,\omega$-Dihalogenalkan)) oder Radikalstarters in einem Lösungsmittel L1 und gegebenenfalls eines gegebenenfalls nanoskaligen Metalloxid-, Metallsalz- oder Metallhydroxidpulvers und/oder einer (Hetero)polysäure;

II.2. Ziehen eines dünnen Films des Gemischs aus 1. auf einer Unterlage (Folie oder Gewebe oder Vlies oder Glasplatte oder Metallplatte);

II.3. Abdampfen der Lösungsmittel L1 bei erhöhter Temperatur und gegebenenfalls erniedrigtem Druck; während der Lösungsmittelabdampfung findet gegebenenfalls die Vernetzung der Vernetzungskomponente statt;

II.4. Ablösen des Polymerfilms von der Unterlage;

II.5. Einlegen des Compositefilms in folgende Flüssigkeiten:

II.5a Wasser oder Gemische von Wasser mit organischem Lösungsmittel L1 bei Temperaturen von 0°C bis 100°C;

II.5b wässrige Lösung oder Lösung eines oder mehrerer Metallsalze $Me^+X^-$ oder Lösung eines oder mehrerer Metallsalze $Me^+X^-$ in einem Gemisch aus Wasser und organischem Lösungsmittel L2 bei Temperaturen von 0°C bis 100°C; dabei findet Ionenaustausch statt:

Polymer-$R^-C^+$ + $Me^+X^-$ $\rightarrow$ Polymer-$R^-Me^+$ + $C^+X^-$

$Me^+$=beliebiges 1- bis 4-wertiges Metalkation oder Metalloxykation, $X^-$=beliebiges Anion, $R^-$=Polymer-Festanion, $C^+$=Gegenion (beliebiges Kation)

II.5c Wasser bei Temperaturen von 0°C bis 100°C;

II.5d wässrige Lösung eines basischen Metallhydroxids MOH bei Temperaturen von 0°C bis 100°C, wobei Ausfällung eines schwerlöslichen Metalloxids $Me_mO_n$ oder Metallhydroxids $Me_m(OH)_n$ in der Membranmatrix stattfindet;

II.5e Wasser bei Temperaturen von 0°C bis 100°C;

II.5f wässrige Lösung einer Mineralsäure HY bei Temperaturen von 0°C bis 100°C, die ein schwerlösliches Metallsalz $Me_mY_n$ in der Membranmatrix ausfällt;

II.5g Wasser bei Temperaturen von 0°C bis 100°C;

II.5h 1- oder mehrmalige Wiederholung der Prozedur 5a bis 5g.

**18.** Methode III zur Herstellung von Compositemembranfilmen nach den Ansprüchen 1 bis 18, **dadurch gekennzeichnet, dass** sie aus einer Kombination der Methode I und Methode II besteht und folgende Arbeitsschritte beinhaltet:

III.1: Herstellung der Compositemembran nach Methode I;

III.2: Weiterverarbeitung nach Methode II ab Schritt II.5

**19.** Verfahren nach den Ansprüchen 16 bis 18, **dadurch gekennzeichnet, dass** das Lösungsmittel L1 ausgewählt ist aus:

- Protische Lösungsmittel:

  Wasser, Alkohole (z. B. Methanol, Ethanol, n-Propanol, i-Propanol, tert. Butanol);

- Dipolar-aprotische Lösungsmittel:

  Aceton, Methylethylketon (MEK), Acetonitril (ACN), N-Methylformamid, N,N-Dimethylformamid (DMF), N-Methylacetamid, N,N-Dimethylacetamid (DMAc), N-Methylpyrrolidinon (NMP), Dimethylsulfoxid (DMSO), Sulfolan;

- Etherlösungsmittel:

  Tetrahydrofuran, Oxan, Dioxan, Glyme, Diglyme, Triglyme, Tetraglyme, Diethylether, Di-tert.Butyl-ether.

Dabei sind als Lösungsmittel L1 dipolar-aprotische Lösungsmittel bevorzugt.

**20.** Verfahren nach den Ansprüchen 16 bis 19, **dadurch gekennzeichnet, dass** das Metallsalz $Me^+X^-$ ausgewählt ist aus:

Salze aus Übergangsmetallkationen (z. B. der Metalle Ti, V, Cr, Mn, Fe, Co, Ni, Cu, Zn, Zr, Sn, Nb, Mo, Ce, Ta, W, Sm, Eu, Gd, Yb, La) oder Übergangsmetalloxykationen wie $ZrO^{2+}$, $TiO^{2+}$, und Anionen von Mineralsäuren, wie z. B. $Hal^-$ (Hal=F, Cl, Br, I) oder $SO_4^{2-}$, die in Lösungsmitteln L2 löslich sind. Als Metallsalze sind insbesondere $ZrOCl_2$, $ZrOSO_4$, $TiOCl_2$, $TiOSO_4$, $ZrCl_4$ oder $TiCl_4$ bevorzugt.

**21.** Verfahren nach den Ansprüchen 16 bis 20, **dadurch gekennzeichnet, dass** das organische Lösungsmittel L2 ausgewählt ist aus dipolar-aprotischen Lösungsmitteln. Dabei sind als Lösungsmittel insbesondere DMSO und Sulfolan bevorzugt.

**22.** Verfahren nach den Ansprüchen 16 bis 21, **dadurch gekennzeichnet, dass** das basische Metallhydroxid oder Amin oder Ammoniak ausgewählt ist aus: Alkali- oder Erdalkalimetallhydroxiden, Ammoniak, Triethylamin oder n-Alkylamin $C_nH_{2n-1}NH_2$ mit n=1-20. Dabei werden NaOH, KOH und $NH_3$ bevorzugt.

**23.** Verfahren nach den Ansprüchen 16 bis 22, **dadurch gekennzeichnet, dass** das in der Membranmatrix ausgefällte schwerlösliche Metalloxid $Me_mO_n$ oder Metallhydroxid $Me_m(OH)_n$ oder gemischte Metalloxid-hydroxid $Me_mO_n$ *x $H_2O$ ausgewählt ist aus Metalloxiden, Metallhydroxiden oder Metalloxid-hydroxiden der Metalle Ti, V, Cr, Mn, Fe, Co, Ni, Cu, Zn, Zr, Nb, Mo, Ce, Ta, W, Sm, Eu, Gd, Yb, La. Dabei sind Ti, Zr, Mo und W bevorzugt.

**24.** Verfahren nach den Ansprüchen 16 bis 23, **dadurch gekennzeichnet, dass** die Mineralsäure HY ausgewählt ist aus: Mono- Di- oder Polyphosphorsäure oder Heteropolysäuren oder Schwefelsäure. Bevorzugt ist dabei Orthophosphorsäure.

**25.** Verfahren nach den Ansprüchen 16 bis 24, **dadurch gekennzeichnet, dass** das schwerlösliche Metallsalz $Me_mY_n$ ausgewählt ist aus:

Orthophosphaten, Diphosphaten, Polyphosphaten oder Hydrogenphosphaten oder Sulfaten von Ti, V, Cr, Mn, Fe, Co, Ni, Cu, Zn, Zr, Nb, Mo, Ce, Ta, W, Sm, Eu, Gd, Yb, La, Ba.

**26.** Verwendung der Membranen nach den Ansprüchen 1 bis 25 zur Gewinnung von Energie auf elektrochemischem Weg, ***insbesondere in elektrochemischen Zellen*.**

**27.** Verwendung der Membranen nach den Ansprüchen 1 bis 25 als Bestandteil von Membranbrennstoffzellen ($H_2$- oder Direktmethanol-Brennstoffzellen) bei Temperaturen von -20 bis +180°C.

**28.** Verwendung der Membranen nach den Ansprüchen 1 bis 25 in sekundären Batterien

**29.** Verwendung der Membranen nach den Ansprüchen 1 bis 25 in Elektrolysezellen.

**30.** Verwendung der Membranen nach den Ansprüchen 1 bis 25 in Membrantrennprozessen wie Gastrennung, Pervaporation, Perstraktion, Umkehrosmose, Elektrodialyse, und Diffusionsdialyse.

## Claims

**1.** Ionically cross-linked composite membrane, consisting of:

a) a polymer A with at least cation exchange groups or their non-ionic precursors;
and
a polymer B with at least anion exchange groups and/or N-basic groups;
and
an inorganic salt and/or oxide and/or hydroxide, which has been precipitated by a hydrolysis process and/or precipitation process in the membrane matrix
and
a hetero polyacid or a polyacid or their alkali metal salts
and
a fine, if necessary nano-sized sparingly soluble salt powder, oxide powder or hydroxide powder, which has been added to the polymer solution as a powder or
b) a polymer D1 with cation exchange groups or their non-ionic precursors and anion exchange groups and/or other N-basic groups;
and
a polymer B with at least anion exchange groups and/or N-basic groups;
and
an inorganic salt and/or oxide and/or hydroxide, which has been precipitated in the membrane matrix by a hydrolysis process and/or precipitation process and a hetero polyacid or a polyacid or their alkali metal salts
and
a fine, if necessary nano-sized sparingly soluble salt powder, oxide powder or hydroxide powder, which has been added to the polymer solution as a powder.

**2.** Covalently cross-linked composite membrane, consisting of:

a) a polymer A with at least cation exchange groups or their non-ionic precursors;
and
a polymer C with at least cross-linking groups, which have been cross-linked by a cross-linking agent or cross-linking starter
and
an inorganic salt and/or oxide and/or hydroxide, which has been precipitated by a hydrolysis process and/or precipitation process in the membrane matrix;
and a hetero polyacid or a polyacid or their alkali metal salts
and
a fine, if necessary nano-sized sparingly soluble salt powder, oxide powder or hydroxide powder, which has been added to the polymer solution as a powder or
b) a polymer D2 with cation exchange groups or their non-ionic precursors and at least cross-linking groups, which have been cross-linked by a cross-linking agent or cross-linking starter
and
a polymer C at least cross-linking groups, which have been cross-linked by a cross-linking agent or cross-linking starter;
and
an inorganic salt and/or oxide and/or hydroxide, which has been precipitated by a hydrolysis process and/or precipitation process in the membrane matrix
and
a hetero polyacid or a polyacid or their alkali metal salts
and
a fine, if necessary nano-sized sparingly soluble salt powder, oxide powder or hydroxide powder, which has been added to the polymer solution as a powder;

or
c) a polymer D2 with cation exchange groups or their non-ionic precursors and at least cross-linking groups, which have been cross-linked by a cross-linking agent or cross-linking starter
and
a polymer B with at least anion exchange groups and/or N-basic groups;
and
an inorganic salt and/or oxide and/or hydroxide, which has been precipitated by a hydrolysis process and/or precipitation process in the membrane matrix;
and
a hetero polyacid or a polyacid or their alkali metal salts;
and
a fine, if necessary nano-sized sparingly soluble salt powder, oxide powder or hydroxide powder, which has been added to the polymer solution as a powder.

**3.** Covalently-ionically cross-linked composite membrane consisting of:

a) a polymer A
and
a polymer C
and
a polymer B
and an inorganic salt and/or oxide and/or hydroxide, which has been precipitated by a hydrolysis process and/or precipitation process in the membrane matrix
and
hetero polyacid or a polyacid or their alkali metal salts;
and
a fine, nano-sized sparingly soluble salt powder, oxide powder or hydroxide powder, which has been added to the polymer solution as a powder or
b) a polymer D2;
and a polymer B;
and
an inorganic salt and/or oxide and/or hydroxide, which has been precipitated by a hydrolysis process and/or precipitation process in the membrane matrix;
and
a hetero polyacid or a polyacid or their alkali metal salts;
and
a fine, if neccessary nano-sized sparingly soluble salt powder, oxide powder or hydroxide powder, which has been added to the polymer solution as a powder or
c) a polymer D1;
and
a polymer C
and
an inorganic salt and/or oxide and/or hydroxide, which has been precipitated by a hydrolysis process and/or precipitation process in the membrane matrix;
and
a hetero polyacid or a polyacid or their alkali metal salts and if necessary a fine, nano-sized sparingly soluble salt powder, oxide powder or hydroxide powder, which has been added to the polymer solution as a powder;
or
d) a polymer A;
and
a polymer B;
and an inorganic salt and/or oxide and/or hydroxide, which has been precipitated by a hydrolysis process and/or precipitation process in the membrane matrix;
and
a hetero polyacid or a polyacid or their alkali metal salts;
and
a fine, if necessary nano-sized sparingly soluble salt powder, oxide powder or hydroxide powder, which has been added to the polymer solution as a powder;

or

e) a polymer D4 with cation exchange groups or their non-ionic precursors and anion exchange groups or other N-basic groups and with crosslinking groups;

and

an inorganic salt and/or oxide and/or hydroxide, which has been precipitated by a hydrolysis process and/or precipitation process in the membrane matrix

and

a hetero polyacid or a polyacid or their alkali metal salts;

and

a fine, if necessary nano-sized sparingly soluble salt powder, oxide powder or hydroxide powder, which has been added to the polymer solution as a powder

or

f) a polymer A and a polymer D3 anion exchange groups and/or other N-basic groups and with crosslinking groups;

and

an inorganic salt and/or oxide and/or hydroxide, which has been precipitated by a hydrolysis process and/or precipitation process in the membrane matrix;

and

a hetero polyacid or a polyacid or their alkali metal salts and

a fine, if necessary nano-sized sparingly soluble salt powder, oxide powder or hydroxide powder, which has been added to the polymer solution as a powder.

**4.** Membranes according to the claims 1 to 3, **characterized in that** the polymer main chains of the polymers A, B, C, D1, D2, D3 and D4 are selected from:

- Polyolefines such as polyethylene, polypropylene, polyisobutylene, polynorbornene, polymethylpentene, poly (1,4-isoprene), poly(3,4-isoprene), poly(1,4-butadiene), poly(1,2-butadiene),
- styrol(co)polymers such as polystyrol, poly(methylstyrol), poly($\alpha,\beta,\beta$-trifluorstyrol), poly(pentafluorostyrol),
- perfluorinated ionomers such as Nafion® or the $SO_2$Hal precursor of Nafion® (Hal=F, Cl, Br, I), Dow® membrane, GoreSelect® membrane,
- N-basic polymers such as polyvinylcarbazole, polyethylenimine, poly(2-vinylpyridine), poly(3-vinylpyridine), poly(4-vinylpyridine),
- (Het)arylmain chain polymers containing the following construction units :

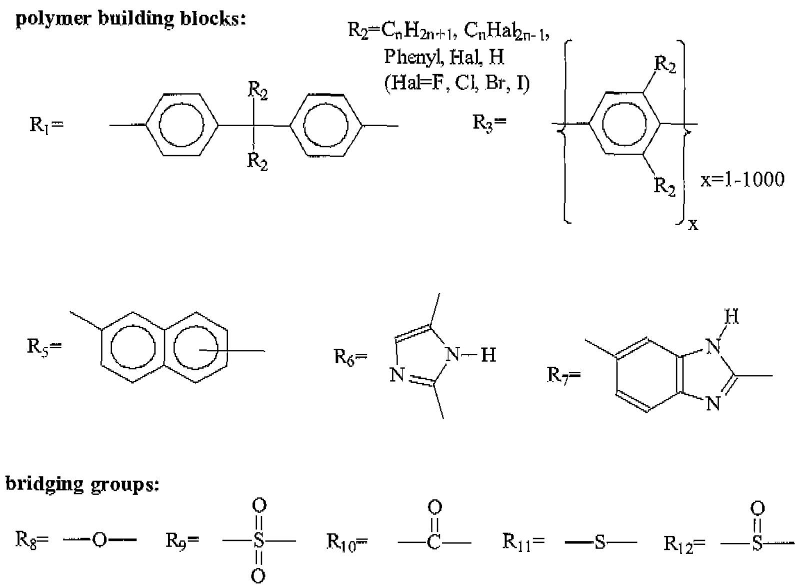


**5.** Membranes according to claim 4, **characterized in that** the main chains of the polymers A, B, C, D1, D2, D3 and D4 are selected from :

- polyetherketones such as polyetherketone PEK Victrex®, polyetheretherketone PEEK Victrex®, polyetheretherketonketone PEEKK, polyetherketonether-ketonketone PEKEKK Ultrapek®, polyetherketonketone PEKK
- polyethersulfone such as polysulfone Udel®, polyphenylsulfone Radel R®, polyetherethersulfone Radel A®, polyethersulfone PES Victrex®
- poly(benz)imidazole such as PBI Celazol® and other oligomers and polymers containing the (benz)imidazol-unit, in which the (benz)imidazole group can be present in the main chain or in the side chain
- polyphenylene ether such as e.g. poly(2,6-dimethyloxyphenylene), poly(2,6-diphenyloxyphenylene) polyphenylensulfides and copolymers
- poly(1,4-phenylenes) or poly(1,3-phenylenes), which can be modified in the side chain with benzoyl-, naphtoyl- or o-phenyloxy-1,4-benzoylgroups, m-phenyloxy-,1,4-benzoylgroups or p-phenyloxy-1,4-benzoylgroups,
- poly(benzoxazole) and copolymers
- poly(benzthiazole) and copolymers
- poly(phtalazinone) and copolymers
- polyanilin and copolymers
- polythiazol
- polypyrrol

**6.** Membranes according to claims 1 to 5, **characterized in that** the cation exchange groups or their non-ionic precursor are selected from :

$SO_3H$, $SO_3Me$; $PO_3H_2$, $PO_3Me_2$; COOH, COOMe,
$SO_2X$, $POX_2$, COX with X represents Hal, $OR_2$, $N(R_2)_2$, anhydride radical, N-imidazole radical

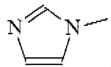,

N-pyrazole radical

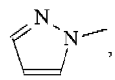,

with Me represents any cation.

**7.** Membranes according to claim 6, **characterized in that** as functional groups the following groups are preferred :

$SO_3H$, $SO_3Me$; $PO_3H_2$, $PO_3Me_2$ respectively, $SO_2X$, $POX_2$.

**8.** Membranes according to claims 1 to 7, **characterized in that** the anion exchange groups or N-basic groups are selected from:

$N(R_2)_3^+Y^-$, $P(R_2)_3^+Y^-$, in which the radicals $R_2$ can be the same or different;
$N(R_2)_2$ (primary, secondary or tertiary amines);
polymers with the following N-basic (het)aryl groups and heterocyclic groups :

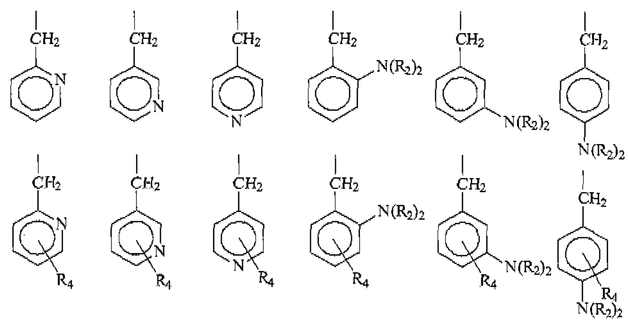

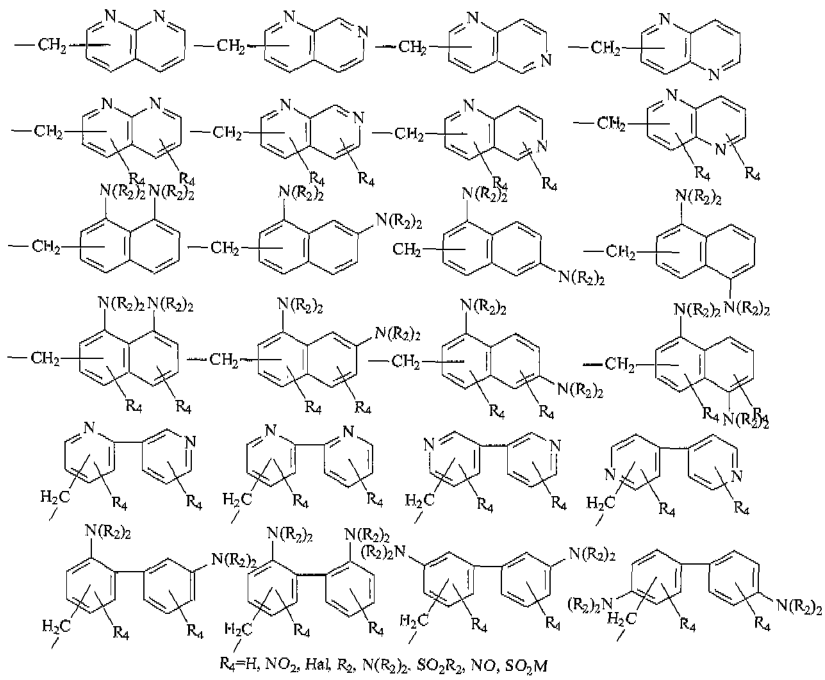

$R_4$=H, $NO_2$, Hal, $R_2$, $N(R_2)_2$, $SO_2R_2$, NO, $SO_2M$

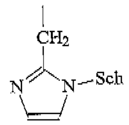 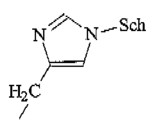 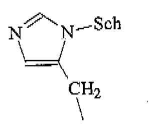 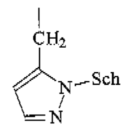

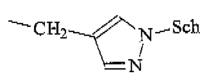 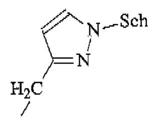 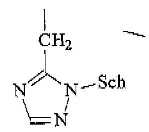 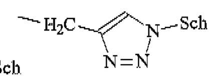

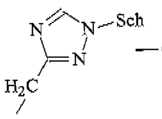 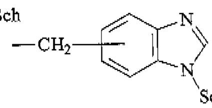 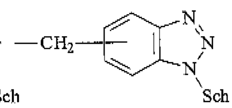 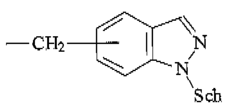

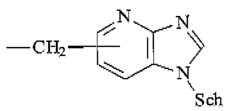 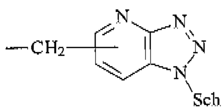 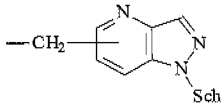

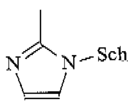 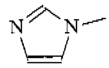 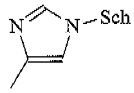 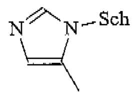

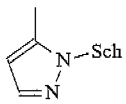 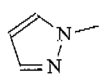 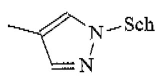 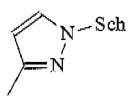

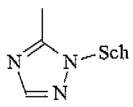
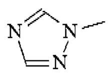
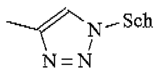
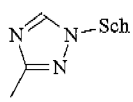
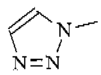

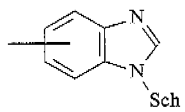
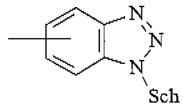
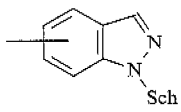

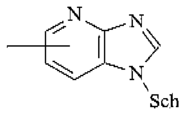
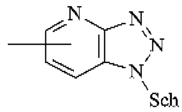
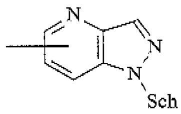

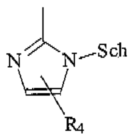
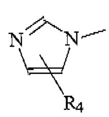
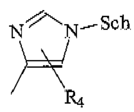
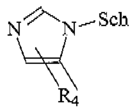

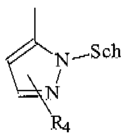
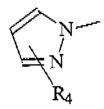
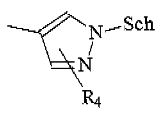
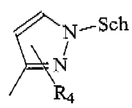

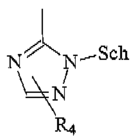
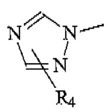
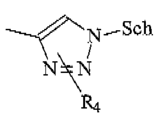
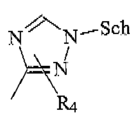
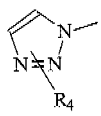

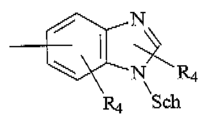
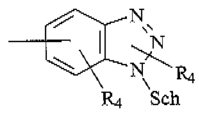
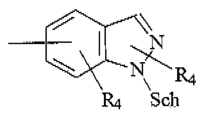

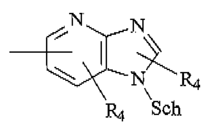
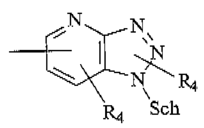
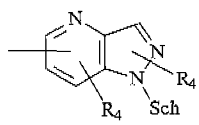

Sch=protection group=Trityl (Triphenylmethyl) or Boc, CBz, Dan, Tos, Tfa, Aca, FMOC, THP, 9-BBN

**9.** Membranes according to claim 8, **characterized in that** as basic groups primary, secondary and tertiary aminogroups, pyridyl groups and imidazole groups are preferred, in which the imidazole groups can be present in the main chain or in the side chain.

**10.** Membranes according to claims 1 to 9, **characterized in that** the polymers contain the following cross-linking groups :

a) alkene groups: polymer-$C(R_{13})=C(R_{14}R_{15})$ with $R_{13}$, $R_{14}$, $R_{15}=R_2$ or $R_4$
b) polymer-$Si(R_{16}R_{17})$-H with $R_{16}$, $R_{17}= R_2$ or $R_4$
c) polymer-COX, polymer-$SO_2X$, polymer-$POX_2$
d) sulfinate groups polymer-$SO_2Me$
e) polymer-$N(R_2)_2$ with $R_2 \neq H$

and that the cross-linking can be carried out by:

(I) group a) by addition of peroxides;
(II) group a) with group 4b) by Pt-catalysis via hydrosilylation;
(III) group d) with dihalogenalkane- or dihalogenaryl cross-linking agents (e.g. Hal-$(CH_2)_x$-Hal, x represents a number between 3 and 20) by S-alkylation of the sulfinate group;
(IV) group e) with dihalogenalkane- or dihalogenaryl cross-linking agents (e.g. Hal-$(CH_2)_x$-Hal, x represents a number between 3 and 20) by alkylation of the tertiary basic N-group,
(V) group d) and group e) with dihalogenalkane- or dihalogenaryl cross-linking agents(e.g. Hal-$(CH_2)_x$-Hal, x represents a number between 3 and 20) by S-alkylation of the sulfinate group and alkylation of the tertiary basic N-group,
(VI) group c) by reaction with diamines.

**11.** Membranes according to claim 10, **characterized in that** as cross-linking reaction the cross-linking reactions (III), (IV) and (V) and especially the cross-linking (III) are preferred.

**12.** Membranes according to claims 1 to 11, **characterized in that** the inorganic salt and/or oxide and/or hydroxide, that has been precipitated by a hydrolysis process and/or a precipitation process in the membrane matrix, is selected from :

- phosphate and hydrogenphosphate as well as acidic and completely neutralised diphosphates or carbonates of Ti, V, Cr, Mn, Fe, Co, Ni, Cu, Zn, Zr, Nb, Mo, Ce, Ta, W, Sm, Eu, Gd, Yb, La;
- oxides and hydroxides resp. water-containing oxides of Ti, V, Cr, Mn, Fe, Co, Ni, Cu, Zn, Zr, Nb, Mo, Ce, Ta, W, Sm, Eu, Gd, Yb, La.

**13.** Membranes according to claim 12, **characterized in that** the oxides $TiO_2$, $ZrO_2$ and the sparingly soluble metal phosphates $Zr_3(PO_4)_4$, $Ti_3(PO_4)_4$, $ZrP_2O_7$, $TiP_2O_7$ and zirconhydrogenophosphates as well as titaniumhydrogenophosphates are preferred.

**14.** Membranes according to claims 1 to 13, **characterized in that** the hetero polyacid or the polyacid or their alkali metal salts are selected from:

polyphosphoric acid and betero polyacids such as the phosphortungstenacid hydrate $H_3PW_{12}O_{40}$x29 $H_2O$ (TPA) and molybdatophosphoric acid hydrate $H_3PMo_{12}O_{40}$ x 29 $H_2O$ (MPA) as well as the alkali metal salts of hetero polyacids such as the disodium salt of TPA (Na- TPA)

**15.** Membranes according to claims 1 to 14, characterized m that the fine if necessary nano sized salt powder, oxide powder or hydroxide powder that is added as a powder to the polymer solution is selected from

- water containing particles carrying OH-groups on their surface preferably based on $Al_2O_3$ (bayerite, pseudo-böhmite gibbsite = hydrargillite, diaspor, böhmit) as well as vanadium- or tungsten-based oxides ($V_2O_5$, $VO_x$, $WO_x$) or alloys from these oxides:

| | | |
|---|---|---|
| $Al_2O_3$*$xH_2O$ | x = 1-10 | |
| $V_2O_5$*$xH_2O$ | x = 1-10 | |
| $VO_x$*$yH_2O$ | y = 1-10 | x = 1,5 - 3 |
| $WO_x$*$yH_2O$ | y = 1-10 | x = 2 - 3, |

- ion exchanged especially preferred arc protonated alloys of oxides, which form m their original composition the β-aluminate structure, this class of compounds is formed from alloys of the below mentioned oxides, the formulae of composition describe the range in which the starting compound, the β-aluminate is formed.
As preferred component Me in $Me_2O$ Na or K is used The produced, alkali containing compounds have to be ion exchanged before they can be used for the membrane. In doing so the alkali ion is removed and the protonated form is generated.

$zMe_2O$-xMgO-$yAl_2O_3$, $_zMe_2O$-xZnO-$yAl_2O_3$, $zMe_2O$-xCoO-$yAl_2O_3$,

(continued)

$zMe_2O$-$xMnO$-$yAl_2O_3$, $zMe_2O$-$xNiO$-$yAl_2O_3$, $zMe_2O$-$xCrO$-$yAl_2O_3$, $zMe_2O$-$xEuO$-$yAl_2O_3$, $zMe_2O$-$xFeO$-$yAl_2O_3$, $zMe_2O$-$xSmO$-$yAl_2O_3$

with Me= Na, K, z = 0,7 - 1,2 (with x = 0,1-10, y = 0,1 - 10), stable until appr 300 °C
- Other suitable ceramic powders contain the components MgO, ZnO, CoO, MnO, NiO, CrO, EuO, FeO, SmO. Further suitable oxides are based on the elements Ti, V, Cr, Mn, Fe, Co, Ni, Cu, Zn, Zr, Nb, Mo, Ce, Ta, W, Sm, Eu, Gd, Yb, La
- Other suitable, in part sparingly soluble metal salts are: phosphates and hydrogenphosphates as well as acidic and entirely neutralised diphosphates of Ti, V, Cr, Mn, Fe, Co, Ni, Cu, Zn, Zr, Nb, Mo, Ce, Ta, W, Sm, Eu, Gd, Yb, La.
- Addionally the carbonates are suitable such as e.g. MgCO3xH2O and La(C03)2xH2 as well as oxycarbonates and the proton conducting perowskitic oxides such as e.g. strontium-barium-ceroxide, barium-calcium-niobate etc. as ceramic components.
- Also siliciumdioxide in its different modifications is suitable as ceramic component. Especially preferred are highly dispersed siliciumdioxides, e.g. from the Aerosile® group.
- Phyllosilicate based on montmorillonite, smectite, illite, sepiolite, palygorskite, muscovite, allevardite, amesite, hectorite, talc, fluorhectorite, saponite, beidelite, nontronite, stevensite, bentonite, mica, vermiculite, fluorvermiculite, balloysite, fluor containing synthetical talc types or blends of two or more of the above-mentioned phyllosilicates.
- Natural and synthetical, if necessary ion exchanged zeolites, especially ZSM-5 zeolith and klinopthiolites

**16.** Method "Methode I" for the production of membranes according to claims 1 to 15, **characterized in that** it is composed from the following steps :

I-1. Making of a solution of one or more polymers of the type A (polymer with cation exchange groups or their non-ionic precursors) and if necessary one or more polymers of the type B (polymers with N-basic groups and/or anion exchange groups) and if necessary of type C (polymers with cross-linking groups such as sulfinate groups and/or unsaturated groups) and/or polymeres of the type D (polymers with cation exchange groups or their non-ionic precursors and anion exchange groups and/or basic N-groups and/or cross-linking groups) in a solvent L1 and if necessary a if necessary nano-sized metal oxide powder, metal salt powder or metal hydroxide powder (8);
I.2. Making of a solution of one or more metal salts $Me^+X^-$ *(10)* in a suitable solvent L2 *(11)*, if necessary by addition of a (hetero)polyacid or their alkali metal salt *(9)*;
I.3. Mixing of solutions from 1. and 2.;
I.4. Casting or spraying of a thin film of the mixture of 3. on a support (foil or textile or nonwoven or glass plate or metal plate);
I.5. Evaporation of the solvents L1 and L2 at elevated temperature and if necessary reduced pressure;
I.6. Separation of the composite film from the support;
I.7. Soaking of the composite film in the following liquids:

I.7a aqueous solution of a basic metal hydroxide MOH or an amine or ammonia $N(R_2)_3$ at temperatures from 0 °C to 100 °C, at which precipitation of a sparingly soluble metal oxide $Me_mO_n$ or metal hydroxide $Me_m(OH)_n$ or mixed metal oxide-hydroxide $Me_mO_n$ *x $H_2O$ in the membrane matrix takes place;
I.7b aqueous solution of an inorganic acid HY at temperatures from 0 °C to 100 °C, which precipitates a sparingly soluble metal salt $Me_mY_n$ in the membrane matrix;
I.7c water at temperatures from 0 °C to 100 °C,

**17.** Method "Methode II" for the production of membranes according to claims I to 15, **characterized in that** it is composed from the following steps :

II.1. Making of a solution of one or more polymers of the type A (polymer with cation exchange groups or their non-ionic precursors) and if necessary one or more polymers of the type B (polymers with N-basic groups and/or anion exchange groups) and if necessary of type C (polymers with cross-linking groups such as sulfinate groups and/or unsaturated groups) and/or polymeres of the type D (polymers with cation exchange groups or their non-ionic precursors and anion exchange groups and/or basic N-groups and/or cross-linking groups) and if necessary addition of a cross-linker(e,g, Alkylation cross-linker (e.g. $\alpha,\omega$-dihalogenalkane)) or radical starter in a solvent L1 and if necessary a if necessary nano-sized metal oxide powder, metal salt powder or metal hydroxide powder and/or a (hetero)polyacid;
II.2. Casting or spraying of a thin film of the mixture of 1. on a support (foil or textile or nonwoven or glass plate or metal plate);;
II.3. Evaporation of the solvent L1 at elevated temperature and if necessary reduced pressure; during the solvent evaporation takes place if necessary the cross-linking of the corss-linker;
II.4. Separation of the composite film from the support;
II.5. Soaking of the composite film in the following liquids:

II.5a water or mixture of water with organic solvent L1 at temperatures from 0 °C to 100°C;
II.5b aqueous solution or solution of one or more metal salts $Me^+X^-$ or solution of one mor more metal salts $Me^+X^-$ in a mixture of water and organic solvent L2 at temperatures from 0 °C to 100 °C; in doing so ion exchange takes place:

$$Polymer\text{-}R^-C^+ + Me^+X^- \rightarrow Polymer\text{-}R^-Me^+ + C^+X^-$$

$Me^+$represents any 1- to 4-valent metal cation or metal oxycation, $X^-$represents any $^a$nion, $R^-$ represents any Polymer-Festanion, $C^+$ represents any counter ion(any cation)
II.5c water at temperatures from 0 °C to 100 °C;
II.5d aqueous solution of a basic metal hydroxide MOH at temperatures from 0 °C to 100 °C, at which precipitation of a sparingly soluble metal oxide $Me_mO_n$ or metal hydroxide $Me_m(OH)_n$ in the membrane matrix takes place ;
II,5e water at temperatures from 0 °C to 100 °C;
II.5f aqueous solution of an inorganic acid HY at temperatures from 0 °C to 100 °C, which precipitates a sparingly soluble metal salt $Me_mY_n$ in the membrane matrix;
II.5g aqueous solution of a metal salt MY at temperatures from 0 °C to 100 °C, which precipitates a sparingly soluble metal salt $Me_mY_n$ by "UmsaLzung" in the membrane matrix,
II.5h one-time or several times repetition of the procedure 5a to 5g.

**18.** Method III for the production of composite membrane films according to claims 1 to 18, **characterized in that** it is comprised of a combination of "Methode I" and "Methode II" and contains the following steps:

III.1: production of a composite membrane by "Methode I";
III.2: post-treatment by "Methode II" starting from step II.5

**19.** Process according to claims 16 to 18, **characterized in that** the solvent L1 is selected from

- Protic solvents: Water, alcoholes (e.g. methanol, ethanol, n-propanol, i-propanol, tert. Butanol);
- dipolar-aprotic solvents: acetone, methylethylketone (MEK), acetonitrile (ACN), N-methylformamide, N,N-dimethylformamide (DMF), N-methylacetamide, N,N-dimethylacetamide (DMAc), N-methylpyrrolidinone (NMP), dimethylsulfoxide (DMSO), sulfolane;
- ether solvents: tetrahydrofurane, oxane, dioxane, glyme, diglyme, triglyme, tetraglyme, diethylether, di-tert. Butylether,

especially preferred as solvent L1 are dipolar-aprotic solvents.

**20.** Process according to claims 16 to 19, **characterized in that** the metal salt $Me^+X^-$ is selected from:

salts of transition metal cations (e.g. of metals Ti, V, Cr, Mn, Fe, Co, Ni, Cu, Zn, Zr, Sn, Nb, Mo, Ce, Ta, W, Sm, Eu, Gd, Yb, La) or transition metal oxycations such as $ZrO^{2+}$, $TiO^{2+}$, and anions of mineral acids, such as e.g. $Hal^-$ (Hal=F, Cl, Br, I) or $SO_4^{2-}$, which are in solvents L2 soluble, as metal salts are especially preferred $ZrOCl_2$, $ZrOSO_4$, $TiOCl_2$, $TiOSO_4$, $ZrCl_4$ or $TiCl_4$.

**21.** Process according to claims 16 to 20, **characterized in that** the organic solvent L2 is selected from dipolar-aprotic solvents, especially preferred as solvent are DMSO and sulfolane.

**22.** Process according to claims 16 to 21, **characterized in that** the basic metal hydroxide or amine or ammonia is selected from : alkali hydroxides or alkaline earth hydroxides , ammonia, triethylamine or n-alkylamine $C_nH_{2n-1}NH_2$ with n represents a number between 1 to 20, especially preferred are NaOH, KOH and $NH_3$.

**23.** Process according to claims 16 to 22, **characterized in that** the sparingly soluble metal oxide $Me_mO_n$ or metal hydroxide $Me_m(OH)_n$ or mixed metal oxide-hydroxide $Me_mO_n$ *x $H_2O$ precipitated in the membrane matrix is selected from metal oxides, metal hydroxides or metal oxid-bydroxides of the metals Ti, V, Cr, Mn, Fe, Co, Ni, Cu, Zn, Zr, Nb, Mo, Ce, Ta, W, Sm, Eu, Gd, Yb, La, especially preferred are Ti, Zr, Mo and W.

**24.** Process according to claims 16 to 23, **characterized in that** the mineral acid HY is selected from : mono-, di- or polyphosphoric acid or heteropolyacids or sulfuric acid, preferred is ortho-phosphoric acid

**25.** Process according to claims 16 to 24, **characterized in that** the sparingly soluble metal salt $Me_mY_n$ is selected from :

orthophosphates, diphosphates, polyphosphates or hydrogenphosphates or sulfates of Ti, V, Cr, Mn, Fe, Co, Ni, Cu, Zn, Zr, Nb, Mo, Ce, Ta, W, Sm, Eu, Gd, Yb, La, Ba.

**26.** Use of membranes according to claims 1 to 25 to gain energy by electrochemical means, especially in electrochemical cells

**27.** Use of membranes according to claims 1 to 25 as component of membrane fuel cells (hydrogen fuel cells or direct methanol fuel cells) at temperatures from -20 °C to +1.80 °C.

**28.** Use of membranes according to claims 1 to 25 in secondary batteries.

**29.** Use of membranes according to claims 1 to 25 in electrolysis cells.

**30.** Use of membranes according to claims 1 to 25 in membrane separation processes such as gas separation, pervaporation, perstraktion, reverse osmosis, elektrodialysis and diffusion dialysis.

**Revendications**

**1.** Membrane en composite ioniquement réticulée, comprenant :

a) un polymère A avec au moins des groupes échangeurs de cations ou leurs précurseurs non ioniques ;
et
un polymère B avec au moins des groupes échangeurs d'anions et/ou des groupes n basiques ;
et
un sel inorganique et/ou un oxyde et/ou un hydroxyde précipité dans la matrice de la membrane par hydrolyse et/ou par précipitation ;
et
un hétéropolyacide ou un polyacide ou leurs sels métalliques alcalins ;
et
une poudre fine, le cas échéant nanométrique et peu soluble, de sel, d'oxyde ou hydroxyde, ajoutée à la solution polymère ;
ou
b) un polymère D1 avec groupes échangeurs de cations ou leurs précurseurs non ioniques et des groupes échangeurs d'anions et/ou d'autres groupes n basiques ;
et
un polymère B avec au moins des groupes échangeurs d'anions et/ou des groupes n basiques ;
et
un sel inorganique et/ou un oxyde et/ou un hydroxyde précipité dans la matrice de la membrane par hydrolyse et/ou par précipitation ;
et
un hétéropolyacide ou un polyacide ou leurs sels métalliques alcalins ;
et
une poudre fine, le cas échéant nanométrique et peu soluble, de sel, d'oxyde ou d'hydroxyde, ajoutée sous

forme de poudre à la solution polymère.
et

**2.** Membrane en composite à réticulation covalente, comprenant :

a) un polymère A avec au moins des groupes échangeurs de cations ou leurs précurseurs non ioniques;
et
un polymère C avec au moins des groupes réticulants réticulés par un réticulateur ou un initiateur de réticulation ;
et
un sel inorganique et/ou un oxyde et/ou un hydroxyde précipité dans la matrice de la membrane par hydrolyse et/on par precipitation
et
un hétéropolyacide ou un polyacide ou leurs sels métalliques alcalins ;
et
une poudre fine, le cas échéant nanométrique et peu soluble, de sel, d'oxyde ou d'hydroxyde, ajoutée à la solution polymère;
ou
b) un polymère D2 avec des groupes échangeurs de cations ou leurs précurseurs non ioniques et avec au moins des groupes réticulants réticulés par un réticulateur ou un initiateur de réticulation ;
et
un polymére C avec au moins des groupes réticidants réticulés par un réticulateur ou un initiateur de réticulation ;
et
un sel inorganique et/ou un oxyde et/ou un hydroxyde précipité dans la matrice de la membrane par hydrolyse et/ou par précipitation ;
et
un hétéropolyacide ou un polyacide ou leurs sels métalliques alcalins ;
et
une poudre finie, le cas échéant nanométrique et peu soluble, de sel, d'oxyde ou d'hydroxyde, ajoutée à la solution polymère ;
ou
c) un polymère D2 avec des groupes échangeurs de cations ou leurs précurseurs non ioniques et avec au moins des groupes réticulants réticulés par un réticulateur ou un initiateur de xéticuation ;
et
un polymère B avec au moins des groupes échangeurs d'anions et/ou des groupes n basiques ;
et
un sel inorganique et/ou un oxyde et/ou un hydroxyde précipité dans la matrice de la membrane par hydrolyse et/ou par précipitation ;
et
un hétéropolyacide ou un polyacide ou leurs sels métalliques alcalins ;
et
une poudre fine, le cas échéant nanométrique et peu soluble, de sel, d'oxyde ou d'hydroxyde, ajoutée sous forme de poudre à la solution polymère.

**3.** Membrane en composite à réticulation covalente ionique, comprenant :

a) un polymère A
et
un polymère C
et
un polymère B
et
un sel inorganique et/ou un oxyde et/ou un hydroxyde précipité dans la matrice de la membrane par hydrolyse et/ou par précipitation ;
et
un hétéropolyacide ou un polyacide ou leurs sels métalliques alcalins ;
et
une poudre finie, nanométrique et peu soluble, de sel, d'oxyde ou d'hydroxyde, ajoutée sous forme de poudre la solution polymère ;

ou
b) un polymère D2 ;
et
un polymère B ;
et
un sel inorganique et/ou un oxyde et/ou un bydroxyde précipité dans la matrice de la membrane par hydrolyse et/ou par précipitation ;
et
un hétéropolyacide ou un polyacide ou leurs sels métalliques alcalins ;
et
une poudre fine, le cas échéant nanométrique et peu soluble, de sel, d'oxyde ou d'hydroxyde, ajoutée à la solution polymère ;
ou
c) un polymère D1 ;
et
un polymère C ;
et
un sel inorganique et/ou un oxyde et/ou un hydroxyde précipité dans la matrice de la membrane par hydrolyse et/ou par précipitation ;
et
un hétéropolyacide ou un polyacide ou leurs sels métalliques alcalins ;
et, le cas échéant,
une poudre fine, nanométrique et peu soluble, de sel, d'oxyde ou d'hydroxyde, ajoutée sous forme de poudre à la solution polymère ;
ou
d) un polymère A ;
et
un polymère B ;
et
un sel inorganique et/ou un oxyde et/ou un hydroxyde précipité dans la matrice de la membrane par hydrolyse et/ou par précipitation ;
et
un hétéropolyacide ou un polyacide ou leurs sels métalliques alcalins ;
et, le cas échéant,
une poudre fine, nanométrique et peu soluble, de sel, d'oxyde ou d'hydroxyde, ajoutée sous forme de poudre à la solution polymère ;
ou
e) un polymère D4 avec groupes échangeurs de cations ou leurs précurseurs non ioniques et des groupes échangeurs d'anions ou d'autres groupes n basiques et des groupes réticulants ;
et
un sel inorganique et/ou un oxyde et/ou un hydroxyde précipité dans la matrice de la membrane par hydrolyse et/ou par précipitation ;
et
un hététopolyacide ou un polyacide ou leurs sels métalliques alcalins ;
et
une poudre fine, le cas échéant nanométrique et peu soluble, de sel, d'oxyde ou d'hydroxyde, ajoutée à la solution polymère ;
ou
f) un polymère A ;
et
un polymère D3 avec groupes échangeurs d'anions et/ou des groupes n basiques et avec des groupes réticulants ;
et
un sel inorganique et/ou un oxyde et/ou un hydroxyde précipité dans la matrice de la membrane par hydrolyse et/ou par précipitation ;
et
un hétéropolyacide ou un polyacide ou leurs sels métalliques alcalins ;
et

une poudre fine, le cas échéant nanométrique et peu soluble, de sel, d'oxyde ou d'hydroxyde, ajoutée sous forme de poudre à la solution polymère.

**4.** 4. Membranes selon les revendications 1 à 3, où les chaînes principales des polymères A, B, C, D 1, D2, D3 et D4 sont choisies à partir de :

- polyoléfine telle que le polythène, le polypropylène, le polyisobutylène, le polynorboménc, le polymethylpentène, le poly(1,4-isopxène), le poly(3,4-isoprène), le poly(1,4-butadiene), le poly(1,2-butadiène)
- (co)polymères styréniques comme le polystyrène, le poly(méthylstyrène), le poly(α,β,β-trifluorstyrol), poly (pentaffuorstyrène)
- ionomères perfluorés tels que le Nafion® ou le précurseur $SO_2$Hal du Nafion® (Hal=F, Cl, Br, I), la membrane Dow®, la membrane GoreSelect®.
- polymères n basiques tels que la carbazole polyvinyle, la polyéthylènimine, le polo(-2-vinylpyridine), le poly(-3-vinylpyridine), le poly(-4-vinylpyridine)
- polymères (hét)aryles de la chaîne principale, comprenant les sous-ensembles suivants

Polymerbausteine:

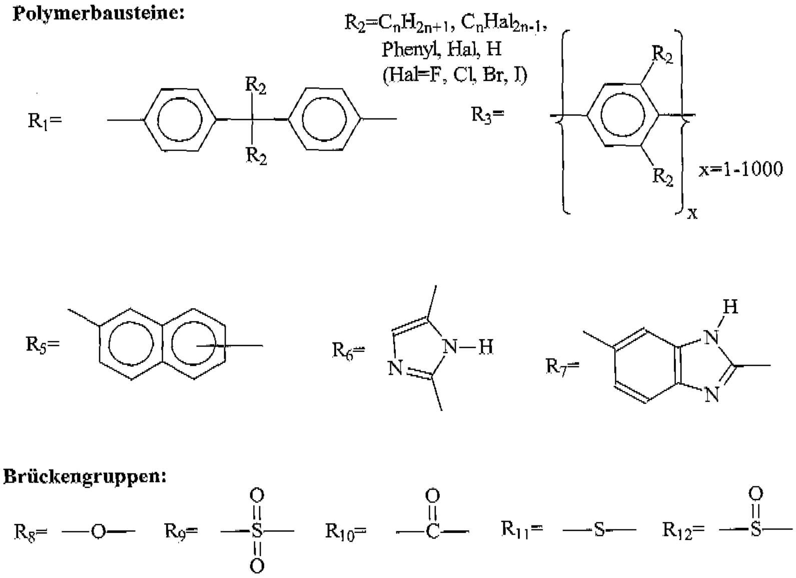

Brückengruppen:

**5.** Membranes selon la revendication 4, où les chaînes principales des polymères A, B, C, D1, D2, D3 et D4 sont choisies à partir de :

- polyéthercétones tels que le polyéthercétone PEK Victrex®, le polyétheréthercétone PEEK Victrex®, le polyétheréthercétonecetone PEEKK, le polyéthercétoneéthercétonecétone PEKEKK Utrapek®, le polyéthercétonecétone PEKK
- polyéthersulfones tels que le polysulfone Udel®, le polyphenylensulfone Radel R®, le polyetherethersulfone Radel A®, le polysulfone PES Victrex®
- poly(benz)imidazoles tels que le PBI Celazol® et d'autres oligomeres et polymères contenant le sous-élément (benz)imidazole, bien que le groupe (benz)imidazole puisse être présent dans la chaîne principale ou la chaîne latérale du polymère
- polyphénylènes ether tels que le poly(2,6-diméthyloxyphényle), le poly(2,6-diphényloxyphényle)
- polysulfure de phénylène et des copolymères
- poly(1,4-phénylène) ou le poly(1,3-phénylène), éventuellement modifié dans le groupe latéral avec des groupes benzoyle, naphtoyle ou o-phényloxy-1,4-benzoyle, m-phényloxy-1,4-benzoyle ou p-phènyloxy-1,4-benzoyle.
- poly(benzoxazole) et des copolymères
- poly(benzoxazole) et des copolymères
- poly(phtalazinonc) et des copolymères
- polyaniline et des copolymères
- polythiazole
- polypyrrol

**6.** Membranes selon les revendications 1 à 5, où les groupes échangeurs de cations ou leurs précurseurs non ioniques sont choisis à partir de :

$SO_3H$, $SO_3Me$ ; $PO_3H_2$, $PO_3Me_2$ ; COOH, COOMe
$SO_2X$, $POX_2$, COX avec X=Hal, $OR_2$, $N(R_2)_2$, reste d'anhydride, reste n-imidazole

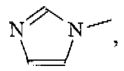

reste n-pyrazole

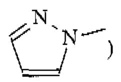

Avec Me=cation au choix

**7.** Membranes selon la revendication 6, où les groupes suivants sont privilégiés comme groupes fonctionnels :

$SO_3H$, $SO_3Me$ ; $PO_3H_2$, $PO_3Me_2$ ou $SO_2X$, $POX_2$

**8.** Membranes selon les revendications 1 à 7, où les groupes échangeurs d'anions ou leurs précurseurs non ioniques sont choisis à partir de :

$N(R_2)_3^+Y^-$, $P(R_2)3^+Y^-$, où les restes R2 peuvent être identiques ou différer entre eux ;
$N(R_2)_2$ (amine primaire, secondaire ou tertiaire) ;
Polymère avec groupes n basiques (hét)aryles et hétérocycles :

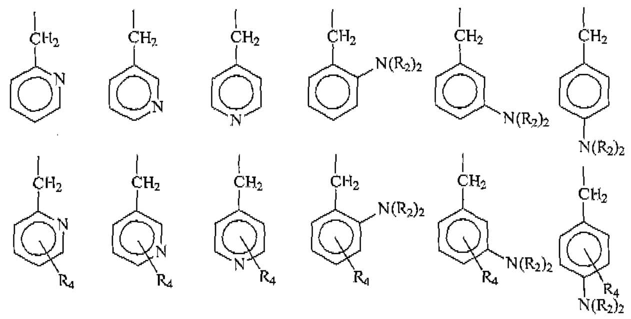

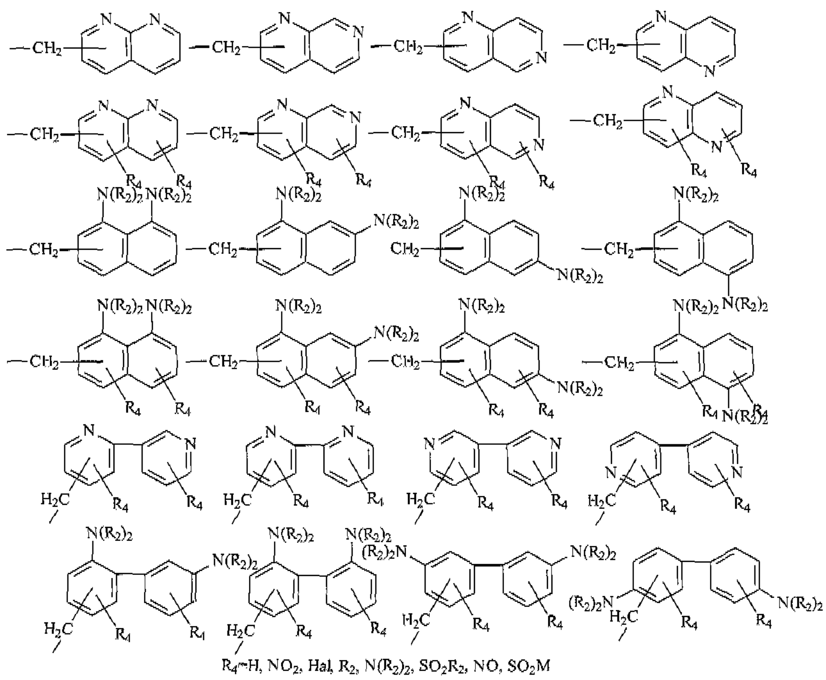

$R_4$=H, $NO_2$, Hal, $R_2$, $N(R_2)_2$, $SO_2R_2$, NO, $SO_2M$

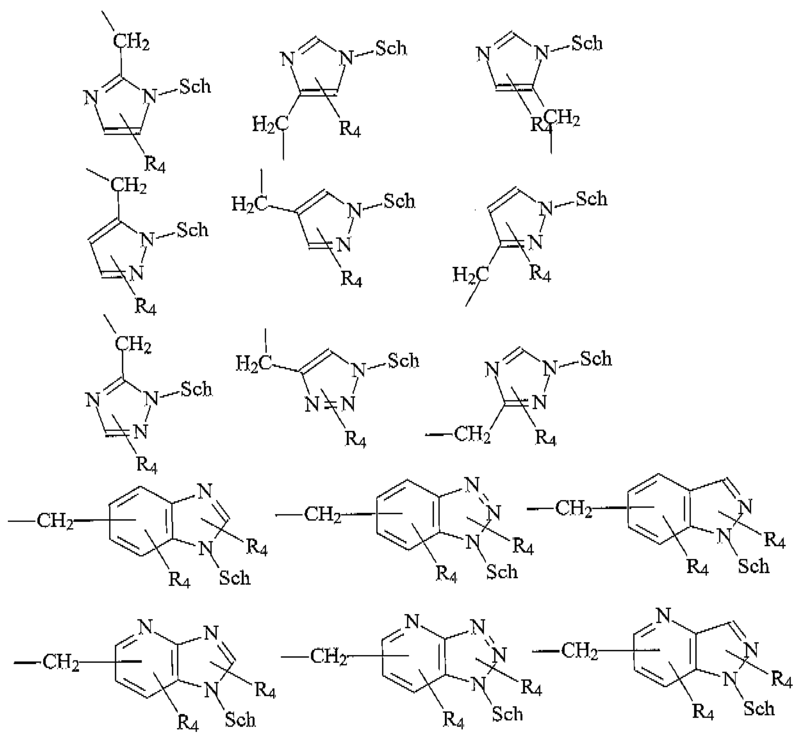

Sch=Schutzgruppe=Trityl (Triphenylmethyl) oder BOC, CBz, Dan, Tos, Tfa, Aca, FMOC, TH] 9-BBN

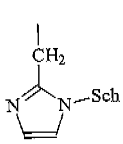

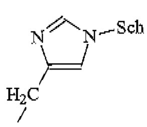

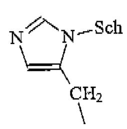

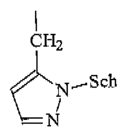

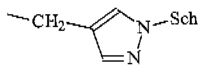 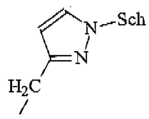 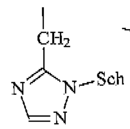 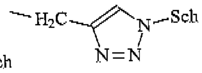

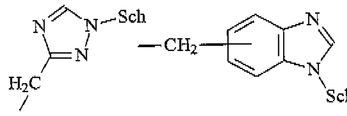 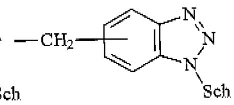 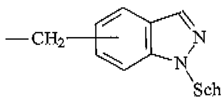

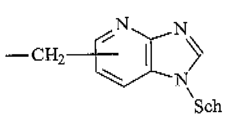 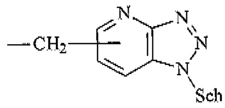 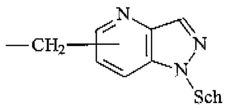

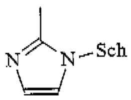 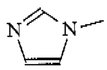 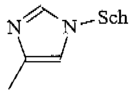 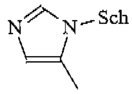

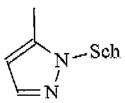 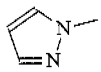 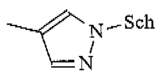 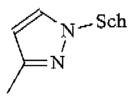

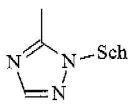 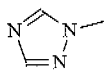 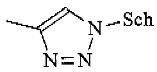 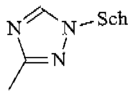 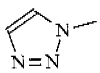

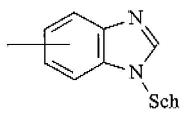 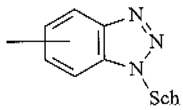 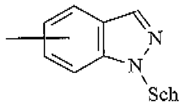

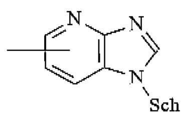 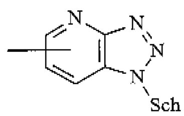 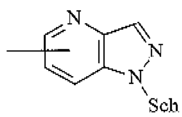

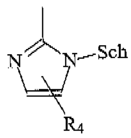 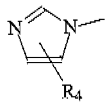 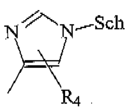 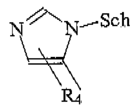

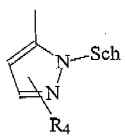 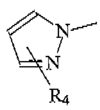 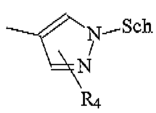 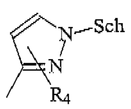

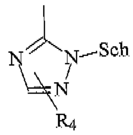 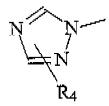 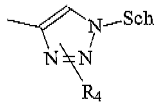 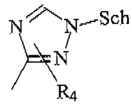 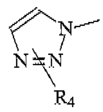

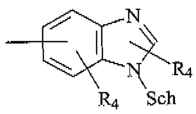 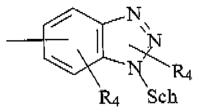 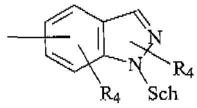

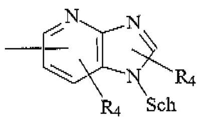 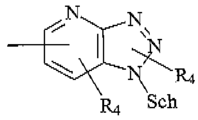 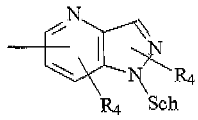

Sch=Schutzgruppe=Trityl (Triphenylmethyl) oder BOC, CBz, Dan, Tos, Tfa, Aca, FMOC, THP, 9-BBN

**9.** Membranes selon la revendication 8, où les groupes basiques privilégiés sont des groupes d'amine primaire, secondaire et tertiaire, des groupes pyridyle et des groupes imidazole, bien que les groupes imidazole puissent être présents dans la chaîne principale du polymère ou puissent représenter un groupe latéral.

**10.** Membranes selon les revendications 1 à 9, où les polymères peuvent présenter les groupes réticulants suivants :

a) Groupes alkènes: Polymère-$C(R_{13})=C(R_{14}R_{15})$ avec $R_{13}$, $R_{14}$, $R_{15}=R_2$ ou $R_4$
b) Polymere-$Si(R_{16}R_{17})$-H avec $R_{16}$, $R_{17}= R_2$ ou $R_4$
c) Polymère-COX, Polymère-$SO_2X$, Polymere-$POX_2$
d) Groupes sulfinate polymère-$SO_2Me$
e) Polymère-$N(R_2)_2$ avec $R_2 \neq H$.

et où la réticulation peut avoir lieu par :

(I) Groupe a) par addition de peroxydes ;
(II) Groupe a) avec groupe b) par une catalyse Pt par hydrosilysation ;
(III) Groupe d) avec réticulateurs dihalogénoalcanes ou dihalogénoaryles (p. ex. Hal-$(CH_2)_x$-Hal, x=3-20) avec S-alkylation du groupe sulfinate ;
(IV) Groupe e) avec réticulateurs dihalogénoalcanes ou dihalogénoaryles (p. ex. Hal-$(CH_2)_x$-Hal, x=3-20) avec alkylation du groupe n basique tertiaire ;
(V) Groupe d) et groupe e) avec réticulateurs dihalogénoalcanes ou dihalogénoaryles (p. ex. Hal-$(CH_2)_x$-Hal, x=3-20) avec S-alkylation du groupe sulfinate et alkylation du groupe n basique tertiaire ;
(VI) Groupe c) par réaction à des diamines.

**11.** Membranes selon la revendication 10, où les réactions de réticulation (III), (IV) et (V) et particulièrement la réaction de réticulation (III) sont privilégiées.

**12.** Membranes selon les revendications 1 à 11, où le sel inorganique et/ou un oxyde et/ou un hydroxyde précipité dans la matrice de la membrane par hydrolyse et/ou par précipitation, est choisi à partir de :

- Phosphates et hydrogénophosphates ainsi que d'acide et de diphosphates complètement neutralisés ou de carbonates de Ti, V, Cr, Mn, Fe, Co, Ni, Cu, Zn, Zr, Nb, Mo, Ce, Ta, W, Sm, Eu, Gd, Yb, La ;
- Oxydes et hydroxydes ou oxydes hydratés de Ti, V, Cr, Mn, Fe, Co, Ni, Cu, Zn, Zr, Nb, Mo, Ce, Ta, W, Sm, Eu, Gd, Yb, La

**13.** Membranes selon la revendication 12, où les oxydes $TiO_2$, $ZrO_2$ et les métallophosphates peu solubles $Zr_3(PO_4)_4$, $Ti_3(PO_4)_4$, $ZrP_2$-$O_7$, $TiP_2O_7$ et les hydrogénophosphates de zircon et de titane sontprivilégiés.

**14.** Membranes selon les revendications 1 à 13, où les hétéropolyacides ou les polyacides ou leurs sels métalliques

alcalins sont choisis à partir de :

Acides polyphosphoriques et hétéropolyacides tels que l'acide phosphotungstique hydrate $H_3PW_{12}O_{40}x_{29}$ $H_2O$ (TPA) et l'acide molybdatophosphorique hydrate $H_3PMo_{12}O_{40}$ x 29 $H_2O$ (MPA) ainsi que les sels métalliques alcalins d'hétéropolyacide tels que le sel de diazonium de TPA (Na-TPA)

**15.** Membranes selon les revendications 1 a 14 ou une poudre fine, le cas échéant nanométrique et peu soluble de sel d oxyde ou d'hydroxyde ajoutée à la solution polymère, est choisie à partir de

- Particules hydratées avec groupes OH a leur surface, particulièrement des oxydes basés sur $Al_2O_3$ (p. ex. bayerite pseudoboehmite gibbsite = hydrargillite diaspore, boehmite), ainsi que des oxydes a base de vanadium ou de wolfram ($V_2O_5$, $VO_x$, $WO_x$) ou d'alliages de ces oxydes

| | | |
|---|---|---|
| $Al_2O_3*xH_2O$ | x = 1-10 | |
| $V_2O_5*xH_2O$ | x = 1-10 | |
| $VO_x*yH_2O$ | y = 1-10 | x = 1,5 - 3 |
| $WO_x*yH_2O$ | y = 1-10 | x = 2 -3 |

- alliages protonés ayant subi un échange d'ions, d'oxydes formant la structure β- dalummate dans leur composition d'origine Cette classe de liaison est formée à partir des alliages des oxydes mentionnés ci-dessous. Les formules de composition décrivent les domames dans lesquels la liaison de base, β-aluminates, se forme Les composants utilisés en priorité Me dans $Me_2O$ sont Na ou K. Les liaisons alcalines créées doivent être soumises à un échange d'ions avant de pouvoir etre utilisées pour la membrane. L'ion alcalin est alors retiré et la forme protonee créée.

| | | |
|---|---|---|
| $zMe_2O-xMgO-yAl_2O_3$, | $_zMe_zO-xZnO-yAl_2O_3$, | $zMe_2O-xCoO-yAl_2O_3$, |
| $zMe_2O-xMnO-yAl_2O_3$, | $zMe_2O-xNiO-yAl_2O_3$, | $zME_2O-xCrO-yAl_2O_3$, |
| $zMe_2O-EuO-yAl_2O_3$, | $zMe_2O-xFeO-yAl_2O_3$, | |
| $zMe_2O-xSmO-yAl_2O_3$ | | |
| avec Me= Na, K, | z = 0,7 - 1,2. | |

(avec x = 0,1-10, y = 0,1 -10) stable jusqu'à environ 300°C,
- D autres compositions contenant les composants MgO, ZnO, CoO, MnO, NiO, CrO, EuO, FeO, SmO peuvent être utilisées comme poudres céramiques.
D'autres oxydes adaptés se basent sur les éléments Ti, V, Cr, Mn, Fe, Co, Ni, Cu, Zn, Zr, Nb, Mo, Ce, Ta, W, Sm, Eu, Gd, Yb, La
- De plus, les carbonates tels que $MgCO_3$ x $H_2O$ et $La(CO_3)_2$ x $H_2O$ ainsi que les oxycarbonates et les oxydes conducteurs protoniques de structure pérovskite tels que le céroxyde de strontium et de barium, le niobate de barium et de calcium, etc. sont également adaptés comme composants céraniques.
- Autres sels métalliques partiellement peu solubles possibles : Phosphates et hydrogénophosphates ainsi que l'acide et les diphosphates complètement neutralisés ainsi que les phosphotungstates et les phosphores molybdates de Ti, V, Cr, Mn, Fe, Co, Ni, Cu, Zn, Zr, Nb, Mo, Ce, Ta, W, Sm, Eu, Gd, Yb, La.
- Le dioxyde de silicium est également adapté comme composant céramique dans ses différentes modifications. Les dioxydes de silicium à dispersion forte (groupe des Aerosile® par exemple) sont particulièrement privilégiés.
- Les phyllosilicates basés sur les composants montmorillonite, smectique, illite, sépiolite, palygorskite, moscovite, allevardite, amésite, hectorite, talc, fluorhectorite, saponite, beidellite, nontronite, stévensite, bentonite, mica , vermiculite, fluorvermiculite, halloysite, types de talcs synthétiques contenant du fluor ou mélanges de plusieurs phyllosilicates mentionnés.
- Les zéolithes naturelles et synthétiques, ayant subi un échange d'ions le cas échéant, particulièrement la zéolithe ZSM-5 et les clinopthiolites

**16.** Méthode « Méthode I » de fabrication de membranes selon les revendications 1 à 15, comprenant les étapes suivantes :

I.1. Fabrication de la solution d'un ou de plusieurs polymères de type A (polymère avec groupes échangeurs de cations sous la forme d'acide ou de sel ou leurs précurseurs non ioniques) et le cas échéant un ou plusieurs

polymères de type B (polymère avec groupes n basiques et/ou groupes échangeurs d'anions) et le cas échéant du type C (polymère avec groupes réticulants tels que les groupes sulfinate et/ou les groupes non saturés) et/ou les polymères de type D (polymères avec groupes échangeurs de cations sous la forme d'acide ou de sel ou leurs précurseurs non ioniques et les groupes échangeurs d'anions et/ou les groupes n basiques et/ou les groupes réticulants) dans un solvant L1 et le cas échéant d'une poudre d'oxyde métallique nanométrique le cas échéant, de sel métallique ou d'hydroxyde métallique (8) ;
I.2. Fabrication de la solution d'un ou de plusieurs sels métalliques Me+X- (10)dans un solvant organique L2 (11), le cas échéant par l'ajout d'un (hétéro)polyacide ou de son sel de métallique alcalin (9) ;
1.3. Recombinaison des solvants de I.1. et I.2. ;
1.4. Application d'un film fin du mélange obtenu en 3. sur un support (film ou tissu ou non-tissé ou plaque de verre ou de métal) ;
I.5. Évaporation des solvants L1 et L2 à une température élevée et pression diminuée le cas échéant ;
I.6. Décollement du film composite de son support ;
I.7. Plonge du film composite dans les liquides suivants :

I.7a solution aqueuse d'un hydroxyde métallique basique MOH ou d'une amine ou d'ammoniac $N(R_2)_3$ à des températures allant de 0 °C à 100 °C ; la précipitation d'un oxyde métallique $Me_mO_n$ ou d'un hydroxyde métallique $Me_m(OH)_n$ peu soluble ou d'un mélange d'oxyde-hydroxyde métallique $Me_mO_n$ *x $H_2O$ a lieu dans la membrane;
1.7b solution aqueuse d'un acide minéral HY à des températures allant de 0 °C à 100 °C, précipitant un sel métallique peu soluble $Me_mY_n$ dans la matrice de la membrane ;
I.7c Eau à des températures allant de 0 °C à 100 °C.

**17.** Méthode « Méthode II » de fabrication de membranes selon les revendications 1 à 15, comprenant les étapes suivantes :

II.1. Fabrication de la solution d'un ou de plusieurs polymères de type A (polymère avec groupes échangeurs de cations sous la forme d'acide ou de sel ou leurs précurseurs non ioniques) et le cas échéant un ou plusieurs polymères de type B (polymère avec groupes n basiques et/ou groupes échangeurs d'anions) et le cas échéant du type C (polymère avec groupes réticulants tels que les groupes sulfinate et/ou les groupes non saturés) et/ou les polymères de type D (polymères avec groupes échangeurs de cations sous la forme d'acide ou de sel ou leurs précurseurs non ioniques et les groupes échangeurs d'anions et/ou les groupes n basiques et/ou les groupes réticulants) et le cas échéant ajout d'un réticulateur (par exemple un réticulateur par alkylation (p. ex. $\alpha\omega$-dihalogénoalcane)) ou d'un précurseur radicalaire dans un solvant L1 et le cas échéant d'une poudre d'oxyde métallique nanométrique le cas échéant, de sel métallique ou d'hydroxyde métallique et/ou d'un (hétéro) polyacide ;
II.2. Application d'un film fin du mélange obtenu en 1, sur un support (film ou tissu ou non-tissé ou plaque de verre ou de métal) ;
II.3. Évaporation du solvant L1 à une température élevée et le cas échéant à pression réduite ; le cas échéant, la réticulation des composants de réticulation a lieu pendant l'évaporation du solvant ;
II.4. Décollement du film polymère de son support ;
II.5. Plonge du film composite dans les liquides suivants :

II.5a Eau ou mélange d'eau avec le solvant organique L1 à des températures entre 0 °C et 100 °C ;
II.5b Solution aqueuse ou solution d'un ou de plusieurs sels métalliques Me+X- ou solution d'un ou de plusieurs sels métalliques Me+X- dans un mélange d'eau et de solvant organique L2 à des températures entre 0 °C et 100 °C ; l'échange d'ions a lieu :

$$\text{Polymère-R}^-\text{C}^+ + \text{Me}^+\text{X}^- \rightarrow \text{Polymère-R}^-\text{Me}^+ + \text{C}^+\text{X}^-$$

$Me^+$=au choix, cation métallique à 1 à 4 valeurs ou oxydation de métal, $X^-$=anion au choix, $R^-$=anion fixe de polymère, $C^+$=contrion (cation au choix)
II.5c Eau à des températures allant de 0 °C à 100 °C ;
II.5d Solution aqueuse d'un hydroxyde métallique basique MOH à des températures allant de 0 °C à 100 °C, la précipitation d'un oxyde métallique $Me_mO_n$ ou d'un hydroxyde métallique $Me_m(OH)_n$ peu soluble a lieu dans la matrice de la membrane ;
II.5e Eau à des températures allant de 0 °C à 100 °C ;
II.5f Solution aqueuse d'un acide minéral HY à des températures allant de 0 °C à 100 °C, précipitant un

sel métallique peu soluble $Me_mY_n$ dans la matrice de la membrane ;
II.5g Eau à des températures allant de 0 °C à 100 °C ;
II.5h 1- cycle ou répétition des procédures 5a à 5g.

**18.** Méthode III de fabrication de films de membranes composites selon les revendications 1 à 18, constituée d'une combinaison de la Méthode I et de la Méthode II et comprenant les étapes suivantes :

III.1. Fabrication d'une membrane composite selon la Méthode I ;
III.2. Traitement selon Méthode II à partir de l'étape II.5

**19.** Procédure selon les revendications 16 à 18, où le solvant L1 est choisi à partir de :

- Solvant protique :

eau, alcool (p. ex. méthanol, éthanol, n-propanol, i-propanol, butanol tert.) ;

- Solvant dipolaire aprotique :

Acétone, méthyléthylcétone (MEK), acétonitrile (ACN), N-méthylformamide, N,N-Diméthylformamide (DMF), N-méthylacétamide, N,N-Diméthylacétamide (DMAc), N-méthylpyrrolidinon (NMP), diméthylsulfoxyde (DMSO), sulfolane ;

- Solvant à l'éther :

Tétrahydrofurane, oxane, dioxane, glyme, diglyme, triglyme, tétraglyme, diéthyléther, éther di-tert-butyl

Les solvants dipolaires aprotiques sont privilégiés comme solvant L1.

**20.** Procédure selon les revendications 16 à 19, où le sel métallique Me+X- est choisi à partir de :

sels de cations des métaux de transition (p. ex. des métaux Ti, V, Cr, Mn, Fe, Co, Ni, Cu, Zn, Zr, Sn, Nb, Mo, Ce, Ta, W, Sm, Eu, Gd, Yb, La) ou d'oxydation des métaux de transition tels que $ZrO^{2+}$ , $TiO^{2+}$, et les anions d'acides minéraux tels que p. ex. Hal-(Hal=F, Cl, Br, I) ou $SO_4^{2-}$, solubles dans les solvants L2. Les sels métalliques privilégiés sont notamment $ZrOCl_2$, $ZrOSO_4$, $TiOCl_2$, $TiOSO_4$, $ZrCl_4$ ou $TiCl_4$.

**21.** Procédure selon les revendications 16 à 20, où le solvant organique L2 est choisi à partir de solvants dipolaires aprotiques. Les solvants DMSO et sulfolane sont particulièrement privilégiés.

**22.** Procédure selon les revendications 16 à 21, où l'hydroxyde métallique basique ou l'amine ou l'ammoniac est choisi à partir de : hydroxyde alcalin ou de métal alcalinoterreux, ammoniac, triéthylamine ou n alcoylamine $C_nH_{2n-1}NH_2$ avec n=1-20. Les composants NaOH, KOH et $NH_3$ sont privilégiés.

**23.** Procédure selon les revendications 16 à 22, où l'oxyde métallique peu soluble est précipité dans la matrice de la membrane $Me_mO_n$ ou d'hydroxyde métallique $Me_m(OH)_n$ ou d'un mélange d'oxyde-hydroxyde métallique $Me_mO_n$ *x $H_2O$ est choisi à partir d'oxydes métalliques, d'hydroxydes métalliques ou d'un mélange d'oxyde-hydroxyde métallique de Ti, V, Cr, Mn, Fe, Co, Ni, Cu, Zn, Zr, Nb, Mo, Ce, Ta, W, Sm, Eu, Gd, Yb, La. Les métaux Ti, Zr, Mo et W sont privilégiés.

**24.** Procédure selon les revendications 16 à 23, où l'acide minéral HY est choisi à partir de : Acides mono-, di- ou polyphosphorique ou hétéropolyacides ou acide sulfurique. L'acide orthophosphorique est privilégié.

**25.** Procédure selon les revendications 16 à 24, où le sel métallique peu soluble $Me_mY_n$ est choisi à partir de :

orthophosphates, diphosphates, polyphosphates ou hydrogénophosphates ou sulfates de Ti, V, Cr, Mn, Fe, Co, Ni, Cu, Zn, Zr, Nb, Mo, Ce, Ta, W, Sm, Eu, Gd, Yb, La, Ba.

**26.** Utilisation des membranes selon les revendications 1 à 25 pour gain d'énergie par voie électrochimique, ***particulièrement dans les cellules électrochimiques.***

**27.** Utilisation des membranes selon les revendications 1 à 25 comme composante des piles à combustible à membrane (piles à $H_2$- ou à combustible direct méthanol) à des températures de -20 à +180 °C,.

**28.** Utilisation des membranes selon les revendications 1 à 25 dans des piles secondaires.

**29.** Utilisation des membranes selon les revendications 1 à 25 dans des cellules d'électrolyse.

**30.** Utilisation des membranes selon les revendications 1 à 25 dans des procédés de séparation par membrane comme séparation de gaz, pervaporation, perstraction, osmose inverse, électrodialyse et dialyse de diffusion.

**Polymerbausteine:**

$R_2=C_nH_{2n+1}$, $C_nHal_{2n-1}$,
Phenyl, Hal, H
(Hal=F, Cl, Br, I)

$R_1$= 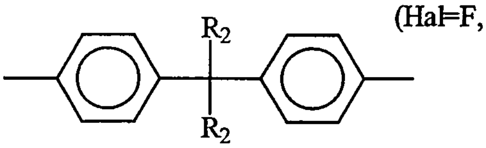

$R_3$= 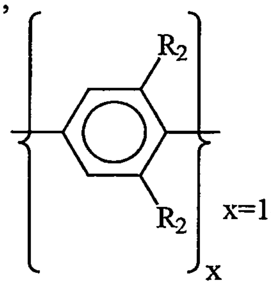 x=1-1000

$R_5$= 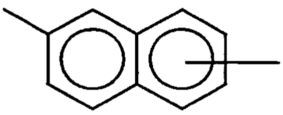

$R_6$= 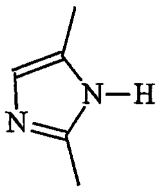

$R_7$= 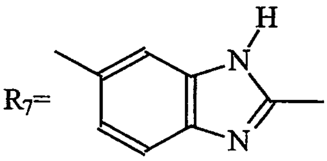

**Brückengruppen:**

$R_8$= —O— $R_9$= 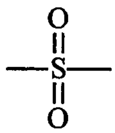 $R_{10}$= 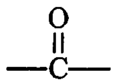 $R_{11}$= —S— $R_{12}$= 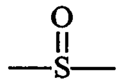

Abb. 1: Baugruppen erfindungsgemäßer Polymere

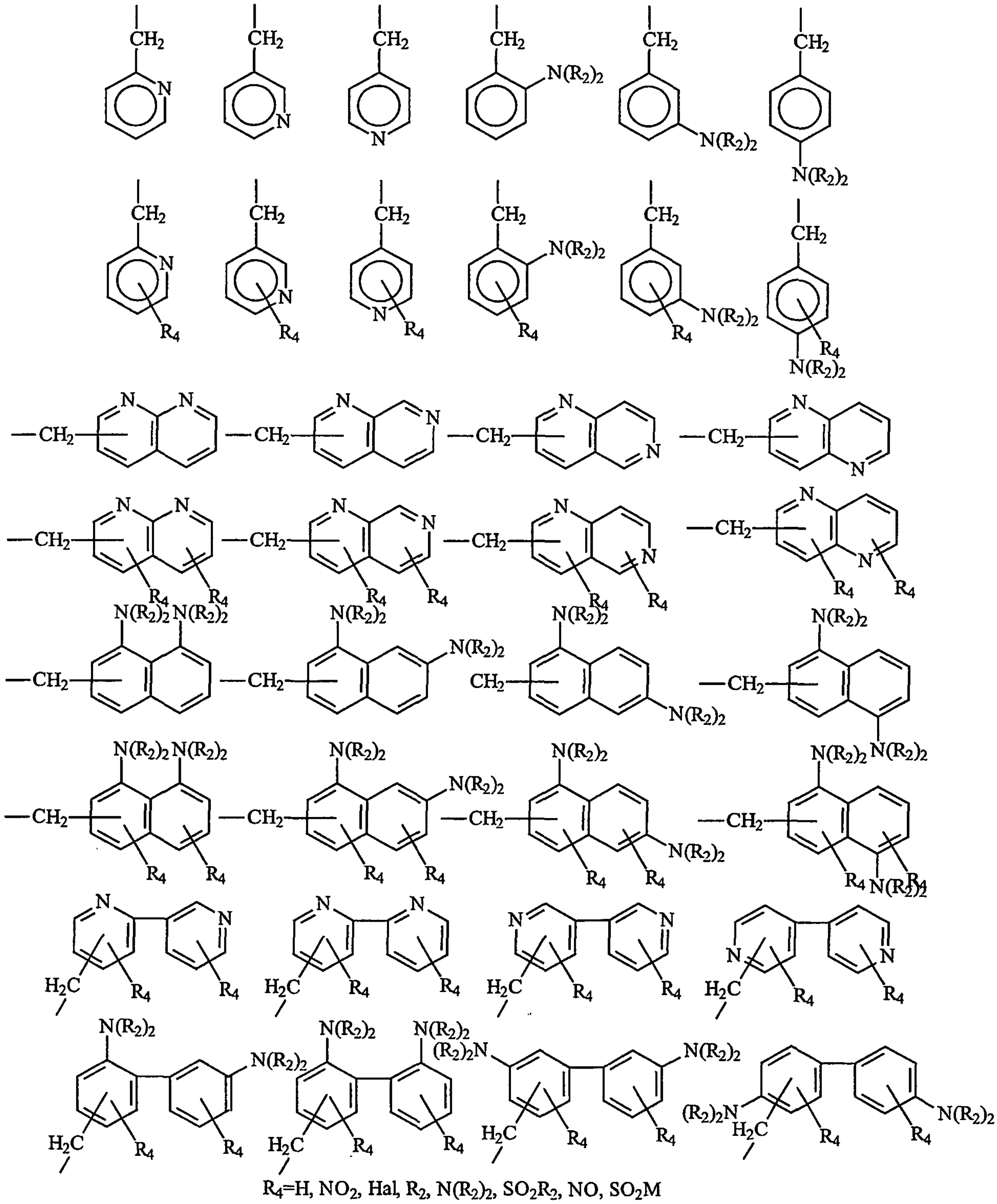

$R_4$=H, $NO_2$, Hal, $R_2$, $N(R_2)_2$, $SO_2R_2$, NO, $SO_2M$

Abb. 2: Baugruppen basischer Polymere

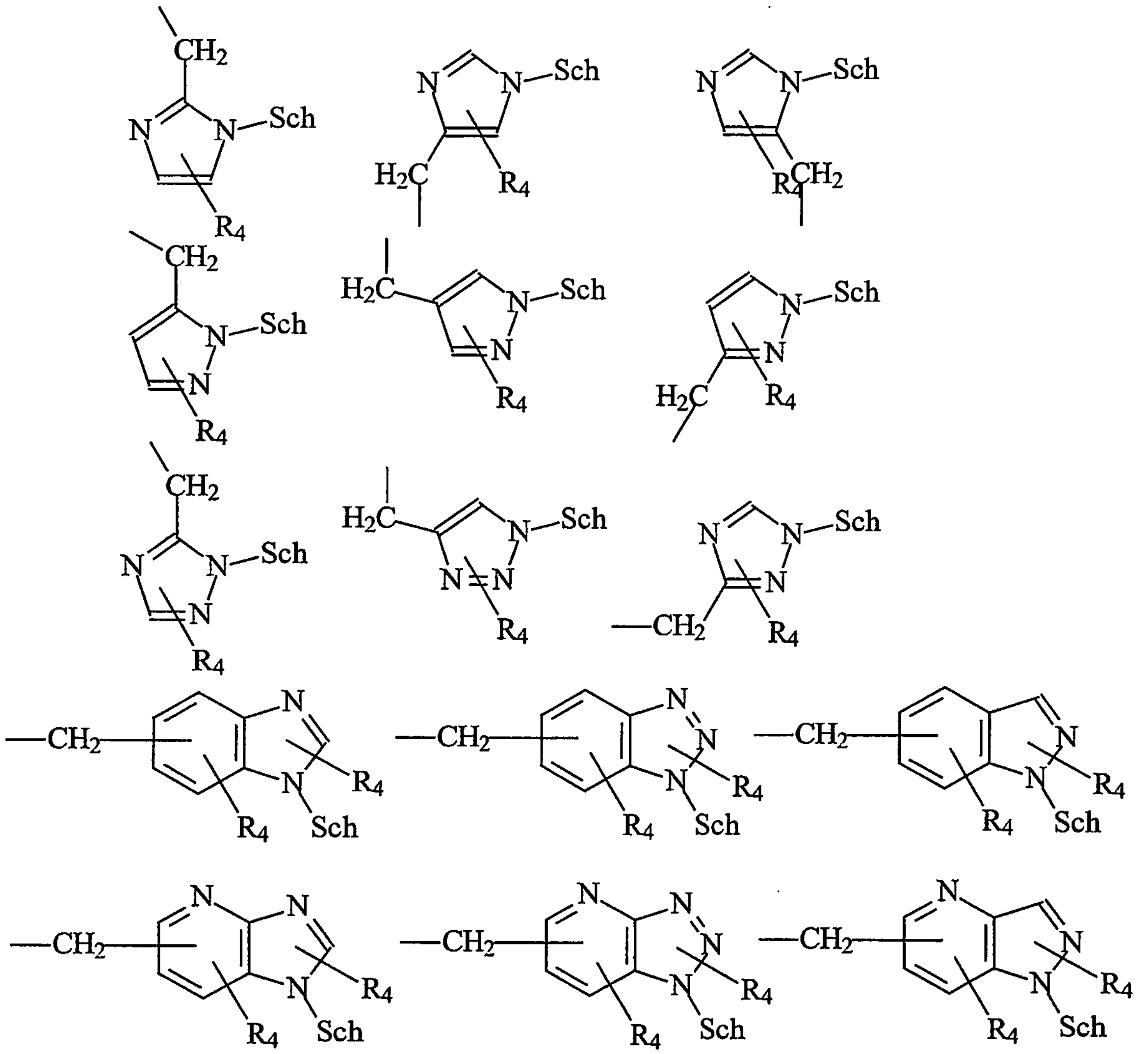

Sch=Schutzgruppe=Trityl (Triphenylmethyl) oder BOC, CBz, Dan, Tos, Tfa, Aca, FMOC, TH
9-BBN

Abb. 2: Baugruppen basischer Polymere (Fortsetzung)

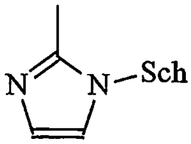
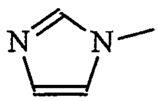
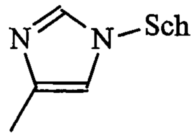
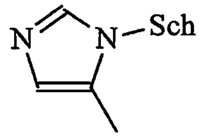
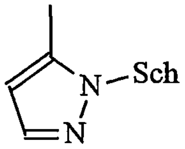
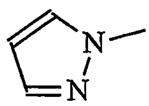
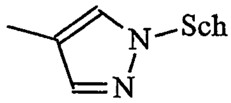
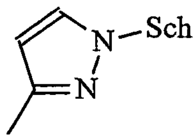
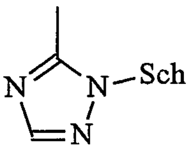
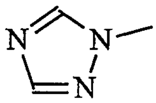
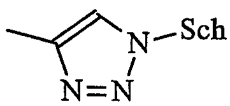
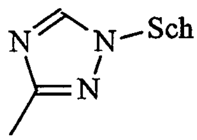
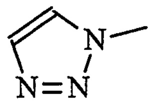
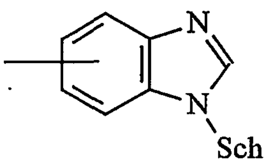
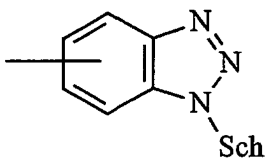
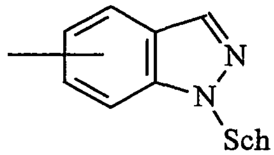
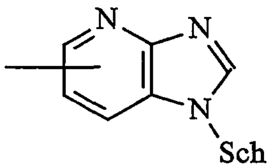
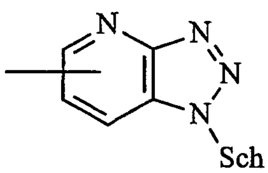
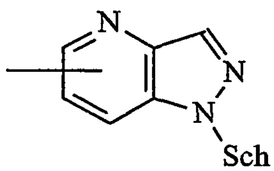

Abb. 2: Baugruppen basischer Polymere (Fortsetzung)

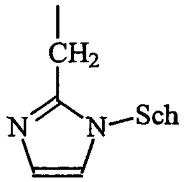
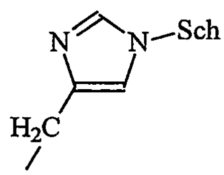
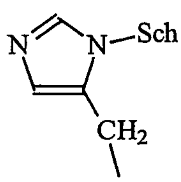
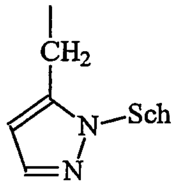

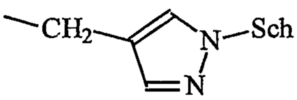
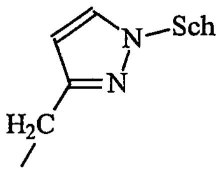
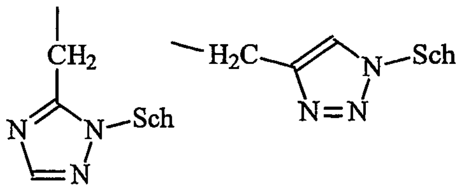

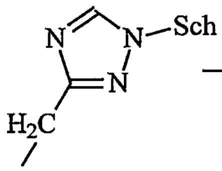
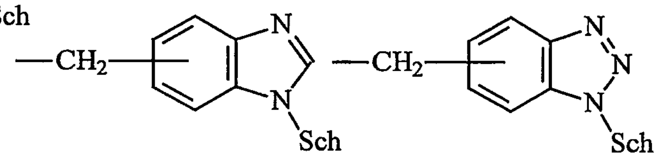
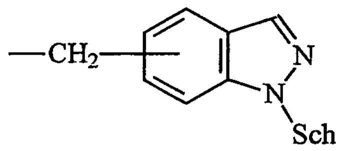

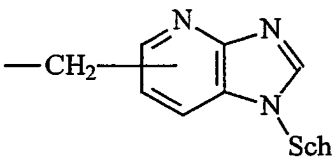
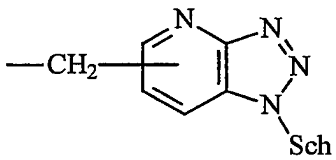
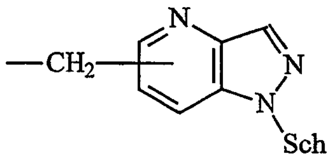

Abb. 2: Baugruppen basischer Polymere (Fortsetzung)

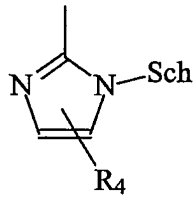 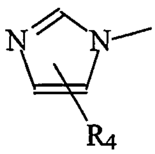 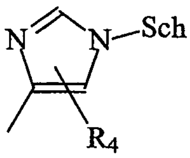 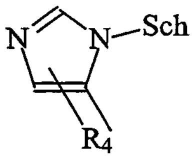

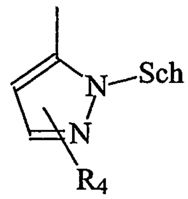 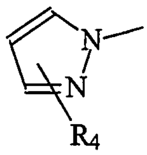 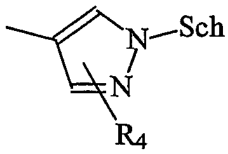 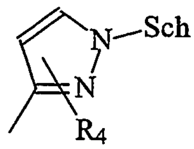

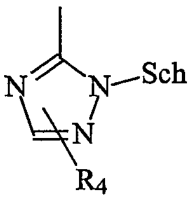 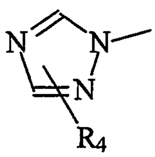 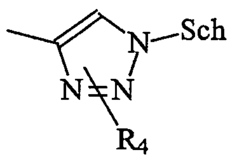 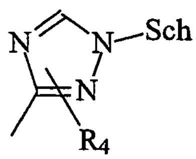 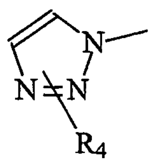

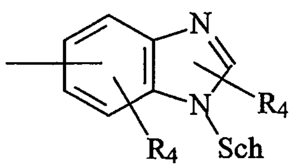 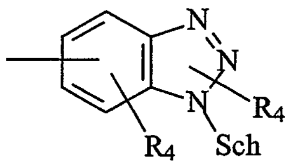 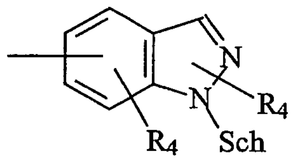

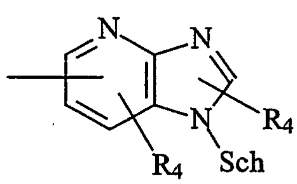 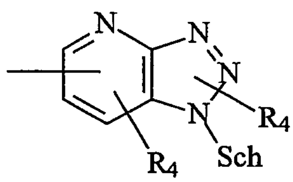 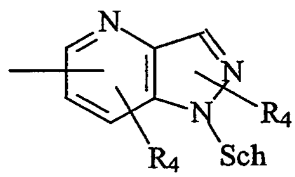

Sch=Schutzgruppe=Trityl (Triphenylmethyl) oder BOC, CBz, Dan, Tos, Tfa, Aca, FMOC, THP, 9-BBN

Abb. 2: Baugruppen basischer Polymere (Fortsetzung)

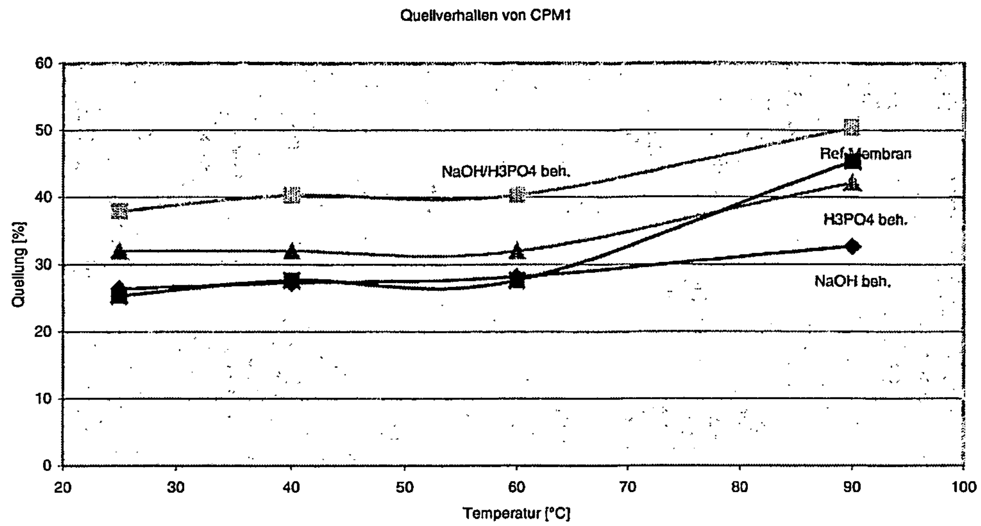


Abb. 3: Quellverhalten von CPM1 mit 12% $ZrOCl_2*8H_2O$

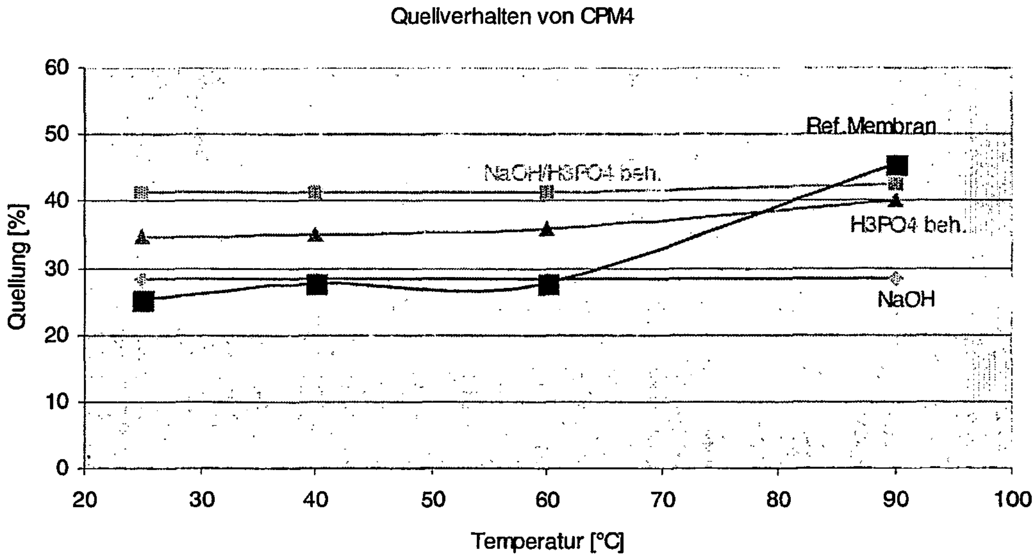


Abb. 4: Quellverhalten von CPM4 mit 22% $ZrOCl_2*8H_2O$

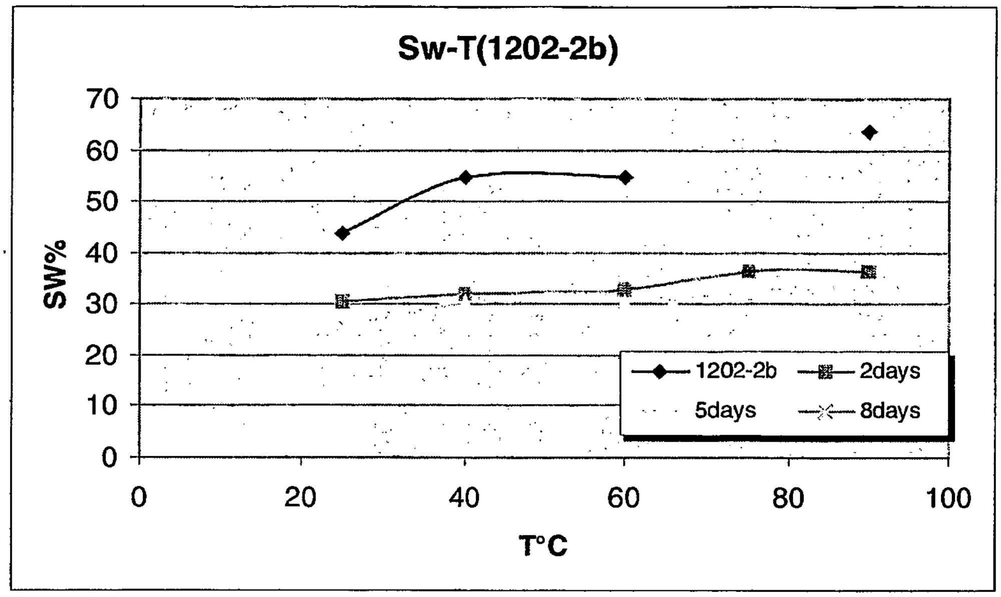


Abb. 5: Quellung (Wasseraufnahme) der Membran 1202 in Abhängigkeit von T ohne Nachbehandlung mit $ZrOCl_2$-$H_3PO_4$, nach dem 1. Zyklus der Nachbehandlung mit $ZrOCl_2$-$H_3PO_4$ („2 days"), nach dem 2. Zyklus der Nachbehandlung mit $ZrOCl_2$-$H_3PO_4$ („5 days"), und nach dem 3. Zyklus der Nachbehandlung mit $ZrOCl_2$-$H_3PO_4$ („8 days")

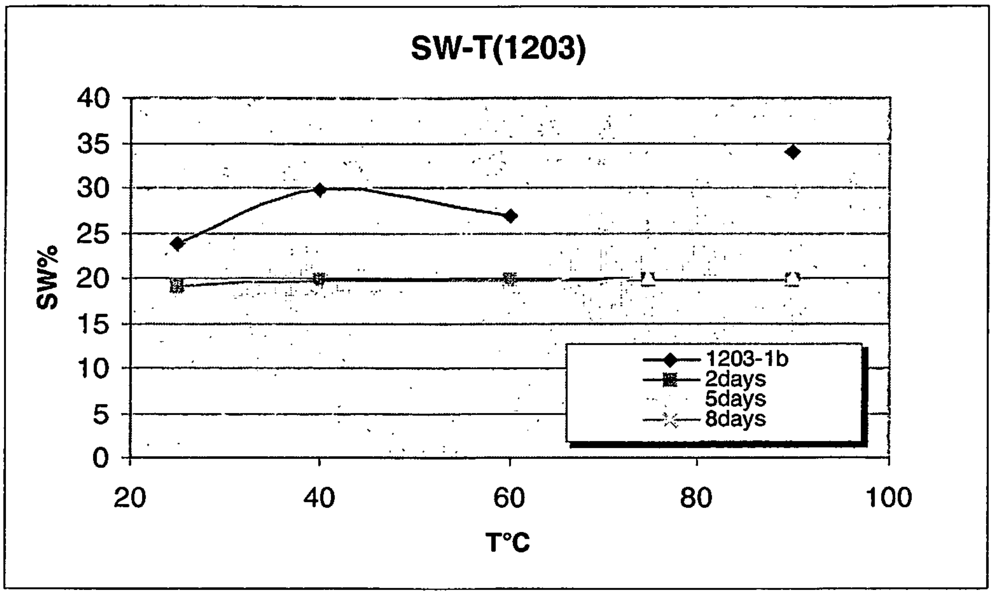


Abb. 6: Quellung (Wasseraufnahme) der Membran 1203 in Abhängigkeit von T ohne Nachbehandlung mit $ZrOCl_2$-$H_3PO_4$, nach dem 1. Zyklus der Nachbehandlung mit $ZrOCl_2$-$H_3PO_4$ („2 days"), nach dem 2. Zyklus der Nachbehandlung mit $ZrOCl_2$-$H_3PO_4$ („5 days"), und nach dem 3. Zyklus der Nachbehandlung mit $ZrOCl_2$-$H_3PO_4$ („8 days")

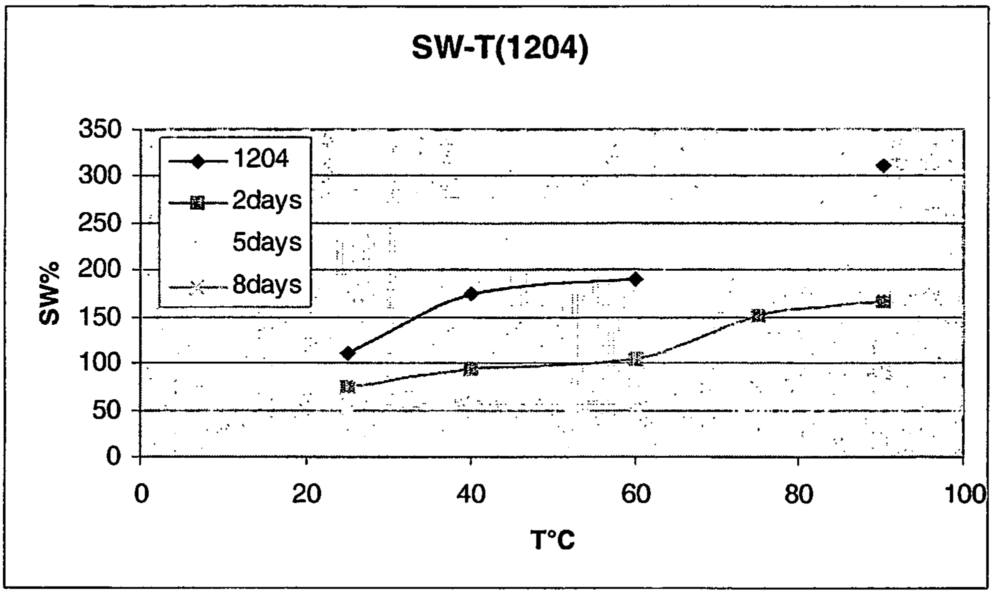


Abb. 7: Quellung (Wasseraufnahme) der Membran 1204 in Abhängigkeit von T ohne Nachbehandlung mit $ZrOCl_2$-$H_3PO_4$, nach dem 1. Zyklus der Nachbehandlung mit $ZrOCl_2$-$H_3PO_4$ („2 days“), nach dem 2. Zyklus der Nachbehandlung mit $ZrOCl_2$-$H_3PO_4$ („5 days“), und nach dem 3. Zyklus der Nachbehandlung mit $ZrOCl_2$-$H_3PO_4$ („8 days“)

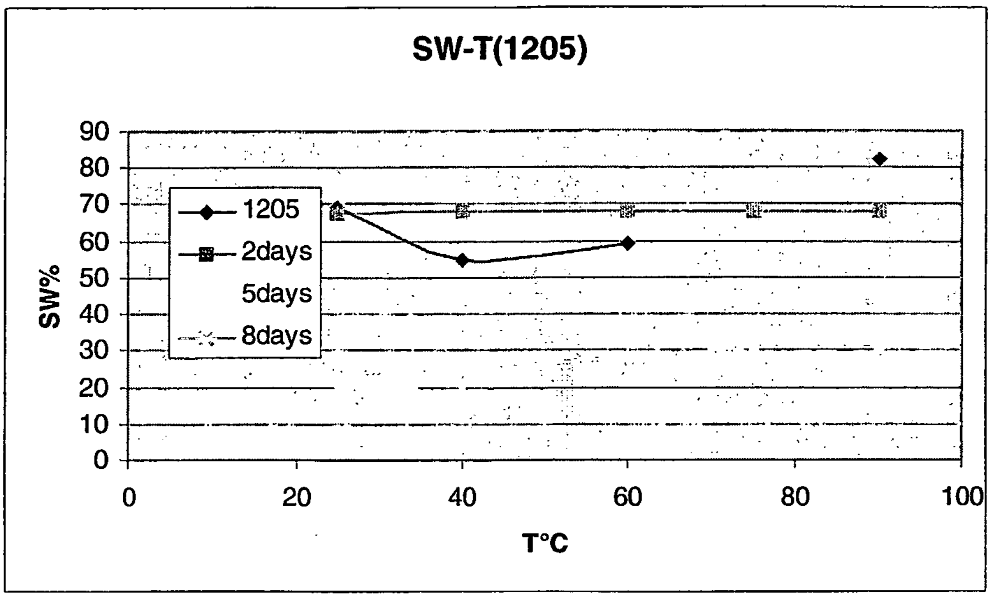


Abb. 8: Quellung (Wasseraufnahme) der Membran 1205 in Abhängigkeit von T ohne Nachbehandlung mit $ZrOCl_2$-$H_3PO_4$, nach dem 1. Zyklus der Nachbehandlung mit $ZrOCl_2$-$H_3PO_4$ („2 days"), nach dem 2. Zyklus der Nachbehandlung mit $ZrOCl_2$-$H_3PO_4$ („5 days"), und nach dem 3. Zyklus der Nachbehandlung mit $ZrOCl_2$-$H_3PO_4$ („8 days")

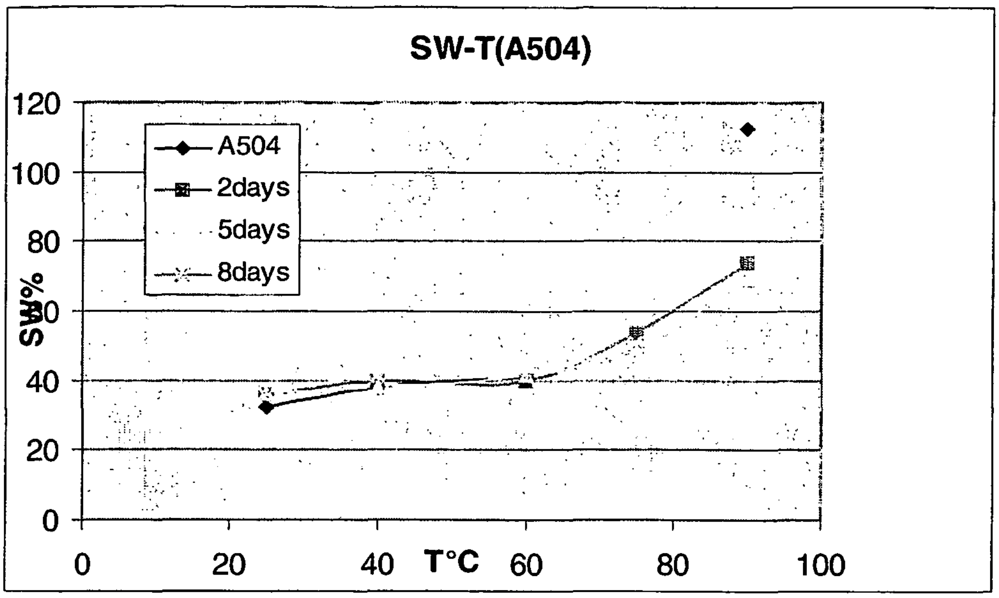


Abb. 9: Quellung (Wasseraufnahme) der Membran 504 in Abhängigkeit von T ohne Nachbehandlung mit $ZrOCl_2$-$H_3PO_4$, nach dem 1. Zyklus der Nachbehandlung mit $ZrOCl_2$-$H_3PO_4$ („2 days"), nach dem 2. Zyklus der Nachbehandlung mit $ZrOCl_2$-$H_3PO_4$ („5 days"), und nach dem 3. Zyklus der Nachbehandlung mit $ZrOCl_2$-$H_3PO_4$ („8 days")

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 6059943 A, O. J. Murphy, A. J. Cisar
- DE 10021106
- DE 10021104


### In der Beschreibung aufgeführte Nicht-Patentliteratur


- **C. YANG et al.** *Electrochem. Solid St. Lett.,* 2001, vol. 4 (4), A31-A34
- **S. M. J. ZAIDI ; S. D. MIKHAILENKO ; G. P. ROBERTSON ; M. D. GUIVER ; S. KALIAGUINE.** *J. Memb. Sci,* 2000, vol. 173, 17-34
- **E. WEDEKIND ; H. WILKE.** *Koll.-Z.,* 1924, vol. 34, 283, 9, 284
- **G.V.HEVESY ; K. KIMURA.** *Z.anorg.Ch.,* 1925, vol. 38, 774, 6
- *J. Am. Soc.,* 1925, vol. 47, 2540, 4
- **J.H. DE BOER.** *Z. Anorg. Ch.,* 1925, vol. 144, 190, 6
- **JOCHEN KERRES ; WEI CUI ; MARTIN JUNGINGER.** *J. Memb. Sci.,* 1998, vol. 139, 227-241
- **J. KERRES ; W. CUI ; S. REICHLE.** *J. Polym. Sci.: Part A: Polym. Chem.,* 1996, vol. 34, 2421-2438
- **J. KERRES ; A. ULLRICH ; M. HEIN.** *J. Polym. Sci.: Part A: Polym. Chem.,* 2001, vol. 39, 2874-2888
- **S. M. J. ZAIDI ; S. D. MIKHAILENKO ; G. P. ROBERTSON ; M. D. GUIVER ; S. KALIAGUINE.** *J. Memb. Sci.,* 2000, vol. 173, 17-34
- **HOLLEMAN, WIBERG.** Lehrbuch der Anorganischen Chemie. 1985, vol. 91.-100, 653
- **GMELIN.** Handbuch Syst. Nr. 42. 1958, 337